# EUROPEAN PATENT APPLICATION

(11) **EP 4 764 744 A1**
(43) Date of publication of application: **24.06.2026**
(21) Application number: 24307165.1
(22) Date of filing: 18.12.2024
(51) Int. Cl.: G05B 19/042

(54) **METHOD FOR PROVIDING CONFIGURATION DATA FOR AN INDUSTRIAL MACHINE**

(71) Applicant: SCHNEIDER ELECTRIC INDUSTRIES SAS, 92500 Rueil-Malmaison (FR)
(72) Inventor: UHL, André Richard Theo, 97295 Waldbrunn (DE); FURTH, Sebastian Florian, 97950 Großrinderfeld (DE); SCHOLZ, Martin Paul, 63110 Rodgau (DE)
(74) Representative: Manitz Finsterwald Patent- und Rechtsanwaltspartnerschaft mbB

(57) **Abstract**

The invention relates to a method for providing configuration data for an industrial machine,
wherein a configuration unit is executed,
wherein the configuration unit comprises a plurality of agents, each agent comprises an artificial intelligence, particularly a Language Model, or a Large Language Model, LLM,
wherein the configuration unit receives a configuration request,
wherein the configuration unit processes the configuration request by generating different tasks based on the configuration request,
wherein the different tasks are processed by the plurality of agents,
wherein at least one of the tasks for one of the agents is generated by another one of the agents and/or a task result of one of the agents is further processed by at least another one of the agents,
wherein the agents together produce a configuration output comprising configuration data for the industrial machine.

## Description

The present invention relates to a method for providing configuration data for an industrial machine, e.g. for controlling and/or simulating the industrial machine.

Industrial machines are used in a broad spectrum of industrial processes, e.g. in the Oil and Gas industry, for producing and packaging food or products, for sorting packages and the like. In an industrial machine, usually a plurality of actors and sensors work together to achieve a desired behavior of the industrial machine and therefore allow to produce the desired goods.

Configuring Programmable Logic Controllers (PLCs) for industrial machines in sectors like Oil and Gas can be highly complex due to the critical nature of operations, harsh environmental conditions, and stringent regulatory standards. The industrial machines and thus the configuration of e.g. the PLCs must be customized to handle intricate processes, such as drilling, extraction, and refining, which require precise real-time control and fail-safe mechanisms.

Due to the high numbers of actors and sensors and the possibly complex interactions of the actors and sensors, it can be a difficult and time-consuming process to develop the configuration data for the industrial machine. The configuration data can comprise a simulation of the industrial machine and/or can comprise source code and/or executable code and/or configuration parameters that can be used in the actual industrial machine.

It is an object of the present invention, to provide a method for providing configuration data that simplifies and accelerates the procedure required for producing the configuration data.

This object is solved by a method in accordance with claim 1.

According to the invention, a method for providing configuration data for (e.g. controlling and/or simulating) an industrial machine is proposed. According to the method of the invention a configuration unit is executed (particularly on at least an electronic computing device), wherein the configuration unit comprises a plurality of, preferably different and/or independent, agents, each agent comprises an artificial intelligence, particularly a language mode or a large language model, LLM. According to the invention, the configuration unit receives a configuration request, wherein the configuration unit processes the configuration request by generating, preferably a plurality of, different tasks based on the configuration request, wherein the different tasks are processed by the plurality of agents, wherein at least one of the tasks for one of the agents is generated by another one of the agents and/or a task result of one of the agents is further processed by at least another one of the agents. According to the invention, the agents together produce a configuration output comprising configuration data for the industrial machine.

In other words, the invention is based on the finding that the configuration data for the industrial machine can be produced by using a plurality of agents, which can all comprise an artificial intelligence, wherein the assignment of providing configuration data is divided into several tasks (by the agents themselves), wherein different tasks are handled by different agents. If one of the agents produces a result in response to a task, i.e. a task result, the task result is then further processed by another one of the agents. Thus, the agents collaborate to produce a configuration output which comprises configuration data for the industrial machine e.g. in the form of a simulation environment and/or source code and/or executable code, as detailed below. In an embodiment, the configuration data can comprise data that helps in configuring the industrial machine to perform a desired behavior.

In general, the request of producing configuration output is divided into tasks, wherein the tasks are distributed over different agents, so that each agent can provide a task result for a task it is specifically adapted for. Preferably, a plurality of tasks for one of the agents is generated by another one of the agents. Accordingly, a plurality of task results of one of the agents is processed further by another one of the agents.

The configuration output can thus be used for directly operating the industrial machine or to set up a simulation of the machine, as will be described later.

It has been found that the use of different agents, which can then be specialized for a respective task, can yield high quality configuration data for the industrial machine, preferably without human interference. In other words, the configuration data can be produced automatically, after receiving the configuration request. Particularly, the agents automatically process the received configuration request and/or the task results from other agents. The agents can be adapted to automatically generate new prompts (e.g. based on task results) for other agents until the configuration output is complete.

Simply put, different specialized agents are talking to each other to generate the configuration output.

To yield the configuration output, the configuration request can indicate the purpose and/or object of the operation of the industrial machine. The configuration request can be produced by a human operator and can e.g. be in the form of a text. Based on the configuration request, the tasks for the agents can then be adapted accordingly by the configuration unit.

As compared to the classical approach of developing the configuration data, the use of the inventive method drastically reduces the time and effort required.

In the following, further features are described in more detail.

Particularly, the configuration unit is executed on at least an electronic computing device. The agents can be executed on the same computing device or can be, at least partially, be distributed over several other computing devices. The computing device(s) can be arranged locally at the industrial machine but can also be edge devices and/or cloud devices. The agents comprise an artificial intelligence, e.g. a language model or a large language model. In other words, the agents can directly include the artificial intelligence and/or can be connected to an artificial intelligence and can make use of the artificial intelligence.

As has been mentioned above, the agents take on different tasks. Therefore, the agents can be configured differently to be able to resolve the different tasks. Each agent preferably is independent from other agents, i.e. after receiving a task, a respective agent works on the task without interference from another agent. In other words, the agents can each be a separate entity.

Due to the use of a language model (LM) or a large language model (LLM) the agents can accept human language as input. Preferably, the agents communicate with other agents also based on human language and/or other human-readable information (e.g. pictures, UML-diagrams, source code and the like).

Particularly, one agent can receive the configuration request and can then start to produce one or more tasks for one or more of the other agents. When the agents together have produced the configuration output, the configuration unit and e.g. the agent that received the configuration request, can then output the configuration output. With the configuration output at least one actor or sensor or function or a plurality of actors, sensors or functions of the industrial machine can be configured.

For generating the configuration output, at least one of the tasks for at least one of the agents is generated by another one of the agents. This can mean that one of the agents generates a task and then transmits the task to another agent which then processes the task. It is also possible that an agent which has finished processing a task and thereby has produced a task result transmits the task result to another agent, wherein the other agent - in turn - then further processes the task result (e.g. as a new task). Thereby, different agents can contribute different aspects to the configuration output, thereby improving the quality of the configuration output.

The agents can be connected to at least one other agent. Preferably, each agent is connected to all other agents, so that the agents can send tasks to other agents and/or can receive task results from other agents.

The configuration output can be the task result of one of the tasks, preferably of the last task processed by the agents. Alternatively, the configuration output can comprise the task results of a plurality of tasks, e.g. from different agents.

The Language Model can comprise an artificial intelligence, particularly a pre-trained artificial intelligence. The Language Model can be preferably a generative Language Model. The Language Model can be a publicly available Language Model. By employing a pre-trained and/or publicly available Language Model, it is advantageous that no training of the artificial intelligence needs to be performed for controlling the industrial machine. The Language Model provides problem solving capabilities and can e.g. also provide memory capabilities that allow storing the information on the industrial machine from the (later described) Context Information Library, wherein the Language Model then possesses all necessary information and skills to produce the commands to be executed by the industrial machine.

According to another embodiment the Language Model comprises a Large Language Model, particularly a publicly available Large Language Model, wherein the Large Language Model preferably is adapted for contextual understanding and/or comprises knowledge representation capabilities. A Large Language Model can be based on deep learning techniques and can internally have a large number of parameters, preferably more than 10 million, preferably more than 100 million, further preferably more than 1 billion.

It is emphasized that neither the Language Model, nor the Large Language Model have to be specifically trained for generating the configuration output for the industrial machine. Rather, an off-the-shelf Language Model or Large Language Model can be used. For example, Llama from Meta or AutoGPT can be employed, wherein AutoGPT uses GPT of the company *OpenAI* to autonomously complete tasks and/or requirements of a user. Since the general problem-solving capabilities of the Language Model or the Large Language Model are sufficiently high, no specific training for generating the configuration output for the industrial machine is necessary.

Particularly, the Language Model and/or the Large Language Model can have the following capabilities, wherein the Large Language Model preferably differs from the Language Model in the number of internal parameters (the internal parameters of the Large Language Model can be tenfold or 1 00-fold higher than those of the Language Model).

The following statements on the Language Model also apply on the Large Language Model.

The Language Model can have a contextual understanding. Language models excel at understanding context.

The Language Model can be adapted to process and/or comprehend complex information, such as details about mechanics, electrics, available functions to execute on the control unit, and the industrial machine's application and target requirements. The Language Model can therefore be adapted to generate plans that align with the specific requirements and/or constraints of the industrial machine.

The Language Model can have knowledge representation capabilities. The Language Model can be adapted to store and recall (vast amounts of) information, allowing the Language Model to access relevant data about the industrial machine, its components, and the desired outcomes. The Language Model can be adapted to leverage the knowledge in formulating plans and/or in generating source code that optimize performance and achieve the tasks and/or requirements received by other agents.

Source code may refer to human-readable instructions written in a programming language (such as Python, C++, Java, etc.) that define the logical operations, functionalities, or processes of a computer program, system, or software. It serves as the foundational input that is subsequently compiled or interpreted into executable machine code by a computer.

Furthermore, the Language Model can have sequence generation capabilities. The Language Model can be adapted to generate coherent and/or meaningful sequences of actions and/or instructions (i.e. commands to be executed by the industrial machine). E.g. given the information from the Context Information Library, which can comprise functions executable by the industrial machine, i.e. the context information, the Language Model can generate a plan that outlines a sequence of actions to control the industrial machine. The Language Model can for this purpose be adapted to consider dependencies, timing and/or specific requirements for each step of the sequence.

The Language Model can also comprise problem solving and/or optimization capabilities. In other words, the Language Model can comprise problem solving abilities to propose optimized plans. The Language Model can be adapted to analyze the context information and/or the given task and/or requirement to be fulfilled and can then suggest actions and/or strategies that e.g. maximize efficiency, minimize energy consumption, reduce downtime and/or achieve other desired objectives. The Language Model can be adapted to weigh different options and propose the most suitable course of action.

The Language Model can be configured to adapt to new situations and to learn from feedback, e.g. in iterative tasks.

Advantageous embodiments of the invention are disclosed in the description, the Figures and the dependent claims.

According to one embodiment, the configuration unit is connected to a context information library, which stores information on the industrial machine, particularly commands executable by the industrial machine, wherein the information of the context information library is accessed by at least one (or several or all) of the agents in order to process at least one of the tasks. In other words, the context information library can store so-called artifacts.

The context information library can for example comprise structural information on the industrial machine. For example, the industrial machine can be a Multicarrier, i.e. a linear motor system having a plurality of carriers being independently moved by the linear motors. For such a multicarrier system, the context information library may comprise information e.g. on straight or curved sections, the mechanical positions of stations, a list of functions executable by a control unit of the multicarrier, etc.

The information in the context information library on the industrial machine can reflect the state of the real industrial machine. Particularly, the information in the context information library can be based on measurements on the industrial machine and/or CAD data of the industrial machine.

Due to the connection to the context information library, the agents can access information on the industrial machine from the context information library. The information from the context information library can then be accessed when processing a task or can be included in a task. Thereby, the agents are aware of the working principles and the setup of the industrial machine and can therefore gain some kind of "understanding" of the industrial machine. For example, the agents can use the knowledge on the industrial machine to provide e.g. a sequence of commands to be executed by the industrial machine, i.e. source code and/or executable code for the industrial machine.

For example, the context information library stores a description of the actuator and/or sensor, preferably of all actuators and/or sensors of the industrial machine, and/or a description of the mechanics and/or electrics of the industrial machine, and/or a spatial description of at least parts of the industrial machine and/or a graphical representation of at least parts of the industrial machine and/or library functions that can be carried out by a control unit of the industrial machine.

The graphical representation of at least parts of the industrial machine can comprise a picture and/or CAD data of the industrial machine. The artificial intelligence of the agents can be used to translate the picture and/or CAD data into a textual description in human language which can then be further processed by the language model or large language model.

Preferably, the context information library is updated during the operation of the industrial machine or during the execution of a simulation of the industrial machine. The context information library can then reflect the current state of the industrial machine, e.g. by including current sensor values. The information comprised in the context information library can be provided to the agents after the context information library is updated. The information in the context information library can be periodically and/or repeatedly be provided to the agents.

In accordance with a further embodiment, the tasks for at least one of the agents which are generated by another one of the agents are transmitted to the at least one of the agents, at least partially, as prompts, wherein the prompts and/or the task results are in human language and/or human readable information. In other words, one agent generates a prompt or a plurality of prompts for another agent, the prompt being in human language. Thereby, the full potential of the artificial intelligence, particularly the language model or large language model can be used. Also, the results produced by one of the agents for a given task, i.e. the task result, can be outputted by the agent in human language and/or human-readable information. This allows for direct further processing of the task result by another agent.

Also, the initial configuration request can be in human language and/or human readable information. Particularly, the configuration request is produced by a human operator.

The exchange of information between the agents can be in electronic form, e.g. using a data bus or a data storage device, wherein the electronically exchanged information e.g. comprises text in human language. The different agents can be executed on the same electronic computing device or on different electronic computing devices. The exchanged information, i.e. the task and/or the task results, can e.g. be in English, German or any other human language. In other words, the exchanged information can preferably be understood by a human and/or is preferably semantically and syntactically correct. As an advantage, the information on the industrial machine already existing in human language can thus be taken over into the Context Information Library and does not have to be adapted.

According to a further embodiment, the prompts comprise pre-defined sections, wherein the pre-defined sections preferably comprise variables that are replaced (upon formulation of the task) with information from the context information library and/or one of the task results. The pre-defined sections (outside the variables) are preferably not amended during the operation of the configuration unit. Preferably, the pre-defined actions are specific to a certain agent. For example, the later mentioned profile of an agent can be set by a pre-defined section. The pre-defined section can be a part of a prompt that is provided in the configuration unit and/or the context information library to be used by the agents.

A variable can be a placeholder in a prompt or in a pre-defined section which can - during operation of the configuration unit - be replaced with the current information from the context information library to e.g. reflect the current state of the industrial machine or e.g. with parts of a current task result, for example with the newest generated source code. The replacement of the variable can be performed by the agent generating the prompt.

For example, a variable can be used to insert the already generated source code and to task an agent with supplementing and/or connecting the source code.

According to an embodiment, prompts for the same agent are repeated, wherein in a new repetition of the prompt the variable is updated. In other words, the same kind of task can be assigned to the same agent iteratively, however, in each new iteration of the task, the prompt of the task comprises an updated section, wherein the updated section is generated e.g. by updating the variable. Thereby, e.g. source code can be created iteratively, as existing code can be injected in the next round of the prompt.

According to a further embodiment, each agent is set up based on a different profile, the profile specifying the behavior of the respective agent. The profile can be in human language and/or human-readable information, e.g. specifying that one agent is adapted for requirements specification and another agent is adapted for coding source code. The profile can be included in a prompt. Thereby, different behavior of different agents can be achieved. The different behavior of the different agents allows the collaborative work of the agents on the configuration request.

According to a further embodiment, at least one agent is a Requirements Parser Agent adapted for requirements definition, at least one agent is a Planning Agent adapted for planning purposes and at least one agent is a Code Agent adapted for coding. Preferably, each of the agents can access the context information library, i.e. the artifacts. In this embodiment, three levels of agents, i.e. three different profiles of agents are used, however fewer or more agents are also possible.

The Requirements Parser Agent may be specialized in extracting, refining and structuring software development specifications. The Requirements Parser Agent may be adapted to parse raw user input, and to ensure that key technical aspects such as environment objectives, observation/action spaces, reward structures, rendering details, and/or dependencies are captured and validated.

The Planning Agent may be adapted to convert design specifications into plans for coding. The Planning Agent may be adapted to generate environments for controlling the industrial machine and/or Gym-like (or similar) environments adhering to OpenAI Gym's API standards, and may be further adapted to ensure best coding practices, proper use of dependencies and/or documentation using comments and/or docstrings.

OpenAI Gym is an open-source toolkit designed to facilitate the development and evaluation of reinforcement learning (RL) algorithms. It provides a standardized interface for a diverse array of simulated environments, ranging from classic control tasks and board games to complex robotics simulations and Atari video games. Gym offers a wide selection of environments that serve as testbeds for RL algorithms. These include simple tasks like the CartPole balancing problem, as well as more intricate simulations involving robotic control and strategy games.

The Code Agent may be adapted to generate source code. The Code Agent may be adapted to convert design specifications into fully functional source code, e.g. Phyton source code. The Code Agent may be capable of writing plans for coding and may also be capable of actual coding. The Code Agent may generate source code for controlling the industrial machine and/or Gym-like environments adhering to OpenAI Gym's API standard, ensuring best coding practices, proper use of dependencies and/or documentation through comments and/or docstrings.

As can be seen, a configuration request can be handled by the above-mentioned three different agents. For example, the configuration request may be received by the Requirements Parser Agent which can be tasked to extract design specifications from the configuration request. The Planning Agent can then receive a further task from the Requirements Parser Agent and can be tasked to produce a plan for coding from the design specification. The Planning Agent can then generate a further task for the Code Agent which can then produce source code based on the design specification and the plan for coding. The source code can be directly for the industrial machine and/or for a Gym-like environment, thus allowing a simulation of the industrial machine.

The above-described embodiment uses three different agents. However, also a further refined embodiment with additional further agents as described below, can be used.

In accordance with a further embodiment, the configuration unit further comprises one or more of the following agents:
- a Structured Requirements Agent adapted for transforming natural language specification into (detailed, structured, and/or validated) software development requirements,
- an Environment Agent adapted for software architecture definition,
- a Dependencies Agent adapted for determining required software libraries and packages,
- a Use Cases Agent adapted for transforming structured requirements into software development use cases, and
- a Repair Agent adapted for correcting errors in source code.

The Structured Requirements Agent can be further adapted to interpret and organize user-provided specifications into structured formats that align with best practices in industrial automation, cyber security and/or functional safety. For example, the Structured Requirements Agent can be adapted to ensure that each requirement adheres to standards like ISO 9001, IEC 61511, IEC 62443. Thereby, the Structured Requirements Agent can ensure traceability, risk management and or lifecycle management. The Structured Requirements Agent can be adapted to provide a structured format that includes unique IDs, risk assessments, safety levels, cyber security levels, and/or compliance tracking. The Structured Requirements Agent can be adapted to ensure that in the task result each requirement contains details such as inputs, outputs, dependencies, acceptance criteria and/or status. The Structured Requirements Agent can be adapted to infer missing details based on industry standards and practices, where necessary. The task result of the Structured Requirements Agent preferably follows a structured schema that e.g. captures critical aspects such as risk level, security integrity level (SIL), lifecycle stage, and/or compliance needs.

The Structured Requirements Agent can receive its task from the Requirements Parser Agent. The task for the Structured Requirements Agent can be the task result from the Requirements Parser Agent. Generally, in an embodiment the configuration unit can comprise two agents for parsing of requirements from the configuration request. Using these "two levels" of requirements parsing can yield a better result of the configuration output.

The Environment Agent can be further adapted to design the architecture of Gym-like environments based on structured requirements. Particularly, the Environment Agent can be adapted to define the classes, methods, and/or interactions. The Environment Agent can be adapted to ensure that components such as state representations, action spaces, reward mechanisms, and/or termination conditions are articulated in the task result of the Environment Agent. The Environment Agent can be further adapted to specify the entire system architecture, e.g. by means of UML Diagrams, of a source code for the industrial machine and/or a simulation environment.

The Environment Agent can be adapted to design the architecture of Gym-like environments based on structured requirements. Particularly, the Environment Agent can be adapted to define the classes, methods, and/or interactions. The Environment Agent can be further adapted to ensure that components such as state representations, action spaces, reward mechanisms and/or termination conditions are articulated.

The Dependencies Agent can be adapted to analyze the design of control program for the industrial machine and/or a custom Gym environment and/or to determine the required packages, e.g. PyPI packages. The Dependencies Agent can be adapted to gather dependencies based on the specifications and/or to ensure that all necessary libraries and frameworks are included to run the environment, a reinforcement learning code, and/or supporting components.

The Use Cases Agent can be adapted for transforming structured requirements into software development use cases. The Use Cases Agent can be adapted to interpret and/or organize software requirement specifications into software use cases that preferably align with best practices in the Oil and Gas industry, industrial automation, cybersecurity, and/or functional safety. The Use Cases Agent can be adapted to provide a structured format that includes for each use case e.g. a unique use case ID, the requirement id to which it belongs, a brief use case description, and/or steps from user perspective how to execute the use case.

The Repair Agent can be adapted to run source code, particularly to run Python code, to detect issues that occur during execution of the source code, and/or to attempt to repair the source code.

In order for the specific agents to take up their specific role, the prompt for the respective agent can comprise one of the below-mentioned pre-defined sections.

For the Requirements Parser Agent:
You are an expert Requirements Parser Agent specializing in extracting, refining, and structuring software development specifications. Your task is to parse raw user input, ensuring key technical aspects such as environment objectives, observation/action spaces, reward structures, rendering details, and dependencies are captured and validated.

For the Planning Agent:
You are an expert Planning Agent. Your role is to convert design specifications into plans for coding. You generate Gym-like environments adhering to OpenAI Gym's API standards, ensuring best coding practices, proper use of dependencies, and thorough documentation through comments and docstrings.

In case it is aimed for an environment to directly control the industrial machine, the pre-defined section for the Planning Agent can be:
You are an expert Planning Agent. Your role is to convert design specifications into plans for coding. You generate an environments for a control PLC, ensuring best coding practices, proper use of dependencies, and thorough documentation through comments and docstrings.

For the Code Agent:
You are an expert Source Code Generator Agent. Your role is to convert design specifications into fully functional Python source code. You are perfectly capable of writing plans for coding and actual coding. You generate Gym-like environments adhering to OpenAI Gym's API standards, ensuring best coding practices, proper use of dependencies, and thorough documentation through comments and docstrings.

In case it is aimed for an environment to directly control the industrial machine, the pre-defined section for the Code Agent can be:
You are an expert Source Code Generator Agent. Your role is to convert design specifications into fully functional Python source code. You are perfectly capable of writing plans for coding and actual coding. You generate environments for a control PLC, ensuring best coding practices, proper use of dependencies, and thorough documentation through comments and docstrings.

For the Structured Requirements Agent:
You are an expert Structured Requirements Engineering Agent specializing in transforming natural language specifications into detailed, structured, and validated software development requirements. Your task is to interpret and organize user-provided specifications into structured formats that align with best practices in industrial automation, cybersecurity, and functional safety. You ensure that each requirement adheres to standards like ISO 9001, IEC 61511, and IEC 62443, ensuring traceability, risk management, and lifecycle management. You will provide a structured format that includes unique IDs, risk assessments, safety levels, cybersecurity levels, and compliance tracking.

In your role, you must also ensure that each requirement contains details such as inputs, outputs, dependencies, acceptance criteria, and status. Where necessary, infer missing details based on industry standards and practices.

Your output should follow a structured schema that captures critical aspects such as risk level, safety integrity level (SIL), lifecycle stage, and compliance needs.

For the Environment Agent:
You are an expert Environment Design Agent. Your role is to design the architecture of Gym-like environments based on structured requirements. You define the classes, methods, and interactions, ensuring that components such as state representations, action spaces, reward mechanisms, and termination conditions are clearly articulated. Optionally, you may create UML diagrams or flowcharts to visualize the system structure.

In case it is aimed for an environment to directly control the industrial machine, the pre-defined section for the Environment Agent can be:
You are an expert Environment Design Agent. Your role is to design the architecture of environments for control PLCs. You define the classes, methods, and interactions, ensuring that components such as state representations, action spaces, reward mechanisms, and termination conditions are clearly articulated. Optionally, you may create UML diagrams or flowcharts to visualize the system structure.

For the Dependencies Agent:
You are a highly skilled Dependencies Agent. Your role is to analyze the detailed design of a custom Gym environment and determine all the required PyPI packages. You gather dependencies based on the specifications and ensure all necessary libraries and frameworks are included to run the environment, reinforcement learning code, and any supporting components.

In case it is aimed for an environment to directly control the industrial machine, the pre-defined section for the Dependencies Agent can be:
You are a highly skilled Dependencies Agent. Your role is to analyze the detailed design of a custom environment for a control PLC and determine all the required PyPI packages. You gather dependencies based on the specifications and ensure all necessary libraries and frameworks are included to run the environment, reinforcement learning code, and any supporting components.

For the Use Cases Agent:
You are an expert Use Case Engineering Agent specialized in transforming structured requirements into software development use cases. Your task is to interpret and organize software requirement specifications into software use cases that align with best practices in industrial automation, cybersecurity, and functional safety. You will provide a structured format that includes for each use case a unique use case ID, the requirement id to which it belongs, a brief use case description, steps from user perspective how to execute the use case.

In your role, you must also ensure that each use case contains details such as pre-condition, result and acceptance criteria. Where necessary, infer missing details based on industry standards and practices.

Make sure that there are 1 or more use cases for each structured requirement. Think about other variations of the use cases that could be derived from the structured requirements.

Make sure that each use case has a unique ID, take into account already defined use cases and increment the ID accordingly.

The output must only contain the new use cases that you have created.

Your output should follow a structured schema.

For the Repair Agent:
You are a highly skilled software engineer and bug fixer. Your role is to run Python code, detect any issues that occur during execution, and attempt to repair the code. You analyze error messages, understand the problem, and make intelligent fixes to ensure the code runs correctly.

It is to be understood that the examples given herein aim more at providing a gym-like environment. Based on the above given examples, also environments for control PLCs (e.g. in the industrial machine) can be generated by slightly amended tasks, in which e.g. the term "gym-like" is replaced in terms of content with the term "for control PLCs" (if e.g. IEC program code is desired) or with "firmware for control PLCs" (in case a full flexible PLC type should be programmed with e.g. a new firmware).

According to an embodiment, each prompt for one of the agents comprises a desired output for the task result and at least one command indicating how the task result should be achieved. Preferably, as mentioned before, the prompt is in human language. Further preferably, the desired output and the command indicating how to be achieved is different for each of the different agents.

For example, the prompts for different agents can for example comprise the following sections, wherein the parts in "{" and "}" are variables that can be replaced e.g. with information from the context information library during runtime/operation of the configuration unit.

For the Requirements Parser Agent:
Below are the raw requirements provided by the user:
{{file:initial_requirements.txt}}

Your task is to parse these requirements and extract key specifications, including environment objectives, observation and action spaces, reward structures, rendering details, dependencies, and any constraints. If certain details are missing, you must infer or augment them based on standard practices in software development.

Please reply with the refined requirements.

For the Structured Requirements Agent:
You are an expert Use Case Engineering Agent specialized in transforming structured requirements into software development use cases. Your task is to interpret and organize software requirement specifications into software use cases that align with best practices in industrial automation, cybersecurity, and functional safety. You will provide a structured format that includes for each use case a unique use case ID, the requirement id to which it belongs, a brief use case description, steps from user perspective how to execute the use case.

In your role, you must also ensure that each use case contains details such as pre-condition, result and acceptance criteria. Where necessary, infer missing details based on industry standards and practices.

Make sure that there are 1 or more use cases for each structured requirement. Think about other variations of the use cases that could be derived from the structured requirements.

Make sure that each use case has a unique ID, take into account already defined use cases and increment the ID accordingly.

The output must only contain the new use cases that you have created.

Your output should follow a structured schema.

For the Environment Agent:
Here are the structured requirements:
{{file:structured_requirements.json}}

Here are the use cases:

{{file:usecases.json}}

Here is the UML class diagram:
{{file:uml_class_diagram.md}}

Use only the classes from the class diagram.

Based on these requirements and use cases, design the architecture of the Gymnasium-like environment. Include the following in your design:
- **Classes and Methods**: Outline each class and its methods, with emphasis on interactions between classes.
- "Sequence of Interactions**: Show the sequence of interactions for major work-flows, such as state initialization, action execution, reward evaluation, and environment reset.
- "Message Flow**: Include detailed message flows with method calls, parameters, and return values where applicable.
- **Dependencies and Constraints**: Capture dependencies and constraints that affect interactions between classes.

**Important**: Do not use OpenAI Gymnasium as it is outdated.

Where methods are specified, include parameters, return values, and visibility.

Here are additional guidelines on writing Gymnasium environments to help you with this task:
{{relevant_knowledge}}

Please generate a detailed and complete UML sequence diagram. Use Mermaid's markdown inspired language. Use Mermaid's sequenceDiagram directive.

Provide your answer in a preformatted text block surrounded by <pre> and </pre>. Do not include any extra information beyond the code. Only return a single block.

For the Planning Agent:
Here are the requirements:
{{file:structured_requirements.json}}

Here is the list use cases which are derived from the requirements
{{file:usecases.json}}

Here is is the UML class diagram:
{{file:uml_class_diagram.md}}

Here is the UML state diagram:
{{file:uml_state_diagram.md}}

Here is the UML sequence diagram:
{{file:uml_sequence_diagram.md}}

Here is the UML object diagram:
{{file:uml_object_diagram.md}}

Here is the UML activity diagram:
{{file:uml_activity_diagram.md}}

Here is the UML package diagram:
{{file:uml_package_diagram.md}}

Here are the dependencies:
{{file:requirements.txt}}

Here is some relevant knowledge:
{{relevant_knowledge}}

Based on these uses cases and specifications, generate a task list for developing Python source code for the gymnasium environment.

Make sure that there is at least one task for each use case.

Make sure your response is complete as possible and contains as many tasks as necessary.

Make sure to not make up tasks that are unnecessary. If needed, there can be more then one task for a single use case.

For the Dependencies Agent:
Here are the structured requirements for the Gym environment:
{{file:structured_requirements.json}}

Based on this design, provide a list of all necessary PyPI packages that would be required to implement the environment and run it with reinforcement learning algorithms like those used in RLlib. Consider dependencies for:
- Gym environment development
- Reinforcement learning frameworks (such as RLlib)
- Any specified rendering, observation, or action space libraries
- Additional tools or libraries mentioned in the design
- Since OpenAI gym has been outdated, use gymnasium instead.

Please provide the list of PyPI packages as a comma separated list.

Provide your answer in a preformatted text block surrounded by <pre> and </pre>. Do not include any extra information beyond your response. Only return a single block.

For the Use Cases Agent:
Here is the list use cases which are derived from the requirements
{{file:usecases.json}}

Here are the uses cases so far:
requirements=[]

Below is the refined requirement:
{{file:structured_requirements.json}}

Your task is to convert this structured requirement into a use case format.

The output should be formatted as a JSON instance that conforms to the JSON schema below.

For the Coding Agent:
Here are the design specifications from the Environment Design Agent:
{detailed_design}

Here are the dependencies:
{file_requirements_txt}

Here is some relevant knowledge:
{relevant_knowledge}

Based on these specifications, generate Python source code for the gymnasium environment. Ensure the following:
- Implement the required methods according to the gymnasium API.
- Use any specified libraries and dependencies in the code.
- Follow best practices, ensuring clear structure and readability.
- Include docstrings and comments to explain key parts of the code.
- Always implement everything. Do not put placeholders like "pass" or "To be implemented" in the code.
- Do not hesitate to write a lot of code. The more, the better.
- Do not use OpenAI gym as it is outdated. Use gymnasium instead.

Please provide the Python source code as a whole. Provide source code that is detailed. Do not take any shortcuts.

Provide your answer in a preformatted text block surrounded by <pre> and </pre>. Do not include any extra information beyond the code. Only return a single block.

Particularly for the Coding Agent, different prompts can be used, wherein the source code is not generated at once but different parts of the source code are generated by the Coding Agent one after the other, i.e. iteratively. For example, the following prompt can be used to first generate a header:
Here are the design specifications for the environment:

{{file:detailed_design.txt}}

Here are the dependencies:
{{file:requirements.txt}}

Here is some relevant knowledge:
{{relevant_knowledge}}

Based on these specifications, please write the header of a python sourcecode file. Add a license at the beginning. The company is Schneider Electric. Then add the imports. These are the imports:
{ {import_names}}

After the header has been generated, a class definition can be generated by the Coding Agent using the following prompt:
Here is the an UML class diagram:
{{file:uml_class_diagram.md}}

Here is an UML state diagram:
{{file:uml_state diagram.md}}

Here is an UML sequence diagram:
{{file:uml_sequence_diagram.md}}

Here are the dependencies:
{{file:requirements.txt}}

Here is some relevant knowledge:
{{relevant_knowledge}}

Here is the code we have so far:
{{current_code}}

Based on these specifications, please write the beginning of a class definition. Write only the definition and the variables. Do not write the methods. Do not write the init method. We will do this later.

The class name is {{class_name}}' .

The variables are '{{variables}}'.

After the header and the class definition has been generated, the remaining source code can be produced.

The Repair Agent can receive the following prompt:
Here is the Python code that failed to execute:
{{code}}

Please repair the method {{method_name}} in the class {{class_name}} (can be 'global' if the method is not part of a class) following these instructions:
{{repair_instructions}}

Answer only with the repaired method. Do not add more. Use the lowest level of indendation, as indendation will be handled automatically later. Make sure to include the method declaration including the def keyword, the method name and the parameters in parentheses.

The above-mentioned example leads to a repair of a method.

In accordance with a further embodiment, an order of the agents is defined as an Agent Sequence, wherein each agent, preferably only, communicate with the agents further along the Agent Sequence. For example, the second agent in the Agent Sequence can (only) communicate with the third, fourth, fifth, etc. agent in the sequence. The last agent may communicate with the first agent as the last agent can e.g. produce (at least parts) of the configuration output. An example for the Agent Sequence can be:
- 1: Requirements Agent
- 2: Structured Requirements Agent
- 3: Use Cases Agent
- 4: Environment Agent
- 5: Dependencies Agent
- 6: Planning Agent
- 7: Coding Agent
- 8: Repair Agent.

In accordance with a further embodiment, the configuration unit comprises a Base Agent, adapted for receiving the configuration request and outputting the configuration output. The Base Agent can be the first agent in the Agent Sequence or can be an additional agent. The Base Agent can access the context information library and can transmit information from the context information library to other agents. The Base Agent can also be adapted to trigger other agents to begin processing the configuration request. For this purpose, the Base Agent can send a prompt to one of the other agents.

Similar to the other agents, the Base Agent can be independent from the other agents. Also, the Base Agent can comprise an artificial intelligence, particularly a language model or a large language model.

According to a further embodiment, the configuration output, i.e. the configuration data, comprises source code and/or executable code for the industrial machine, wherein the source code or executable code for the industrial machine can be configured to control a process carried out by the industrial machine. In other words, the configuration output yields code that can be transmitted onto the industrial machine and can then be executed by the industrial machine, wherein the source code or executable code affects the operation and/or behavior of the industrial machine. The executable code can be IEC code that can then be executed by a firmware of the industrial machine, particularly by a firmware of a control unit of the industrial machine. Additionally or alternatively, the executable code can also be adapted to form a part of the firmware of the industrial machine (or at least one of the PLCs of the industrial machine). Thereby, it is possible to generate source code and/or executable code to allow for full flexible programming of PLCs of the industrial machine. In such a case, the configuration data could also be termed "programmable configuration data" or "program configuration data".

The executable code can be generated by one of the agents from source code generated in one of the tasks. Also, the executable code can be produced e.g. by a (separate) compiler which compiles the source code generated by the agents. The industrial machine or the control unit of the industrial machine can comprise one or more PLCs (Programmable Logic Controllers) wherein executable code for the PLCs, and e.g. control parameters for the PLCs, can be included in the configuration output.

In accordance with a further embodiment, the configuration output, i.e. the configuration data, comprises a simulation environment for simulating the industrial machine. The simulation environment can be executed to simulate the behavior of the industrial machine. The simulation can take part on the computing device of the configuration unit and/or on another computing device.

Particularly, the simulation of the industrial machine is used to conduct reinforcement learning, particularly for optimizing control parameters of the industrial machine. After the reinforcement learning, the control of the industrial machine can be even further optimized.

The simulation environment comprised in the configuration output can preferably comprise source code and/or executable code which can both be used for the simulation environment and for controlling the real industrial machine. In other words, at least parts of the same source code and/or executable code can be used (first) in the simulation environment and then (later) in the industrial machine. Thereby, the source code and/or executable code that is later used in the industrial machine can first be tested and/or optimized in the simulation environment.

The invention further relates to a computer program comprising instructions which, when the program is executed by a computer, cause the computer to carry out the method as described above.

The invention also relates to a system including a configuration unit as well as a simulation environment and/or an industrial machine. The simulation environment can be separate to the configuration unit or can be included in the configuration unit. The industrial machine can comprise at least one actor and/or one sensor. Preferably, the industrial machine comprises a plurality of actors and sensors as well as a plurality of PLCs. The industrial machine can preferably be adapted for handling boxes, packages and the like. Alternatively or additionally, the industrial machine may comprise a multicarrier having a plurality of linear motors and a plurality of carriers that can be independently moved by the linear motors.

The disclosure comprised herein with respect to the inventive method also applies to the inventive computer program and to the system of the invention. This particularly applies to the embodiments disclosed with respect to the inventive method. It is further noted that the features disclosed herein can all be combined with each other if the contrary is not explicitly stated.

In the following, an exemplary course of execution of the method described above is elaborated. It is noted that some of the given prompts and task results are abbreviated for better legibility.

Initially, the configuration unit can receive a configuration request from a human user. The configuration request can have the following form:
Smart Infeed Simulation for Reinforcement Learning in Continuous Action Space
The Intelligent Infeed application is intended for use in production machines, primarily in the packaging sector.

The application automatically calculates and controls the corresponding accelerations and speeds of the products.

Task:
- Write an gymnasium compatible environment.
- The smart infeed is a chain of n (> 3, default 5) conveyor belts. The first belt is the infeed belt, the last belt is the outfeed belt. The other correction belts are in between.
- The conveyor belts are moving from left to right and are aligned as a group on a line from left to right.
- The infeed belt is on the left, the outfeed belt is on the right.
- The infeed belt has the color red, the outfeed belt has the color green.
- The other correction correction belts have the color blue.
- The conveyor belts are right next to each other.
- There are certain number of fingers/baffles on the outfeed belts, and products are expected to reach exactly at the center of 2 fingers/baffles.
- The infeed belt and the outfeed belt are moving at a constant speed, where the infeed belt is slightly slower than the outfeed belt.
- When there is no product on correction belts, they will move at a constant speed as the outfeed belt.
- When a product reaches a correction belt, a sensor can detect product's current position and compute the distance to product's expected position.
- The distance information gather by sensor is then used by agent to generate motion profile for the correction belt.
- The agent can control with its actions the speed of the correction belts in between the infeed and outfeed belt.
- When correction belts receive the action from agent and start to correct the position for products, it will start and end with the same speed as the outfeed belt.
- If there are multiple products over the same correction belt, only when the first product leaves the belt can the system start the correction for second product.
- 5th-order polynomial is preferred as the motion profile for these correction belts, with x-axis being the displacement of outfeed belt, and y-axis being the displacement of correction belts.
- When a product is transferred from one belt to another, both belts should have the same speed as the outfeed belt, so that the system is synchronized.
- The goal is to minimize the error between the product's actual position and the expected position on the outfeed belt.
- The objective is to process as many products as possible within a given time frame.
- There is a limited range for the distance that correction belts can adjust a product's position. Within this range, a forward correction is always preferred when possible since it can maximize the throughput.
- Correction belts have maximum and minimum velocity and acceleration values. Make sure the velocity and acceleration are within these range during correction.
- The simulation is 2d. We will see the belts from the side.
- Do not use box2d-py. The environment should be simple enough to be implemented without it.
- Boxes are created at random intervals on the infeed belt.
- Make sure to create boxes with appropriate speed so that there is always position/finger for the product on outfeed belt.
- Products should be spaced appropriately on the infeed belt to avoid collisions and ensure they reach the outfeed belt in time.
- The boxes are moving with the speed of the belt.
- The boxes should move from the infeed belt to the outfeed belt.
- Every time a box gets generated it gets a random color.
- When the boxes leave the outfeed belt, they are removed.
- Include a simple PyGame renderer. After each rendering step, the renderer should wait for a short time.
- In the main block include code that would run the environment with random actions and the renderer.

The configuration request can then be included into a prompt for the Requirements Agent (e.g. by the Base Agent). Particularly, the configuration request can be inserted into a variable and can be completed with pre-defined sections of the prompt, thus yielding the following prompt for the Requirements Agent:
Below are the raw requirements provided by the user:
Smart Infeed Simulation for Reinforcement Learning in Continuous Action Space
The Intelligent Infeed application is intended for use in production machines, primarily in the packaging sector.

The application automatically calculates and controls the corresponding accelerations and speeds of the products.

Task:
- Write an gymnasium compatible environment.
- The smart infeed is a chain of n (> 3, default 5) conveyor belts. The first belt is the infeed belt, the last belt is the outfeed belt. The other correction belts are in between.
- The conveyor belts are moving from left to right and are aligned as a group on a line from left to right.
- The infeed belt is on the left, the outfeed belt is on the right.
- The infeed belt has the color red, the outfeed belt has the color green.
- The other correction correction belts have the color blue.
- The conveyor belts are right next to each other.
- There are certain number of fingers/baffles on the outfeed belts, and products are expected to reach exactly at the center of 2 fingers/baffles.
- The infeed belt and the outfeed belt are moving at a constant speed, where the infeed belt is slightly slower than the outfeed belt.
- When there is no product on correction belts, they will move at a constant speed as the outfeed belt.
- When a product reaches a correction belt, a sensor can detect product's current position and compute the distance to product's expected position.
- The distance information gather by sensor is then used by agent to generate motion profile for the correction belt.
- The agent can control with its actions the speed of the correction belts in between the infeed and outfeed belt.
- When correction belts receive the action from agent and start to correct the position for products, it will start and end with the same speed as the outfeed belt.
- If there are multiple products over the same correction belt, only when the first product leaves the belt can the system start the correction for second product.
- 5th-order polynomial is preferred as the motion profile for these correction belts, with x-axis being the displacement of outfeed belt, and y-axis being the displacement of correction belts.
- When a product is transferred from one belt to another, both belts should have the same speed as the outfeed belt, so that the system is synchronized.
- The goal is to minimize the error between the product's actual position and the expected position on the outfeed belt.
- The objective is to process as many products as possible within a given time frame.
- There is a limited range for the distance that correction belts can adjust a product's position. Within this range, a forward correction is always preferred when possible since it can maximize the throughput.
- Correction belts have maximum and minimum velocity and acceleration values. Make sure the velocity and acceleration are within these range during correction.
- The simulation is 2d. We will see the belts from the side.
- Do not use box2d-py. The environment should be simple enough to be implemented without it.
- Boxes are created at random intervals on the infeed belt.
- Make sure to create boxes with appropriate speed so that there is always position/finger for the product on outfeed belt.
- Products should be spaced appropriately on the infeed belt to avoid collisions and ensure they reach the outfeed belt in time.
- The boxes are moving with the speed of the belt.
- The boxes should move from the infeed belt to the outfeed belt.
- Every time a box gets generated it gets a random color.
- When the boxes leave the outfeed belt, they are removed.
- Include a simple PyGame renderer. After each rendering step, the renderer should wait for a short time.
- In the main block include code that would run the environment with random actions and the renderer.

Your task is to parse these requirements and extract key specifications, including environment objectives, observation and action spaces, reward structures, rendering details, dependencies, and any constraints. If certain details are missing, you must infer or augment them based on standard practices in software development.

Please reply with the refined requirements.

Provide your answer in a preformatted text block surrounded by <pre> and </pre>. Do not use markdown code blocks. Do not include any extra information beyond the code. Only return a single block.

The Requirements Agent can then return the following output, i.e. the following task result:
<pre>

Environment Specifications for Smart Infeed Simulation
1. Core Environment Structure
   - Type: Gymnasium-compatible continuous environment
   - Dimension: 2D side view
   - Components: n conveyor belts (n > 3, default=5)
   - Layout: Linear arrangement (left to right)
      * Infeed belt (leftmost, red)
      * Correction belts (middle, blue)
      * Outfeed belt (rightmost, green)
2. Observation Space
   - Belt speeds (current speed for each belt)
   - Product positions on belts
   - Product-to-finger distances
   - Sensor readings for product positions
   - Distance to expected positions
   - Belt occupancy status
   - Time since last product generation
   - Current motion profiles of correction belts
3. Action Space
   - Type: Continuous
   - Control: Speed profiles for correction belts
   - Constraints:
      * Actions bounded by max/min velocity
      * Actions bounded by max/min acceleration
      * Must start/end at outfeed belt speed
      * Must follow 5th-order polynomial profile
4. Dynamics
   - Belt Properties:
      * Infeed: Constant speed (slower than outfeed)
      * Outfeed: Constant speed (reference speed)
      * Correction belts: Variable speed based on actions
   - Product Generation:
      * Random intervals on infeed belt
      * Initial speed matches belt speed
      * Spacing ensures availability of outfeed positions
   - Product Transfer:
      * Synchronized speeds between adjacent belts
      * Sequential processing on correction belts
      * Products move with belt speeds
5. Reward Structure
   Primary objectives:
      - Minimize position error at outfeed
      - Maximize throughput
   Secondary considerations:
      - Prefer forward corrections
      - Penalize velocity/acceleration violations
      - Penalize product collisions
6. Episode Termination
   - Time limit reached
   - Collision detected
   - Velocity/acceleration limits violated
   - Product misses target position beyond threshold
7. Rendering
   - Framework: PyGame
   - Features:
      * Color-coded belts (red, blue, green)
      * Random-colored products
      * Visible fingers/baffles on outfeed
      * Product movement visualization
      * Belt speed indicators
      - Frame delay after each render
8. Dependencies
   - gymnasium
   - numpy
   - pygame
9. Additional Constraints
   - No box2d-py dependency
   - Motion profiles use 5th-order polynomials
   - Forward corrections preferred when possible
   - Synchronized speeds during product transfers
   - Products removed after leaving outfeed belt
10. Implementation Requirements
   - Random action testing in main block
   - Renderer integration
   - Product generation logic
   - Motion profile calculations
   - Sensor simulation
   - Collision detection
   - Product tracking system

### </pre>

The task result of the Requirements Agent is then used to generate a prompt for a task for the Structured Requirements Agent, wherein, again, the task result of the Requirements Agent is inserted into a variable in the prompt, wherein the prompt also comprises pre-defined sections indicating the desired actions for the Structured Requirements Agent.

You are an expert Structured Requirements Engineering Agent specializing in transforming natural language specifications into detailed, structured, and validated software development requirements. Your task is to interpret and organize user-provided specifications into structured formats that align with best practices in industrial automation, cybersecurity, and functional safety. You ensure that each requirement adheres to standards like ISO 9001, IEC 61511, and IEC 62443, ensuring traceability, risk management, and lifecycle management. You will provide a structured format that includes unique IDs, risk assessments, safety levels, cybersecurity levels, and compliance tracking.

In your role, you must also ensure that each requirement contains details such as inputs, outputs, dependencies, acceptance criteria, and status. Where necessary, infer missing details based on industry standards and practices.

Your output should follow a structured schema that captures critical aspects such as risk level, safety integrity level (SIL), lifecycle stage, and compliance needs.

These are the initial requirements provided by the user in natural language:
Smart Infeed Simulation for Reinforcement Learning in Continuous Action Space
The Intelligent Infeed application is intended for use in production machines, primarily in the packaging sector.

The application automatically calculates and controls the corresponding accelerations and speeds of the products.

Task:
- Write an gymnasium compatible environment.
- The smart infeed is a chain of n (> 3, default 5) conveyor belts. The first belt is the infeed belt, the last belt is the outfeed belt. The other correction belts are in between.
- The conveyor belts are moving from left to right and are aligned as a group on a line from left to right.
- The infeed belt is on the left, the outfeed belt is on the right.
- The infeed belt has the color red, the outfeed belt has the color green.
- The other correction correction belts have the color blue.
- The conveyor belts are right next to each other.
- There are certain number of fingers/baffles on the outfeed belts, and products are expected to reach exactly at the center of 2 fingers/baffles.
- The infeed belt and the outfeed belt are moving at a constant speed, where the infeed belt is slightly slower than the outfeed belt.
- When there is no product on correction belts, they will move at a constant speed as the outfeed belt.
- When a product reaches a correction belt, a sensor can detect product's current position and compute the distance to product's expected position.
- The distance information gather by sensor is then used by agent to generate motion profile for the correction belt.
- The agent can control with its actions the speed of the correction belts in between the infeed and outfeed belt.
- When correction belts receive the action from agent and start to correct the position for products, it will start and end with the same speed as the outfeed belt.
- If there are multiple products over the same correction belt, only when the first product leaves the belt can the system start the correction for second product.
- 5th-order polynomial is preferred as the motion profile for these correction belts, with x-axis being the displacement of outfeed belt, and y-axis being the displacement of correction belts.
- When a product is transferred from one belt to another, both belts should have the same speed as the outfeed belt, so that the system is synchronized.
- The goal is to minimize the error between the product's actual position and the expected position on the outfeed belt.
- The objective is to process as many products as possible within a given time frame.
- There is a limited range for the distance that correction belts can adjust a product's position. Within this range, a forward correction is always preferred when possible since it can maximize the throughput.
- Correction belts have maximum and minimum velocity and acceleration values. Make sure the velocity and acceleration are within these range during correction.
- The simulation is 2d. We will see the belts from the side.
- Do not use box2d-py. The environment should be simple enough to be implemented without it.
- Boxes are created at random intervals on the infeed belt.
- Make sure to create boxes with appropriate speed so that there is always position/finger for the product on outfeed belt.
- Products should be spaced appropriately on the infeed belt to avoid collisions and ensure they reach the outfeed belt in time.
- The boxes are moving with the speed of the belt.
- The boxes should move from the infeed belt to the outfeed belt.
- Every time a box gets generated it gets a random color.
- When the boxes leave the outfeed belt, they are removed.
- Include a simple PyGame renderer. After each rendering step, the renderer should wait for a short time.
- In the main block include code that would run the environment with random actions and the renderer.

Below are the refined requirements provided by the user in natural language:

Environment Specifications for Smart Infeed Simulation
1. Core Environment Structure
   - Type: Gymnasium-compatible continuous environment
   - Dimension: 2D side view
   - Components: n conveyor belts (n > 3, default=5)
   - Layout: Linear arrangement (left to right)
      * Infeed belt (leftmost, red)
      * Correction belts (middle, blue)
      * Outfeed belt (rightmost, green)
2. Observation Space
   - Belt speeds (current speed for each belt)
   - Product positions on belts
   - Product-to-finger distances
   - Sensor readings for product positions
   - Distance to expected positions
   - Belt occupancy status
   - Time since last product generation
   - Current motion profiles of correction belts
      [...]
10. Implementation Requirements
   - Random action testing in main block
   - Renderer integration
   - Product generation logic
   - Motion profile calculations
   - Sensor simulation
   - Collision detection
   - Product tracking system

Your task is to convert these natural language requirements into a structured format. You must ensure each requirement includes:
- The project is being developed at Schneider Electric, a French multinational corporation that specializes in digital automation and energy management.
- The project is a simulation that aims at improving industrial applications with reinforcement learning.
- The scope is research and development.
- The primary stakeholders are industrial application engineers, data scientists, AI engineers, and R&D Managers plus CTO.
- The end users are internal application engineers.
- The main objective is providing a simulation that can optimize application development.
- The risk level is rather low, as we are in the research phase.
- There are no safety concerns.

Here is the current date and time: 2024-11-04T14:16:27.293973

Please generate as many structured requirements as possible. Make sure to include all the necessary details. Do not leave things to interpretation.

The output should be formatted as a JSON instance that conforms to the JSON schema below.

As an example, for the schema {"properties": {"foo": {"title": "Foo", "description": "a list of strings", "type": "array", "items": {"type": "string"}}}, "required": ["foo"]} the object {"foo": ["bar", "baz"]} is a well-formatted instance of the schema. The object {"properties": {"foo": ["bar", "baz"]}} is not well-formatted.

Here is the output schema: {"$defs": {"StructuredRequirement": {"properties": {"req_id": {"description": "Unique requirement id", "title": "Req Id", "type": "integer"}, "reqdep_id": {"default": -1, "description": "Id of the requirement to which this requirement depends on.", "title": "Reqdep Id", "type": "integer"}, "short_name": {"description": "A concise human-readable name for the requirement, used for quick reference.", "title": "Short Name", "type": "string"}, "description": {"description": "A detailed natural language description of the requirement.", "title": "Description", "type": "string"}, "req_type": {"description": "The category of the requirement, must be one of: Functional, NonFunctional.", "enum": ["Functional", "NonFunctional"], "title": "Req Type", "type": "string"}, "inputs": {"default": [], "description": "A list of expected inputs relevant to the requirement (e.g., data formats, UI fields).", "items": {"type": "string"}, "title": "Inputs", "type": "array"}, "outputs": {"default": [], "description": "A list of expected outputs produced by fulfilling the requirement (e.g., actions, data changes).", "items": {"type": "string"}, "title": "Outputs", "type": "array"}, "constraints": {"anyOf": [{"items": {"type": "string"}, "type": "array"}, {"type": "null"}], "default": null, "description": "Any rules, limitations, or conditions that must be respected (e.g., security, performance).", "title": "Constraints"}, "dependencies": {"anyOf": [{"items": {"type": "string"}, "type": "array"}, {"type": "null"}], "default": null, "description": "A list of other requirements or components this requirement depends on.", "title": "Dependencies"}, "acceptance_criteria": {"anyOf": [{"items": {"type": "string"}, "type": "array"}, {"type": "null"}], "default": null, "description": "A list of measurable or testable criteria that define whether the requirement has been successfully implemented.", "title": "Acceptance Criteria"}, "lifecycle_stage": {"default": "Design", "description": "The lifecycle stage the requirement is in, ensuring traceability across its development phases.", "enum": ["Design", "Development", "Testing", "Validation", "Deployment"], "title": "Lifecycle Stage", "type": "string"}, "created_at": {"description": "Timestamp when the requirement was created. Format is ISO 8601.", "format": "date-time", "title": "Created At", "type": "string"}, "updated_at": {"anyOf": [{"format": "date-time", "type": "string"}, {"type": "null"}], "default": null, "description": "Timestamp when the requirement was last updated. Format is ISO 8601.", "title": "Updated At"}, "implemented_at": {"anyOf": [{"format": "date-time", "type": "string"}, {"type": "null"}], "default": null, "description": "Timestamp when the requirement was fully implemented. Format is ISO 8601.", "title": "Implemented At"}}, "required": ["req_id", "short_name", "description", "req_type", "created_at"], "title": "StructuredRequirement", "type": "object"}}, "properties": {"requirements": {"default": [], "description": "A list of structured requirements, each representing a specific system requirement.", "items": {"$ref": "#/$defs/StructuredRequirement"}, "title": "Requirements", "type": "array"}}}

The Structured Requirements Agent could then output the following task result:

```
 {
 "requirements": [
 {
 "req_id": 1,
 "short_name": "Environment_Core_Structure",
 "description": "Implement a Gymnasium-compatible continuous environment for
 simulating a smart infeed system with n conveyor belts (n > 3, default=5) ar-
 ranged linearly from left to right, including an infeed belt (red), correction
 belts (blue), and outfeed belt (green).",
 "req_type": "Functional",
 "inputs": ["number_of_belts", "belt_dimensions", "belt_speeds"],
 "outputs": ["environment_instance"],
 "constraints": [
 "Must be compatible with Gymnasium API",
 "Minimum 3 conveyor belts",
 "Default configuration of 5 belts",
 "2D side view perspective",
 "No box2d-py dependency allowed"
 ],
 "dependencies": ["gymnasium", "numpy"],
 "acceptance_criteria": [
 "Environment successfully instantiates with default parameters",
 "Environment follows Gymnasium API conventions",
 "Belts are correctly positioned and colored",
 "Environment runs without box2d-py dependency"
 ],
 "lifecycle_stage": "Design",
 "created_at": "2024-11-04114:16:27.293973"
 },
 {
 "req_id": 2,
 "reqdep_id": 1,
 "short_name": "Observation_Space_Definition",
 "description": "Define and implement the observation space including belt
 speeds, product positions, sensor readings, and system state information.",
 "req_type": "Functional",
 "inputs": ["belt_states", "product-positions", "sensor_data"],
 "outputs": ["observation_space_object"],
 "constraints": [
 "Must include all belt speeds",
 "Must track all product positions",
 "Must include sensor readings",
 "Must track belt occupancy status",
 "Must include time since last product generation"
 ],
 "dependencies": ["gymnasium.spaces"],
 "acceptance_criteria": [
 "Observation space correctly defined in Gymnasium format",
 "All required state information included",
 "Proper scaling of observation values",
 "Correct dimensionality of observation space"
 ],
 "lifecycle_stage": "Design",
 "created_at": "2024-11-04T14:16:27.293973"
 },
 {
 "req_id": 3,
 "reqdep_id": 1,
 "short_name": "Action_Space_Definition",
 "description": "Implement continuous action space for controlling correc-
 tion belt speeds with constraints on velocity and acceleration, following 5th-or-
 der polynomial profiles.",
 "req_type": "Functional",
 "inputs": ["velocity_limits", "acceleration_limits", "outfeed_speed"],
 "outputs": ["action_space_object", "motion_profiles"],
 "constraints": [
 "Must be continuous action space",
 "Must enforce maximum/minimum velocity limits",
 "Must enforce maximum/minimum acceleration limits",
 "Must use 5th-order polynomial profiles",
 "Must synchronize with outfeed belt speed at start/end"
 ],
 "acceptance_criteria": [
 "Action space correctly defined in Gymnasium format",
 "Velocity and acceleration limits enforced",
 "5th-order polynomial profiles implemented",
 "Proper synchronization with outfeed belt"
 ],
 "lifecycle_stage": "Design",
 "created_at": "2024-11-04T14:16:27.293973"
 },
 {
 "req_id": 4,
 "reqdep_id": 1,
 "short_name": "Product Generation_System",
 "description": "Implement system for generating products at random inter-
 vals on the infeed belt with appropriate spacing and initial conditions.",
 "req_type": "Functional",
 "inputs": ["infeed_belt_speed", "outfeed_finger_positions", "time_step"],
 "outputs": ["product_instances", "generation_timestamps"],
 "constraints": [
 "Products must be generated at random intervals",
 "Products must have appropriate spacing to avoid collisions",
 "Products must align with available outfeed positions",
 "Initial product speed must match infeed belt speed"
 ],
 "acceptance_criteria": [
 "Products generated at appropriate intervals",
 "No collisions between products",
 "Products correctly aligned with outfeed positions",
 "Proper initial conditions for each product"
 ],
 "lifecycle_stage": "Design",
 "created_at": "2024-11-04T14:16:27.293973"
 },
 {
 "req_id": 5,
 "reqdep_id": 1,
 "short_name": "Visualization_System",
 "description": "Implement PyGame-based visualization system for rendering
 the simulation state, including color-coded belts, products, and motion indica-
 tors.",
 "req_type": "Functional",
 "inputs": ["environment_state", "product-positions", "belt_speeds"],
 "outputs": ["rendered_frame"],
 "constraints": [
 "Must use PyGame",
 "Must implement color coding for belts",
 "Must show products with random colors",
 "Must include frame delay after rendering",
 "Must visualize fingers/baffles on outfeed belt"
 ],
 "dependencies": ["pygame"],
 "acceptance_criteria": [
 "Correct visualization of all components",
 "Smooth animation of movement",
 "Proper color coding implemented",
 "Frame delay functioning correctly"
 ],
 "lifecycle_stage": "Design",
 "created_at": "2024-11-04T14:16:27.293973"
 }
 ]
 }
```

Next, the Use Cases Agent can receive the following prompt, wherein the Use Cases can be stored in the context information library:
You are an expert Use Case Engineering Agent specialized in transforming structured requirements into software development use cases. Your task is to interpret and organize software requirement specifications into software use cases that align with best practices in industrial automation, cybersecurity, and functional safety. You will provide a structured format that includes for each use case a unique use case ID, the requirement id to which it belongs, a brief use case description, steps from user perspective how to execute the use case.

In your role, you must also ensure that each use case contains details such as pre-condition, result and acceptance criteria. Where necessary, infer missing details based on industry standards and practices.

Make sure that there are 1 or more use cases for each structured requirement. Think about other variations of the use cases that could be derived from the structured requirements.

Make sure that each use case has a unique ID, take into account already defined use cases and increment the ID accordingly.

The output must only contain the new use cases that you have created.

Your output should follow a structured schema.

Here are the uses cases so far:
requirements=[]

Below is the refined requirement:
{'req_id': 1, 'reqdep_id': -1, 'short_name': 'Environment_Core_Structure', 'description': 'Implement a Gymnasium-compatible continuous environment for simulating a smart infeed system with n conveyor belts (n > 3, default=5) arranged linearly from left to right, including an infeed belt (red), correction belts (blue), and outfeed belt (green).', 'req_type': 'Functional', 'inputs': ['number_of_belts', 'belt_dimensions', 'belt_speeds'], 'outputs': ['environment_instance'], 'constraints': ['Must be compatible with Gymnasium API', 'Minimum 3 conveyor belts', 'Default configuration of 5 belts', '2D side view perspective', 'No box2d-py dependency allowed'], 'dependencies': ['gymnasium', 'numpy'], 'acceptance_criteria': ['Environment successfully instantiates with default parameters', 'Environment follows Gymnasium API conventions', 'Belts are correctly positioned and colored', 'Environment runs without box2d-py dependency'], 'lifecycle_stage': 'Design', 'created_at': '2024-11-04114:16:27.293973', 'updated_at': None, 'implemented_at': None}

Your task is to convert this structured requirement into a use case format.

Here is the current date and time: 2024-11-04T14:16:53.077546

The output should be formatted as a JSON instance that conforms to the JSON schema below.

As an example, for the schema {"properties": {"foo": {"title": "Foo", "description": "a list of strings", "type": "array", "items": {"type": "string"}}}, "required": ["foo"]} the object {"foo": ["bar", "baz"]} is a well-formatted instance of the schema. The object {"properties": {"foo": ["bar", "baz"]}} is not well-formatted.

Here is the output schema:
{"$defs": {"UseCase": {"properties": {"usecase_id": {"description": "A usecase id, used for automated reference.", "title": "Usecase Id", "type": "integer"}, "req_id": {"description": "Requirement id to which the use case belongs", "title": "Req Id", "type": "integer"}, "short_name": {"description": "A concise human-readable name for the requirement, used for quick reference.", "title": "Short Name", "type": "string"}, "description": {"description": "A detailed natural language description of the requirement.", "title": "Description", "type": "string"}, "pre_condition": {"description": "Steps from user perspective how to prepare the use case.", "title": "Pre Condition", "type": "string"}, "usecase_execution": {"description": "Steps from user perspective how to execute the use case.", "title": "Usecase Execution", "type": "string"}, "acceptance_criteria": {"description": "Series of conditions that a product, a user story or a work step must fulfill in order to be considered complete.", "title": "Acceptance Criteria", "type": "string"}}, "required": ["usecase_id", "req_id", "short_name", "description", "pre_condition", "usecase_execution", "acceptance_criteria"], "title": "UseCase", "type": "object"}}, "properties": {"requirements": {"default": [], "description": "A list of of use cases, each representing a specific use case.", "items": {"$ref": "#/$defs/UseCase"}, "title": "Requirements", "type": "array"}}}

The Use Cases Agent can then respond with the following task result which indicates the different use cases:

```
{
 "requirements": [
 {
 "usecase_id": 15,
 "req_id": 5,
 "short_name": "Initialize_Basic_Visualization",
 "description": "Set up and initialize a basic PyGame visualization system
 for the smart infeed environment",
 "pre_condition": "Python environment with PyGame and smart infeed environ-
 ment installed and configured",
 "usecase_execution": "1. Import PyGame module\n2. Configure display window
 dimensions\n3. Initialize PyGame display\n4. Set up color scheme for belts (red-
 infeed, blue-correction, green-outfeed)\n5. Create initial rendering of belt sys-
 tem\n6. Verify display window creation\n7. Test basic screen updates",
 "acceptance_criteria": "PyGame window successfully created with correct di-
 mensions, basic belt system visible with proper color coding, screen updates
 functioning"
 },
 {
 "usecase_id": 16,
 "req_id": 5,
 "short_name": "Implement_Product_Visualization",
 "description": "Implement visualization of products on conveyor belts with
 random colors",
 "pre_condition": "Basic PyGame visualization system initialized and run-
 ning",
 "usecase_execution": "1. Create product color generation function\n2. Im-
 plement product shape rendering\n3. Add product position tracking\n4. Create
 product movement visualization\n5. Test product rendering with multiple prod-
 ucts\n6. Verify random color assignment\n7. Validate smooth product movement",
 "acceptance_criteria": "Products appear on belts with random colors, move-
 ment visualization is smooth and accurate, multiple products handled correctly"
 },
 {
 "usecase_id": 17,
 "req_id": 5,
 "short_name": "Add_Motion_Indicators",
 "description": "Implement visual indicators for belt motion and speed",
 "pre_condition": "Product visualization system implemented and function-
 ing",
 "usecase_execution": "1. Design speed indicator graphics\n2. Implement belt
 speed visualization\n3. Add direction indicators\n4. Create speed scaling sys-
 tem\n5. Test speed indicator updates\n6. Verify direction indicator clarity\n7.
 Validate real-time updates",
 "acceptance_criteria": "Belt speeds and directions clearly indicated, vis-
 ual updates match actual system state, smooth animation of indicators"
 },
 {
 "usecase_id": 18,
 "req_id": 5,
 "short_name": "Implement_Outfeed_Visualization",
 "description": "Add visualization for outfeed belt fingers/baffles",
 "pre_condition": "Motion indicator system implemented and functioning",
 "usecase_execution": "1. Design finger/baffle graphics\n2. Implement finger
 movement visualization\n3. Add position synchronization\n4. Create finger state
 indicators\n5. Test finger movement animation\n6. Verify synchronization accu-
 racy\n7. Validate visual clarity",
 "acceptance_criteria": "Outfeed fingers/baffles clearly visible and ani-
 mated, movement synchronized with system state, clear visual representation of
 finger positions"
 }
 ]
 }
```

Then, the Environment Agent can receive a prompt in which the structured requirements and the use cases are included:
You are an expert Environment Design Agent. Your role is to design the architecture of Gym-like environments based on structured requirements. You define the classes, methods, and interactions, ensuring that components such as state representations, action spaces, reward mechanisms, and termination conditions are clearly articulated. Your task is to specify the entire system architecture as good as possible.

Here are the structured requirements:

```
{
 "requirements": [
 {
  "req_id": 1,
  "reqdep_id": -1,
  "short_name": "Environment_Core_Structure",
  "description": "Implement a Gymnasium-compatible continuous environ-
  ment for simulating a smart infeed system with n conveyor belts (n > 3, de-
  fault=5) arranged linearly from left to right, including an infeed belt (red),
  correction belts (blue), and outfeed belt (green).",
  "req_type": "Functional",
  "inputs": [
        "number_of_belts",
        "belt_dimensions",
        "belt_speeds"
  ],
  "outputs": [
       "environment_instance"
  ],
  "constraints": [
        "Must be compatible with Gymnasium API",
        "Minimum 3 conveyor belts",
        "Default configuration of 5 belts",
        "2D side view perspective",
        "No box2d-py dependency allowed"
  ],
  "dependencies": [
        "gymnasium",
        "numpy"
  ],
  "acceptance_criteria": [
        "Environment successfully instantiates with default parameters",
        "Environment follows Gymnasium API conventions",
        "Belts are correctly positioned and colored",
        "Environment runs without box2d-py dependency"
  ],
  "lifecycle_stage": "Design",
  "created_at": "2024-11-04T14:16:27.293973",
  "updated_at": null,
  "implemented_at": null
  },
  {
  "req_id": 2,
  "reqdep_id": 1,
  "short_name": "Observation_Space_Definition",
  "description": "Define and implement the observation space including
  belt speeds, product positions, sensor readings, and system state information.",
  "req_type": "Functional",
  "inputs": [
        "belt_states",
        "product-positions",
        "sensor_data"
  ],
  "outputs": [
        "observation_space_object"
  ],
  "constraints": [
        "Must include all belt speeds",
        "Must track all product positions",
        "Must include sensor readings",
        "Must track belt occupancy status",
        "Must include time since last product generation"
  ],
  "dependencies": [
        "gymnasium.spaces"
  ],
  "acceptance_criteria": [
        "Observation space correctly defined in Gymnasium format",
        "All required state information included",
        "Proper scaling of observation values",
        "Correct dimensionality of observation space"
  ],
  "lifecycle_stage": "Design",
  "created_at": "2024-11-04T14:16:27.293973",
  "updated_at": null,
  "implemented_at": null
  },
  {
  "req_id": 3,
  "reqdep_id": 1,
  "short_name": "Action_Space_Definition",
  "description": "Implement continuous action space for controlling
  correction belt speeds with constraints on velocity and acceleration, following
  5th-order polynomial profiles.",
  "req_type": "Functional",
  "inputs": [
        "velocity_limits",
        "acceleration_limits",
        "outfeed_speed"
  ],
  "outputs": [
        "action_space_object",
        "motion_profiles"
  ],
  "constraints": [
        "Must be continuous action space",
        "Must enforce maximum/minimum velocity limits",
        "Must enforce maximum/minimum acceleration limits",
        "Must use 5th-order polynomial profiles",
        "Must synchronize with outfeed belt speed at start/end"
  ],
  "dependencies": null,
  "acceptance_criteria": [
        "Action space correctly defined in Gymnasium format",
        "Velocity and acceleration limits enforced",
        "5th-order polynomial profiles implemented",
        "Proper synchronization with outfeed belt"
  ],
  "lifecycle_stage": "Design",
  "created_at": "2024-11-04T14:16:27.293973",
  "updated_at": null,
  "implemented_at": null
  },
  {
  "req_id": 4,
  "reqdep_id": 1,
  "short_name": "Product Generation_System",
  "description": "Implement system for generating products at random
  intervals on the infeed belt with appropriate spacing and initial conditions.",
  "req_type": "Functional",
  "inputs": [
        "infeed_belt_speed",
        "outfeed_finger_positions",
        "time_step"
  ],
  "outputs": [
        "product_instances",
        "generation_timestamps"
  ],
  "constraints": [
        "Products must be generated at random intervals",
        "Products must have appropriate spacing to avoid collisions",
        "Products must align with available outfeed positions",
        "Initial product speed must match infeed belt speed"
  ],
  "dependencies": null,
  "acceptance_criteria": [
        "Products generated at appropriate intervals",
        "No collisions between products",
        "Products correctly aligned with outfeed positions",
        "Proper initial conditions for each product"
  ],
  "lifecycle_stage": "Design",
  "created_at": "2024-11-04T14:16:27.293973",
  "updated_at": null,
  "implemented_at": null
  },
  {
  "req_id": 5,
  "reqdep_id": 1,
  "short_name": "Visualization_System",
  "description": "Implement PyGame-based visualization system for ren-
  dering the simulation state, including color-coded belts, products, and motion
  indicators.",
  "req_type": "Functional",
  "inputs": [
        "environment_state",
        "product-positions",
        "belt_speeds"
  ],
  "outputs": [
        "rendered_frame"
  ],
  "constraints": [
        "Must use PyGame",
        "Must implement color coding for belts",
        "Must show products with random colors",
        "Must include frame delay after rendering",
        "Must visualize fingers/baffles on outfeed belt"
  ],
  "dependencies": [
        "pygame"
  ],
  "acceptance_criteria": [
        "Correct visualization of all components",
        "Smooth animation of movement",
        "Proper color coding implemented",
        "Frame delay functioning correctly"
  ],
  "lifecycle_stage": "Design",
  "created_at": "2024-11-04T14:16:27.293973",
  "updated_at": null,
  "implemented_at": null
  }
  ]
  }
  
```

Here are the use-cases:

```
{
 "requirements": [
 {
  "usecase_id": 1,
  "req_id": 1,
  "short_name": "Create_Default_Environment",
  "description": "Create a new smart infeed system environment with de-
  fault configuration of 5 conveyor belts",
  "pre_condition": "Python environment with gymnasium and numpy pack-
  ages installed",
  "usecase_execution": "1. Import the smart infeed environment mod-
  ule\n2. Create environment instance using default parameters\n3. Verify environ-
  ment creation with 5 belts (1 infeed, 3 correction, 1 outfeed)\n4. Confirm proper
  belt coloring (red for infeed, blue for correction, green for outfeed)",
  "acceptance_criteria": "Environment instance is created successfully
  with 5 belts in correct configuration and colors, following Gymnasium API struc-
  ture"
  },
  {
  "usecase_id": 2,
  "req_id": 1,
  "short_name": "Create_Custom_Belt_Environment",
  "description": "Create a smart infeed system environment with custom
  number of conveyor belts (n > 3)",
  "pre_condition": "Python environment with gymnasium and numpy pack-
  ages installed",
  "usecase_execution": "1. Import the smart infeed environment mod-
  ule\n2. Specify desired number of belts (must be > 3)\n3. Create environment in-
  stance with specified number of belts\n4. Verify correct belt arrangement and
  coloring",
  "acceptance_criteria": "Environment instance is created with speci-
  fied number of belts, maintaining proper belt type distribution and coloring"
  },
  {
  "usecase_id": 3,
  "req_id": 1,
  "short_name": "Configure_Belt_Parameters",
  "description": "Create environment with custom belt dimensions and
  speeds",
  "pre_condition": "Python environment with gymnasium and numpy pack-
  ages installed",
  "usecase_execution": "1. Import the smart infeed environment mod-
  ule\n2. Define custom belt dimensions\n3. Define custom belt speeds\n4. Create
  environment instance with specified parameters\n5. Verify belt configuration
  matches input parameters",
  "acceptance_criteria": "Environment is created with specified belt
  dimensions and speeds, maintaining Gymnasium compatibility"
  },
  {
  "usecase_id": 4,
  "req_id": 2,
  "short_name": "Create_Basic_Observation_Space",
  "description": "Create and verify a basic observation space implemen-
  tation with all required components for the smart infeed system",
  "pre_condition": "Python environment with gymnasium and numpy pack-
  ages installed, smart infeed environment instance created",
  "usecase_execution": "1. Import required gymnasium spaces modules\n2.
  Create observation space instance\n3. Verify presence of belt speeds array\n4.
  Verify presence of product positions matrix\n5. Verify presence of sensor read-
  ings array\n6. Verify presence of belt occupancy status\n7. Verify presence of
  time since last product generation\n8. Print observation space structure and
  bounds",
  "acceptance_criteria": "Observation space is created with correct
  data types and dimensions for all required components, following Gymnasium space
  format"
  },
  {
  "usecase_id": 5,
  "req_id": 2,
  "short_name": "Validate_Observation_Bounds",
  "description": "Verify that all observation space components are
  properly bounded and scaled",
  "pre_condition": "Python environment with gymnasium and numpy pack-
  ages installed, observation space implementation completed",
  "usecase_execution": "1. Access observation space bounds\n2. Verify
  belt speed bounds (0 to max_speed)\n3. Verify product position bounds (0 to
  belt_length)\n4. Verify sensor reading bounds (0 to 1 for binary sensors)\n5.
  Verify belt occupancy bounds (0 to 1)\n6. Verify time counter bounds\n7. Test
  sample generation from space",
  "acceptance_criteria": "All observation components have appropriate
  bounds and scaling factors, sample generation works correctly"
  },
  {
  "usecase_id": 6,
  "req_id": 2,
  "short_name": "Test_Observation_Update",
  "description": "Test the dynamic updating of observation space values
  during system operation",
  "pre_condition": "Python environment with gymnasium and numpy pack-
  ages installed, observation space implementation completed, environment running",
  "usecase_execution": "1. Initialize environment and get initial ob-
  servation\n2. Perform a series of actions\n3. Verify belt speed updates\n4. Ver-
  ify product position updates\n5. Verify sensor reading updates\n6. Verify belt
  occupancy updates\n7. Verify time counter updates",
  "acceptance_criteria": "Observation space values update correctly in
  response to system state changes and maintain proper formats and bounds"
  },
  {
  "usecase_id": 7,
  "req_id": 3,
  "short_name": "Create_Basic_Action_Space",
  "description": "Create and verify a basic continuous action space for
  controlling correction belt speeds",
  "pre_condition": "Python environment with gymnasium and numpy pack-
  ages installed, smart infeed environment instance created",
  "usecase_execution": "1. Import required gymnasium spaces modules\n2.
  Define velocity limits for correction belts\n3. Create continuous action space
  instance\n4. Verify action space dimensionality matches number of correction
  belts\n5. Verify action bounds match velocity limits\n6. Test sample generation
  from action space",
  "acceptance_criteria": "Continuous action space is created with cor-
  rect dimensions and velocity bounds, following Gymnasium format"
  },
  {
  "usecase_id": 8,
  "req_id": 3,
  "short_name": "Implement_Motion_Constraints",
  "description": "Implement and verify velocity and acceleration con-
  straints for correction belt motion",
  "pre_condition": "Python environment with gymnasium and numpy pack-
  ages installed, basic action space implemented",
  "usecase_execution": "1. Define maximum/minimum velocity limits\n2.
  Define maximum/minimum acceleration limits\n3. Implement constraint checking
  functions\n4. Test velocity constraint enforcement\n5. Test acceleration con-
  straint enforcement\n6. Verify constraint violations are properly handled",
  "acceptance_criteria": "All motion constraints are properly enforced,
  violations are detected and handled appropriately"
  },
  {
  "usecase_id": 9,
  "req_id": 3,
  "short_name": "Configure_Polynomial_Profiles",
  "description": "Implement 5th-order polynomial motion profiles for
  correction belt speed control",
  "pre_condition": "Python environment with gymnasium and numpy pack-
  ages installed, motion constraints implemented",
  "usecase_execution": "1. Import mathematical utilities\n2. Implement
  5th-order polynomial coefficient calculation\n3. Create profile generation func-
  tion\n4. Test profile generation with various start/end conditions\n5. Verify ve-
  locity and acceleration continuity\n6. Validate profile synchronization with out-
  feed belt",
  "acceptance_criteria": "Motion profiles are generated using 5th-order
  polynomials, maintaining continuity and synchronization requirements"
  },
  [...] {
  "usecase_id": 18,
  "req_id": 5,
  "short_name": "Implement_Outfeed_Visualization",
  "description": "Add visualization for outfeed belt fingers/baffles",
  "pre_condition": "Motion indicator system implemented and function-
  ing",
  "usecase_execution": "1. Design finger/baffle graphics\n2. Implement
  finger movement visualization\n3. Add position synchronization\n4. Create finger
  state indicators\n5. Test finger movement animation\n6. Verify synchronization
  accuracy\n7. Validate visual clarity",
  "acceptance_criteria": "Outfeed fingers/baffles clearly visible and
  animated, movement synchronized with system state, clear visual representation of
  finger positions"
  }
  ]
  }
  
```

Based on these requirements and use-cases, design the architecture of the Gymnasium environment. Include the following in your design:
- Classes and methods, along with their interactions.
- Details on state representations, action spaces, reward mechanisms, and termination conditions.
- Any specific dependencies or constraints.
- Do not use OpenAI gymnasium as it is outdated.
- When you specify methods that should be implemented, please include parameters and return values.

Here is some additional knowledge that will help you with your task. It includes guidelines on how to write Gymnasium environments. Follow these guidelines:

```
 Here is a rough sketch how environments in Gymnasium are implemented:
 import gymnasium
 from gymnasium import spaces
 import numpy as np
 class ExampleEnv(gymnasium.Env):
 """
 Example environment class that follows the Gymnasium API for reinforcement
 learning.
 This environment defines how to interact with the environment through 'step',
 'reset', 'render', and 'close' methods.
 """
 def _init_(self) :
 """
 Initialize the environment.
 This method should set up the action and observation spaces, and initial-
 ize any environment state.
 """
 super () ._init_()
 # TODO: Implement
 def step(self, action):
 """
 Step through the environment with the given action.
 Args :
  action (ActType): The action taken by the agent.
  Returns:
  observation (ObsType): The next observation of the environment.
  reward (float): The reward for the action.
  terminated (bool): Whether the episode has ended due to reaching a
  terminal state.
  truncated (bool): Whether the episode was truncated due to time limit
  or other reasons.
  """ info (diet): Additional diagnostic information.
  # TODO: Implement
  return observation, reward, terminated, truncated, info
  def reset(self, seed=None, options=None):
  """
  Reset the environment to its initial state.
  Args:
  seed (int, optional): The random seed for reproducibility.
  options (dict, optional): Additional options for resetting the envi-
  ronment.
  Returns:
  observation (ObsType): The initial observation of the environment.
  """ info (diet): Additional diagnostic information.
  super() .reset(seed=seed) # Initialize RNG
  # TODO: Implement
  return observation, info
  def render (self):
  """
  Render the environment. Different render modes can be supported based on
  the 'render_mode' argument passed
  during environment initialization.
  Returns:
  """ None, or the rendered output (depending on render mode).
  # TODO: Implement
  def close(self):
  """
  Close the environment, cleaning up any resources used.
  This is important for environments using external resources like render-
  ing windows.
  """
  # TODO: Implement
  
```

Please generate a detailed and complete UML class diagram.

The output should be formatted as a JSON instance that conforms to the JSON schema below.

As an example, for the schema {"properties": {"foo": {"title": "Foo", "description": "a list of strings", "type": "array", "items": {"type": "string"}}}, "required": ["foo"]} the object {"foo": ["bar", "baz"]} is a well-formatted instance of the schema. The object {"properties": {"foo": ["bar", "baz"]}} is not well-formatted.

Here is the output schema:
{"$defs": {"RelationshipType": {"enum": ["association", "aggregation", "composition", "inheritance", "dependency"], "title": "RelationshipType", "type": "string"}, "UmlAttribute": {"properties": {"name": {"description": "The name of the attribute", "title": "Name", "type": "string"}, "type": {"description": "The data type of the attribute", "title": "Type", "type": "string"}, "is_optional": {"default": false, "description": "Indicates if the attribute is optional", "title": "Is Optional", "type": "boolean"}, "default": {"anyOf": [{"type": "string"}, {"type": "integer"}, {"type": "number"}, {"type": "boolean"}, {"type": "null"}], "default": null, "description": "Default value or factory function if any", "title": "Default"}, "visibility": {"$ref": "#/$defs/Visibility", "default": "public", "description": "Visibility of the attribute"}}, "required": ["name", "type"], "title": "UmlAttribute", "type": "object"}, "UmlClass": {"properties": {"name": {"description": "The name of the class", "title": "Name", "type": "string"}, "stereotype": {"anyOf": [{"type": "string"}, {"type": "null"}], "default": null, "description": "Stereotype of the class (e.g., interface, abstract)", "title": "Stereotype"}, "description": {"anyOf": [{"type": "string"}, {"type": "null"}], "default": null, "description": "Brief description of the class", "title": "Description"}, "attributes": {"description": "List of attributes in the class", "items": {"$ref": "#/$defs/UmlAttribute"}, "title": "Attributes", "type": "array"}, "methods": {"description": "List of methods in the class", "items": {"$ref": "#/$defs/UmlMethod"}, "title": "Methods", "type": "array"}, "is_abstract": {"default": false, "description": "Indicates if the class is abstract", "title": "Is Abstract", "type": "boolean"}, "superclass": {"anyOf": [{"type": "string"}, {"type": "null"}], "default": null, "description": "Name of the superclass if this class inherits from another", "title": "Superclass"}}, "required": ["name"], "title": "UmlClass", "type": "object"}, "UmlMethod": {"properties": {"name": {"description": "The name of the method", "title": "Name", "type": "string"}, "return_type": {"description": "Return type of the method", "title": "Return Type", "type": "string"}, "parameters": {"description": "List of parameters for the method", "items": {"$ref": "#/$defs/UmlAttribute"}, "title": "Parameters", "type": "array"}, "visibility": {"$ref": "#/$defs/Visibility", "default": "public", "description": "Visibility of the method"}}, "required": ["name", "return_type"], "title": "UmlMethod", "type": "object"}, "UmlRelationship": {"properties": {"source": {"description": "The name of the source class in the relationship", "title": "Source", "type": "string"}, "target": {"description": "The name of the target class in the relationship", "title": "Target", "type": "string"}, "source_role": {"anyOf": [{"type": "string"}, {"type": "null"}], "default": null, "description": "Role of the source in the relationship", "title": "Source Role"}, "target_role": {"anyOf": [{"type": "string"}, {"type": "null"}], "default": null, "description": "Role of the target in the relationship", "title": "Target Role"}, "relationship_type": {"$ref": "#/$defs/RelationshipType", "description": "Type of relationship between classes"}, "multiplicity_source": {"anyOf": [{"type": "string"}, {"type": "null"}], "default": null, "description": "Multiplicity at the source end", "title": "Multiplicity Source"}, "multiplicity_target": {"anyOf": [{"type": "string"}, {"type": "null"}], "default": null, "description": "Multiplicity at the target end", "title": "Multiplicity Target"}, "description": {"anyOf": [{"type": "string"}, {"type": "null"}], "default": null, "description": "Additional description of the relationship", "title": "Description"}, "is_bidirectional": {"default": false, "description": "Indicates if the relationship is bidirectional", "title": "Is Bidirectional", "type": "boolean"}}, "required": ["source", "target", "relationship_type"], "title": "UmlRelationship", "type": "object"}, "Visibility": {"enum": ["public", "protected", "private"], "title": "Visibility", "type": "string"}}, "properties": {"title": {"anyOf": [{"type": "string"}, {"type": "null"}], "default": null, "description": "Title of the class diagram", "title": "Title"}, "description": {"anyOf": [{"type": "string"}, {"type": "null"}], "default": null, "description": "Description of the class diagram", "title": "Description"}, "classes": {"description": "List of all classes in the diagram", "items": {"$ref": "#/$defs/UmlClass"}, "title": "Classes", "type": "array"}, "relationships": {"description": "List of relationships between classes", "items": {"$ref": "#/$defs/UmlRelationship"}, "title": "Relationships", "type": "array"}}, "required": ["classes", "relationships"]}

As task result, the following can be received:
I'll design a comprehensive architecture for the Smart Infeed System environment following the Gymnasium guidelines. Here's the UML class diagram representation:

```
 {
 "title": "Smart Infeed System Environment Architecture",
 "description": "Class diagram for a Gymnasium-compatible smart infeed system
 simulation environment",
 "classes": [
 {
 "name": "SmartInfeedEnv",
 "stereotype": null,
 "description": "Main environment class implementing the Gymnasium inter-
 face",
 "attributes": [
 {
 "name": "num_belts",
 "type": "int",
 "default": 5
 },
 {
 "name": "belt_dimensions",
 "type": "Dict[str, float]"
 },
 {
 "name": "belt_speeds",
 "type": "Dict[str, float]"
 },
 {
 "name": "observation_space",
 "type": "spaces.Dict"
 },
 {
 "name": "action_space",
 "type": "spaces.Box"
 }
 ],
 "methods": [
 {
 "name": "_init_",
 "return_type": "None",
 "parameters": [
  {
     "name": "num_belts",
     "type": "int",
     "is_optional": true,
     "default": "5"
  },
  {
     "name": "render_mode",
     "type": "Optional[str]",
     "is_optional": true,
     "default": "None"
  }
  ]
  },
  {
  "name": "step",
  "return_type": "Tuple[ObsType, float, bool, bool, dict]",
  "parameters": [
  {
     "name": "action",
     "type": "np.ndarray"
  }
  ]
  },
  {
  "name": "reset",
  "return_type": "Tuple[ObsType, dict]",
  "parameters": [
  {
     "name": "seed",
     "type": "Optional[int]",
     "is_optional": true
  },
  {
     "name": "options",
     "type": "Optional[dict]",
     "is_optional": true
  }
  ]
  },
  {
  "name": "render",
  "return_type": "Optional[np.ndarray]",
  "parameters": []
  },
  {
  "name": "close",
  "return_type": "None",
  "parameters": []
  }
  ]
  },
  {
  "name": "ConveyorBelt",
  "description": "Represents a single conveyor belt in the system",
  "attributes": [
  {
  "name": "length",
  "type": "float"
  },
  {
  "name": "width",
  "type": "float"
  },
  {
  "name": "speed",
  "type": "float"
  },
  {
  "name": "belt_type",
  "type": "str"
  },
  {
  "name": "position",
  "type": "np.ndarray"
  }
  ],
  "methods": [
  {
  "name": "update_speed",
  "return_type": "None",
  "parameters": [
  {
     "name": "new_speed",
     "type": "float"
  }
  ]
  },
  {
  "name": "get_state",
  "return_type": "Dict[str, Any]",
  "parameters": []
  }
  ]
  },
  {
  "name": "Product",
  "description": "Represents a product moving through the system",
  "attributes": [
  {
  "name": "position",
  "type": "np.ndarray"
  },
  {
  "name": "velocity",
  "type": "float"
  },
  {
  "name": "color",
  "type": "Tuple[int, int, int]"
  },
  {
  "name": "id",
  "type": "int"
  }
  ],
  "methods": [
  {
  "name": "update_position",
  "return_type": "None",
  "parameters": [
  {
     "name": "dt",
     "type": "float"
  }
  ]
  }
  ]
  },
  {
  "name": "ProductGenerator",
  "description": "Handles product generation and timing",
  "attributes": [
  {
  "name": "min_interval",
  "type": "float"
  },
  {
  "name": "max_interval",
  "type": "float"
  },
  {
  "name": "time_since_last",
  "type": "float"
  }
  ],
  "methods": [
  {
  "name": "should_generate",
  "return_type": "bool",
  "parameters": [
  {
     "name": "dt",
     "type": "float"
  }
  ]
  },
  {
  "name": "generate_product",
  "return_type": "Product",
  "parameters": []
  }
  ]
  },
  {
  "name": "Renderer",
  "description": "Handles visualization using PyGame",
  "attributes": [
  {
  "name": "screen",
  "type": "pygame.Surface"
  },
  {
  "name": "width",
  "type": "int"
  },
  {
  "name": "height",
  "type": "int"
  },
  {
  "name": "scale",
  "type": "float"
  }
  ],
  "methods": [
  {
  "name": "render_frame",
  "return_type": "np.ndarray",
  "parameters": [
  {
     "name": "state",
     "type": "Dict[str, Any]"
  }
  ]
  }
  ]
  },
  {
  "name": "MotionProfileGenerator",
  "description": "Generates 5th order polynomial motion profiles",
  "attributes": [
  {
  "name": "velocity_limits",
  "type": "Tuple[float, float]"
  },
  {
  "name": "acceleration_limits",
  "type": "Tuple[float, float]"
  }
  ],
  "methods": [
  {
  "name": "generate_profile",
  "return_type": "np.ndarray",
  "parameters": [
  {
     "name": "start_speed",
     "type": "float"
  },
  {
     "name": "end_speed",
     "type": "float"
  },
  {
     "name": "duration",
     "type": "float"
  }
  ]
  }
  ]
  }
  ],
  "relationships": [
  {
  "source": "SmartInfeedEnv",
  "target": "ConveyorBelt",
  "relationship_type": "composition",
  "multiplicity_source": "1",
  "multiplicity_target": "3..*"
  },
  {
  "source": "SmartInfeedEnv",
  "target": "Product",
  "relationship_type": "aggregation",
  "multiplicity_source": "1",
  "multiplicity_target": "0..*"
  },
  {
  "source": "SmartInfeedEnv",
  "target": "ProductGenerator",
  "relationship_type": "composition",
  "multiplicity_source": "1",
  "multiplicity_target": "1"
  },
  {
  "source": "SmartInfeedEnv",
  "target": "Renderer",
  "relationship_type": "composition",
  "multiplicity_source": "1",
  "multiplicity_target": "1"
  },
  {
  "source": "SmartInfeedEnv",
  "target": "MotionProfileGenerator",
  "relationship_type": "composition",
  "multiplicity_source": "1",
  "multiplicity_target": "1"
  },
  {
  "source": "ProductGenerator",
  "target": "Product",
  "relationship_type": "dependency"
  },
  {
  "source": "Renderer",
  "target": "ConveyorBelt",
  "relationship_type": "dependency"
  },
  {
  "source": "Renderer",
  "target": "Product",
  "relationship_type": "dependency"
  }
  ]
  }
```

Furthermore, the Dependencies Agent can be tasked with the following prompt in which the current structured requirements can be included as a variable:
You are a highly skilled Dependencies Agent. Your role is to analyze the detailed design of a custom Gym environment and determine all the required PyPI packages. You gather dependencies based on the specifications and ensure all necessary libraries and frameworks are included to run the environment, reinforcement learning code, and any supporting components.

Here are the structured requirements for the Gym environment:

```
 {
 "requirements": [
 {
  "req_id": 1,
  "reqdep_id": -1,
  "short_name": "Environment_Core_Structure",
  "description": "Implement a Gymnasium-compatible continuous environ-
  ment for simulating a smart infeed system with n conveyor belts (n > 3, de-
  fault=5) arranged linearly from left to right, including an infeed belt (red),
  correction belts (blue), and outfeed belt (green).",
  "req_type": "Functional",
  "inputs": [
        "number_of_belts",
        "belt_dimensions",
        "belt_speeds"
  ],
  "outputs": [
        "environment_instance"
  ],
  "constraints": [
        "Must be compatible with Gymnasium API",
        "Minimum 3 conveyor belts",
        "Default configuration of 5 belts",
        "2D side view perspective",
        "No box2d-py dependency allowed"
  ],
  "dependencies": [
        "gymnasium",
        "numpy"
  ],
  "acceptance_criteria": [
        "Environment successfully instantiates with default parameters",
        "Environment follows Gymnasium API conventions",
        "Belts are correctly positioned and colored",
        "Environment runs without box2d-py dependency"
  ],
  "lifecycle_stage": "Design",
  "created_at": "2024-11-04T14:16:27.293973",
  "updated_at": null,
  "implemented_at": null
  },
  {
  "req_id": 2,
  "reqdep_id": 1,
  "short_name": "Observation_Space_Definition",
  "description": "Define and implement the observation space including
  belt speeds, product positions, sensor readings, and system state information.",
  "req_type": "Functional",
  "inputs": [
        "belt_states",
        "product_positions",
        "sensor_data"
  ],
  "outputs": [
        "observation_space_object"
  ],
  "constraints": [
        "Must include all belt speeds",
        "Must track all product positions",
        "Must include sensor readings",
        "Must track belt occupancy status",
        "Must include time since last product generation"
  ],
  "dependencies": [
        "gymnasium.spaces"
  ],
  "acceptance_criteria": [
        "Observation space correctly defined in Gymnasium format",
        "All required state information included",
        "Proper scaling of observation values",
        "Correct dimensionality of observation space"
  ],
  "lifecycle_stage": "Design",
  "created_at": "2024-11-04T14:16:27.293973",
  "updated_at": null,
  "implemented_at": null
  },
  {
  "req_id": 3,
  "reqdep_id": 1,
  "short_name": "Action_Space_Definition",
  "description": "Implement continuous action space for controlling
  correction belt speeds with constraints on velocity and acceleration, following
  5th-order polynomial profiles.",
  "req_type": "Functional",
  "inputs": [
        "velocity_limits",
        "acceleration_limits",
        "outfeed_speed"
  ],
  "outputs": [
        "action_space_object",
        "motion_profiles"
  ],
  "constraints": [
        "Must be continuous action space",
        "Must enforce maximum/minimum velocity limits",
        "Must enforce maximum/minimum acceleration limits",
        "Must use 5th-order polynomial profiles",
        "Must synchronize with outfeed belt speed at start/end"
  ],
  "dependencies": null,
  "acceptance_criteria": [
        "Action space correctly defined in Gymnasium format",
        "Velocity and acceleration limits enforced",
        "5th-order polynomial profiles implemented",
        "Proper synchronization with outfeed belt"
  ],
  "lifecycle_stage": "Design",
  "created_at": "2024-11-04T14:16:27.293973",
  "updated_at": null,
  "implemented_at": null
  },
  {
  "req_id": 4,
  "reqdep_id": 1,
  "short_name": "Product Generation_System",
  "description": "Implement system for generating products at random
  intervals on the infeed belt with appropriate spacing and initial conditions.",
  "req_type": "Functional",
  "inputs": [
        "infeed_belt_speed",
        "outfeed_finger_positions",
        "time_step"
  ],
  "outputs": [
        "product_instances",
        "generation_timestamps"
  ],
  "constraints": [
        "Products must be generated at random intervals",
        "Products must have appropriate spacing to avoid collisions",
        "Products must align with available outfeed positions",
        "Initial product speed must match infeed belt speed"
  ],
  "dependencies": null,
  "acceptance_criteria": [
        "Products generated at appropriate intervals",
        "No collisions between products",
        "Products correctly aligned with outfeed positions",
        "Proper initial conditions for each product"
  ],
  "lifecycle_stage": "Design",
  "created_at": "2024-11-04T14:16:27.293973",
  "updated_at": null,
  "implemented_at": null
  },
  {
  "req_id": 5,
  "reqdep_id": 1,
  "short_name": "Visualization_System",
  "description": "Implement PyGame-based visualization system for ren-
  dering the simulation state, including color-coded belts, products, and motion
  indicators.",
  "req_type": "Functional",
  "inputs": [
        "environment_state",
        "product-positions",
        "belt_speeds"
  ],
  "outputs": [
        "rendered_frame"
  ],
  "constraints": [
        "Must use PyGame",
        "Must implement color coding for belts",
        "Must show products with random colors",
        "Must include frame delay after rendering",
        "Must visualize fingers/baffles on outfeed belt"
  ],
  "dependencies": [
        "pygame"
  ],
  "acceptance_criteria": [
        "Correct visualization of all components",
        "Smooth animation of movement",
        "Proper color coding implemented",
        "Frame delay functioning correctly"
  ],
  "lifecycle_stage": "Design",
  "created_at": "2024-11-04T14:16:27.293973",
  "updated_at": null,
  "implemented_at": null
  }
  ]
  }
  
```

Based on this design, provide a list of all necessary PyPI packages that would be required to implement the environment and run it with reinforcement learning algorithms like those used in RLlib. Consider dependencies for:
- Gym environment development
- Reinforcement learning frameworks (such as RLlib)
- Any specified rendering, observation, or action space libraries
- Additional tools or libraries mentioned in the design
- Since OpenAI gym has been outdated, use gymnasium instead.

Please provide the list of PyPI packages as a comma separated list.

Provide your answer in a preformatted text block surrounded by <pre> and </pre>. Do not include any extra information beyond your response. Only return a single block.

The dependencies outputted by the Dependencies Agent can then be:
<pre>gymnasium, numpy, pygame, ray[rllib], torch, wandb, tensorboard</pre>

The Planning Agent can be tasked to generate a list of classes with the following prompt:
You are an expert Planning Agent.

Your role is to convert design specifications into plans for coding.

You generate Gym-like environments adhering to OpenAI Gym's API standards, ensuring best coding practices, proper use of dependencies, and thorough documentation through comments and docstrings.

Here is the an UML class diagram:

```
 {
 "title": "Smart Infeed System Environment Architecture",
 "description": "Class diagram for a Gymnasium-compatible smart infeed system
 simulation environment",
 "classes": [
 {
  "name": "SmartInfeedEnv",
  "stereotype": null,
  "description": "Main environment class implementing the Gymnasium in-
  terface",
  "attributes": [
        {
             "name": "num_belts",
             "type": "int",
             "is_optional": false,
             "default": 5,
             "visibility": "public"
        },
        {
             "name": "belt_dimensions",
             "type": "Dict[str, float]",
             "is_optional": false,
             "default": null,
             "visibility": "public"
        },
        {
             "name": "belt_speeds",
             "type": "Dict[str, float]",
             "is_optional": false,
             "default": null,
             "visibility": "public"
        },
        {
             "name": "observation_space",
             "type": "spaces.Dict",
             "is_optional": false,
             "default": null,
             "visibility": "public"
        },
        {
             "name": "action_space",
             "type": "spaces.Box",
             "is_optional": false,
             "default": null,
             "visibility": "public"
        }
  ],
  "methods": [
        {
             "name": "_init_",
             "return_type": "None",
             "parameters": [
                  {
                       "name": "num_belts",
                       "type": "int",
                       "is_optional": true,
                       "default": "5",
                       "visibility": "public"
                  },
                  {
                       "name": "render_mode",
                       "type": "Optional[str]",
                       "is_optional": true,
                       "default": "None",
                       "visibility": "public"
                  }
             ],
             "visibility": "public"
        },
        {
             "name": "step",
             "return_type": "Tuple[ObsType, float, bool, bool, dict]",
             "parameters": [
                  {
                       "name": "action",
                       "type": "np.ndarray",
                       "is_optional": false,
                       "default": null,
                       "visibility": "public"
                  }
             ],
             "visibility": "public"
        },
        {
             "name": "reset",
             "return_type": "Tuple[ObsType, dict]",
             "parameters": [
                  {
                       "name": "seed",
                       "type": "Optional[int]",
                       "is_optional": true,
                       "default": null,
                       "visibility": "public"
                  },
                  {
                       "name": "options",
                       "type": "Optional[dict]",
                       "is_optional": true,
                       "default": null,
                       "visibility": "public"
                  }
             ],
             "visibility": "public"
        },
        {
             "name": "render",
             "return_type": "Optional[np.ndarray]",
             "parameters": [],
             "visibility": "public"
        },
        {
             "name": "close",
             "return_type": "None",
             "parameters": [],
             "visibility": "public"
        }
  ],
  "is_abstract": false,
  "superclass": null
  },
  {
  "name": "ConveyorBelt",
  "stereotype": null,
  "description": "Represents a single conveyor belt in the system",
  "attributes": [
        {
             "name": "length",
             "type": "float",
             "is_optional": false,
             "default": null,
             "visibility": "public"
        },
        {
             "name": "width",
             "type": "float",
             "is_optional": false,
             "default": null,
             "visibility": "public"
        },
        {
             "name": "speed",
             "type": "float",
             "is_optional": false,
             "default": null,
             "visibility": "public"
        },
        {
             "name": "belt_type",
             "type": "str",
             "is_optional": false,
             "default": null,
             "visibility": "public"
        },
        {
             "name": "position",
             "type": "np.ndarray",
             "is_optional": false,
             "default": null,
             "visibility": "public"
        }
  ],
  "methods": [
        {
             "name": "update_speed",
             "return_type": "None",
             "parameters": [
                  {
                       "name": "new_speed",
                       "type": "float",
                       "is_optional": false,
                       "default": null,
                       "visibility": "public"
                  }
             ],
             "visibility": "public"
        },
        {
             "name": "get_state",
             "return_type": "Dict[str, Any]",
             "parameters": [],
             "visibility": "public"
        }
  ],
  "is_abstract": false,
  "superclass": null
  },
  {
  "name": "Product",
  "stereotype": null,
  "description": "Represents a product moving through the system",
  "attributes": [
        {
             "name": "position",
             "type": "np.ndarray",
             "is_optional": false,
             "default": null,
             "visibility": "public"
        },
        {
             "name": "velocity",
             "type": "float",
             "is_optional": false,
             "default": null,
             "visibility": "public"
        },
        {
             "name": "color",
             "type": "Tuple[int, int, int]",
             "is_optional": false,
             "default": null,
             "visibility": "public"
        },
        {
             "name": "id",
             "type": "int",
             "is_optional": false,
             "default": null,
             "visibility": "public"
        }
  ],
  "methods": [
        {
             "name": "update_position",
             "return_type": "None",
             "parameters": [
                  {
                       "name": "dt",
                       "type": "float",
                       "is_optional": false,
                       "default": null,
                       "visibility": "public"
                  }
             ],
             "visibility": "public"
        }
  ],
  "is_abstract": false,
  "superclass": null
  },
  {
  "name": "ProductGenerator",
  "stereotype": null,
  "description": "Handles product generation and timing",
  "attributes": [
        {
             "name": "min_interval",
             "type": "float",
             "is_optional": false,
             "default": null,
             "visibility": "public"
        },
        {
             "name": "max_interval",
             "type": "float",
             "is_optional": false,
             "default": null,
             "visibility": "public"
        },
        {
             "name": "time_since_last",
             "type": "float",
             "is_optional": false,
             "default": null,
             "visibility": "public"
        }
  ],
  "methods": [
        {
             "name": "should_generate",
             "return_type": "bool",
             "parameters": [
                  {
                       "name": "dt",
                       "type": "float",
                       "is_optional": false,
                       "default": null,
                       "visibility": "public"
                  }
             ],
             "visibility": "public"
        },
        {
             "name": "generate_product",
             "return_type": "Product",
             "parameters": [],
             "visibility": "public"
        }
  ],
  "is_abstract": false,
  "superclass": null
  },
  {
  "name": "Renderer",
  "stereotype": null,
  "description": "Handles visualization using PyGame",
  "attributes": [
        {
             "name": "screen",
             "type": "pygame.Surface",
             "is_optional": false,
             "default": null,
             "visibility": "public"
        },
        {
             "name": "width",
             "type": "int",
             "is_optional": false,
             "default": null,
             "visibility": "public"
        },
        {
             "name": "height",
             "type": "int",
             "is_optional": false,
             "default": null,
             "visibility": "public"
        },
        {
             "name": "scale",
             "type": "float",
             "is_optional": false,
             "default": null,
             "visibility": "public"
        }
  ],
  "methods": [
        {
             "name": "render_frame",
             "return_type": "np.ndarray",
             "parameters": [
                  {
                       "name": "state",
                       "type": "Dict[str, Any]",
                       "is_optional": false,
                       "default": null,
                       "visibility": "public"
                  }
             ],
             "visibility": "public"
        }
  ],
  "is_abstract": false,
  "superclass": null
  },
  {
  "name": "MotionProfileGenerator",
  "stereotype": null,
  "description": "Generates 5th order polynomial motion profiles",
  "attributes": [
        {
             "name": "velocity_limits",
             "type": "Tuple[float, float]",
             "is_optional": false,
             "default": null,
             "visibility": "public"
        },
        {
             "name": "acceleration_limits",
             "type": "Tuple[float, float]",
             "is_optional": false,
             "default": null,
             "visibility": "public"
        }
  ],
  "methods": [
        {
             "name": "generate_profile",
             "return_type": "np.ndarray",
             "parameters": [
                  {
                       "name": "start_speed",
                       "type": "float",
                       "is_optional": false,
                       "default": null,
                       "visibility": "public"
                  },
                  {
                       "name": "end_speed",
                       "type": "float",
                       "is_optional": false,
                       "default": null,
                       "visibility": "public"
                  },
                  {
                       "name": "duration",
                       "type": "float",
                       "is_optional": false,
                       "default": null,
                       "visibility": "public"
                  }
             ],
             "visibility": "public"
        }
  ],
  "is_abstract": false,
  "superclass": null
  }
  ],
  "relationships": [
  {
  "source": "SmartInfeedEnv",
  "target": "ConveyorBelt",
  "source_role": null,
  "target_role": null,
  "relationship_type": "composition",
  "multiplicity_source": "1",
  "multiplicity_target": "3..*",
  "description": null,
  "is_bidirectional": false
  },
  {
  "source": "SmartInfeedEnv",
  "target": "Product",
  "source_role": null,
  "target_role": null,
  "relationship_type": "aggregation",
  "multiplicity_source": "1",
  "multiplicity_target": "0..*",
  "description": null,
  "is_bidirectional": false
  },
  {
  "source": "SmartInfeedEnv",
  "target": "ProductGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "Renderer",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "MotionProfileGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "ProductGenerator",
  "target": "Product",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "ConveyorBelt",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "Product",
  "source_role": null,
  "target_role": null,
  "relationship_type": "dependency",
  "multiplicity_source": null,
  "multiplicity_target": null,
  "description": null,
  "is_bidirectional": false
  }
  ]
  }
```

Based on these above, generate a list of classes that should be implemented. We will later generate the classes in the order you have provided, so please make sure that the order is good. Reply with a comma-separated list of class names only. Do not add more information.

Provide your answer in a preformatted text block surrounded by <pre> and </pre>. Do not use markdown code blocks. Do not include any extra information beyond the code. Only return a single block.

The task result can then be the required classes for programming the source code:
<pre>ConveyorBelt, Product, ProductGenerator, MotionProfileGenerator, Renderer, SmartInfeedEnv</pre>

Additionally, the Planning Agent can also be tasked to generate a task list, wherein the prompt comprises the task results of several of the previous tasks of other agents.

You are an expert Planning Agent.

Your role is to convert design specifications into plans for coding.

You generate Gym-like environments adhering to OpenAI Gym's API standards, ensuring best coding practices, proper use of dependencies, and thorough documentation through comments and docstrings.

Here is the list use cases which are derived from the requirements

```
 {
 "requirements": [
 {
  "usecase_id": 1,
  "req_id": 1,
  "short_name": "Create_Default_Environment",
  "description": "Create a new smart infeed system environment with de-
  fault configuration of 5 conveyor belts",
  "pre_condition": "Python environment with gymnasium and numpy pack-
  ages installed",
  "usecase_execution": "1. Import the smart infeed environment mod-
  ule\n2. Create environment instance using default parameters\n3. Verify environ-
  ment creation with 5 belts (1 infeed, 3 correction, 1 outfeed)\n4. Confirm proper
  belt coloring (red for infeed, blue for correction, green for outfeed)",
  "acceptance_criteria": "Environment instance is created successfully
  with 5 belts in correct configuration and colors, following Gymnasium API struc-
  ture"
  },
  {
  "usecase_id": 2,
  "req_id": 1,
  "short_name": "Create_Custom_Belt_Environment",
  "description": "Create a smart infeed system environment with custom
  number of conveyor belts (n > 3)",
  "pre_condition": "Python environment with gymnasium and numpy pack-
  ages installed",
  "usecase_execution": "1. Import the smart infeed environment mod-
  ule\n2. Specify desired number of belts (must be > 3)\n3. Create environment in-
  stance with specified number of belts\n4. Verify correct belt arrangement and
  coloring",
  "acceptance_criteria": "Environment instance is created with speci-
  fied number of belts, maintaining proper belt type distribution and coloring"
  },
  {
  "usecase_id": 3,
  "req_id": 1,
  "short_name": "Configure_Belt_Parameters",
  "description": "Create environment with custom belt dimensions and
  speeds",
  "pre_condition": "Python environment with gymnasium and numpy pack-
  ages installed",
  "usecase_execution": "1. Import the smart infeed environment mod-
  ule\n2. Define custom belt dimensions\n3. Define custom belt speeds\n4. Create
  environment instance with specified parameters\n5. Verify belt configuration
  matches input parameters",
  "acceptance_criteria": "Environment is created with specified belt
  dimensions and speeds, maintaining Gymnasium compatibility"
  },
  {
  "usecase_id": 4,
  "req_id": 2,
  "short_name": "Create_Basic_Observation_Space",
  "description": "Create and verify a basic observation space implemen-
  tation with all required components for the smart infeed system",
  "pre_condition": "Python environment with gymnasium and numpy pack-
  ages installed, smart infeed environment instance created",
  "usecase_execution": "1. Import required gymnasium spaces modules\n2.
  Create observation space instance\n3. Verify presence of belt speeds array\n4.
  Verify presence of product positions matrix\n5. Verify presence of sensor read-
  ings array\n6. Verify presence of belt occupancy status\n7. Verify presence of
  time since last product generation\n8. Print observation space structure and
  bounds",
  "acceptance_criteria": "Observation space is created with correct
  data types and dimensions for all required components, following Gymnasium space
  format"
  },
  {
  "usecase_id": 5,
  "req_id": 2,
  "short_name": "Validate_Observation_Bounds",
  "description": "Verify that all observation space components are
  properly bounded and scaled",
  "pre_condition": "Python environment with gymnasium and numpy pack-
  ages installed, observation space implementation completed",
  "usecase_execution": "1. Access observation space bounds\n2. Verify
  belt speed bounds (0 to max_speed)\n3. Verify product position bounds (0 to
  belt_length)\n4. Verify sensor reading bounds (0 to 1 for binary sensors)\n5.
  Verify belt occupancy bounds (0 to 1)\n6. Verify time counter bounds\n7. Test
  sample generation from space",
  "acceptance_criteria": "All observation components have appropriate
  bounds and scaling factors, sample generation works correctly"
  },
  {
  "usecase_id": 6,
  "req_id": 2,
  "short_name": "Test_Observation_Update",
  "description": "Test the dynamic updating of observation space values
  during system operation",
  "pre_condition": "Python environment with gymnasium and numpy pack-
  ages installed, observation space implementation completed, environment running",
  "usecase_execution": "1. Initialize environment and get initial ob-
  servation\n2. Perform a series of actions\n3. Verify belt speed updates\n4. Ver-
  ify product position updates\n5. Verify sensor reading updates\n6. Verify belt
  occupancy updates\n7. Verify time counter updates",
  "acceptance_criteria": "Observation space values update correctly in
  response to system state changes and maintain proper formats and bounds"
  },
  {
  "usecase_id": 7,
  "req_id": 3,
  "short_name": "Create_Basic_Action_Space",
  "description": "Create and verify a basic continuous action space for
  controlling correction belt speeds",
  "pre_condition": "Python environment with gymnasium and numpy pack-
  ages installed, smart infeed environment instance created",
  "usecase_execution": "1. Import required gymnasium spaces modules\n2.
  Define velocity limits for correction belts\n3. Create continuous action space
  instance\n4. Verify action space dimensionality matches number of correction
  belts\n5. Verify action bounds match velocity limits\n6. Test sample generation
  from action space",
  "acceptance_criteria": "Continuous action space is created with cor-
  rect dimensions and velocity bounds, following Gymnasium format"
  },
  {
  "usecase_id": 8,
  "req_id": 3,
  "short_name": "Implement_Motion_Constraints",
  "description": "Implement and verify velocity and acceleration con-
  straints for correction belt motion",
  "pre_condition": "Python environment with gymnasium and numpy pack-
  ages installed, basic action space implemented",
  "usecase_execution": "1. Define maximum/minimum velocity limits\n2.
  Define maximum/minimum acceleration limits\n3. Implement constraint checking
  functions\n4. Test velocity constraint enforcement\n5. Test acceleration con-
  straint enforcement\n6. Verify constraint violations are properly handled",
  "acceptance_criteria": "All motion constraints are properly enforced,
  violations are detected and handled appropriately"
  },
  {
  "usecase_id": 9,
  "req_id": 3,
  "short_name": "Configure_Polynomial_Profiles",
  "description": "Implement 5th-order polynomial motion profiles for
  correction belt speed control",
  "pre_condition": "Python environment with gymnasium and numpy pack-
  ages installed, motion constraints implemented",
  "usecase_execution": "1. Import mathematical utilities\n2. Implement
  5th-order polynomial coefficient calculation\n3. Create profile generation func-
  tion\n4. Test profile generation with various start/end conditions\n5. Verify ve-
  locity and acceleration continuity\n6. Validate profile synchronization with out-
  feed belt",
  "acceptance_criteria": "Motion profiles are generated using 5th-order
  polynomials, maintaining continuity and synchronization requirements"
  },
  {
  "usecase_id": 10,
  "req_id": 3,
  "short_name": "Test Outfeed_Synchronization",
  "description": "Verify proper synchronization of correction belt
  speeds with outfeed belt",
  "pre_condition": "Python environment with gymnasium and numpy pack-
  ages installed, polynomial profiles implemented",
  "usecase_execution": "1. Set outfeed belt reference speed\n2. Gener-
  ate motion profiles for various scenarios\n3. Verify initial speed matching\n4.
  Verify final speed matching\n5. Test synchronization with varying outfeed
  speeds\n6. Validate smooth transitions",
  "acceptance_criteria": "Correction belt speeds properly synchronize
  with outfeed belt at profile start and end points, maintaining smooth transi-
  tions"
  },
  {
  "usecase_id": 11,
  "req_id": 4,
  "short_name": "Configure_Basic_Product_Generation",
  "description": "Set up and test basic product generation system with
  random intervals on the infeed belt",
  "pre_condition": "Python environment with gymnasium and numpy pack-
  ages installed, smart infeed environment instance created with properly config-
  ured belts",
  "usecase_execution": "1. Import random generation utilities\n2. Con-
  figure minimum and maximum generation intervals\n3. Set up product generation
  trigger mechanism\n4. Initialize product tracking system\n5. Generate test prod-
  ucts\n6. Verify random timing intervals\n7. Confirm products appear on infeed
  belt\n8. Validate initial product speeds match infeed belt",
  "acceptance_criteria": "Product generation system creates products at
  random intervals with proper initial conditions, products appear correctly on in-
  feed belt with speed matching infeed belt speed"
  },
  {
  "usecase_id": 12,
  "req_id": 4,
  "short_name": "Implement_Spacing_Control",
  "description": "Implement and verify product spacing control system
  to prevent collisions",
  "pre_condition": "Python environment with gymnasium and numpy pack-
  ages installed, basic product generation system implemented",
  "usecase _execution": "1. Define minimum spacing requirements\n2. Im-
  plement spacing verification algorithm\n3. Create collision detection system\n4.
  Test product generation with various belt speeds\n5. Verify minimum spacing
  maintenance\n6. Test edge cases (high speed, multiple products)\n7. Validate col-
  lision prevention system",
  "acceptance_criteria": "Products maintain minimum required spacing,
  no collisions occur during operation, spacing control works across various belt
  speeds"
  },
  {
  "usecase_id": 13,
  "req_id": 4,
  "short_name": "Align_With_Outfeed_Positions",
  "description": "Implement system to align product generation with
  available outfeed positions",
  "pre_condition": "Python environment with gymnasium and numpy pack-
  ages installed, spacing control system implemented",
  "usecase _execution": "1. Get outfeed finger position data\n2. Calcu-
  late optimal generation timing\n3. Implement alignment algorithm\n4. Test genera-
  tion timing adjustment\n5. Verify product alignment with outfeed positions\n6.
  Validate system with varying outfeed configurations\n7. Test synchronization
  maintenance",
  "acceptance_criteria": "Products are generated with timing that al-
  lows proper alignment with outfeed positions, system maintains synchronization
  with outfeed finger movements"
  },
  {
  "usecase_id": 14,
  "req_id": 4,
  "short_name": "Test_Generation_Monitoring",
  "description": "Implement and test product generation monitoring and
  logging system",
  "pre_condition": "Python environment with gymnasium and numpy pack-
  ages installed, product generation system fully implemented",
  "usecase_execution": "1. Set up generation event logging\n2. Imple-
  ment timestamp recording\n3. Create product tracking system\n4. Test logging
  functionality\n5. Verify timestamp accuracy\n6. Validate product tracking\n7.
  Test data export functionality",
  "acceptance_criteria": "Generation events are properly logged with
  accurate timestamps, product tracking system maintains accurate count and status
  of all generated products"
  },
  {
  "usecase_id": 15,
  "req_id": 5,
  "short_name": "Initialize_Basic_Visualization",
  "description": "Set up and initialize a basic PyGame visualization
  system for the smart infeed environment",
  "pre_condition": "Python environment with PyGame and smart infeed en-
  vironment installed and configured",
  "usecase_execution": "1. Import PyGame module\n2. Configure display
  window dimensions\n3. Initialize PyGame display\n4. Set up color scheme for belts
  (red-infeed, blue-correction, green-outfeed)\n5. Create initial rendering of belt
  system\n6. Verify display window creation\n7. Test basic screen updates",
  "acceptance_criteria": "PyGame window successfully created with cor-
  rect dimensions, basic belt system visible with proper color coding, screen up-
  dates functioning"
  },
  {
  "usecase_id": 16,
  "req_id": 5,
  "short_name": "Implement_Product_Visualization",
  "description": "Implement visualization of products on conveyor belts
  with random colors",
  "pre_condition": "Basic PyGame visualization system initialized and
  running",
  "usecase_execution": "1. Create product color generation function\n2.
  Implement product shape rendering\n3. Add product position tracking\n4. Create
  product movement visualization\n5. Test product rendering with multiple prod-
  ucts\n6. Verify random color assignment\n7. Validate smooth product movement",
  "acceptance_criteria": "Products appear on belts with random colors,
  movement visualization is smooth and accurate, multiple products handled cor-
  rectly"
  },
  {
  "usecase_id": 17,
  "req_id": 5,
  "short_name": "Add_Motion_Indicators",
  "description": "Implement visual indicators for belt motion and
  speed",
  "pre_condition": "Product visualization system implemented and func-
  tioning" ,
  "usecase_execution": "1. Design speed indicator graphics\n2. Imple-
  ment belt speed visualization\n3. Add direction indicators\n4. Create speed scal-
  ing system\n5. Test speed indicator updates\n6. Verify direction indicator clar-
  ity\n7. Validate real-time updates",
  "acceptance_criteria": "Belt speeds and directions clearly indicated,
  visual updates match actual system state, smooth animation of indicators"
  },
  {
  "usecase_id": 18,
  "req_id": 5,
  "short_name": "Implement_Outfeed_Visualization",
  "description": "Add visualization for outfeed belt fingers/baffles",
  "pre_condition": "Motion indicator system implemented and function-
  ing" ,
  "usecase_execution": "1. Design finger/baffle graphics\n2. Implement
  finger movement visualization\n3. Add position synchronization\n4. Create finger
  state indicators\n5. Test finger movement animation\n6. Verify synchronization
  accuracy\n7. Validate visual clarity",
  "acceptance_criteria": "Outfeed fingers/baffles clearly visible and
  animated, movement synchronized with system state, clear visual representation of
  finger positions"
  }
  ]
  }
```

Here are the design specifications for the environment:

```
 {
 "requirements": [
 {
  "req_id": 1,
  "reqdep_id": -1,
  "short_name": "Environment_Core_Structure",
  "description": "Implement a Gymnasium-compatible continuous environ-
  ment for simulating a smart infeed system with n conveyor belts (n > 3, de-
  fault=5) arranged linearly from left to right, including an infeed belt (red),
  correction belts (blue), and outfeed belt (green).",
  "req_type": "Functional",
  "inputs": [
        "number_of_belts",
        "belt_dimensions",
        "belt_speeds"
  ],
  "outputs": [
        "environment_instance"
  ],
  "constraints": [
        "Must be compatible with Gymnasium API",
        "Minimum 3 conveyor belts",
        "Default configuration of 5 belts",
        "2D side view perspective",
        "No box2d-py dependency allowed"
  ],
  "dependencies": [
        "gymnasium",
        "numpy"
  ],
  "acceptance_criteria": [
        "Environment successfully instantiates with default parameters",
        "Environment follows Gymnasium API conventions",
        "Belts are correctly positioned and colored",
        "Environment runs without box2d-py dependency"
  ],
  "lifecycle_stage": "Design",
  "created_at": "2024-11-04114:16:27.293973",
  "updated_at": null,
  "implemented_at": null
  },
  {
  "req_id": 2,
  "reqdep_id": 1,
  "short_name": "Observation_Space_Definition",
  "description": "Define and implement the observation space including
  belt speeds, product positions, sensor readings, and system state information.",
  "req_type": "Functional",
  "inputs": [
        "belt_states",
        "product_positions",
        "sensor_data"
  ],
  "outputs": [
        "observation_space_object"
  ],
  "constraints": [
        "Must include all belt speeds",
        "Must track all product positions",
        "Must include sensor readings",
        "Must track belt occupancy status",
        "Must include time since last product generation"
  ],
  "dependencies": [
        "gymnasium.spaces"
  ],
  "acceptance_criteria": [
        "Observation space correctly defined in Gymnasium format",
        "All required state information included",
        "Proper scaling of observation values",
        "Correct dimensionality of observation space"
  ],
  "lifecycle_stage": "Design",
  "created_at": "2024-11-04T14:16:27.293973",
  "updated_at": null,
  "implemented_at": null
  },
  {
  "req_id": 3,
  "reqdep_id": 1,
  "short_name": "Action_Space_Definition",
  "description": "Implement continuous action space for controlling
  correction belt speeds with constraints on velocity and acceleration, following
  5th-order polynomial profiles.",
  "req_type": "Functional",
  "inputs": [
        "velocity_limits",
        "acceleration_limits",
        "outfeed_speed"
  ],
  "outputs": [
        "action_space_object",
        "motion_profiles"
  ],
  "constraints": [
        "Must be continuous action space",
        "Must enforce maximum/minimum velocity limits",
        "Must enforce maximum/minimum acceleration limits",
        "Must use 5th-order polynomial profiles",
        "Must synchronize with outfeed belt speed at start/end"
  ],
  "dependencies": null,
  "acceptance_criteria": [
        "Action space correctly defined in Gymnasium format",
        "Velocity and acceleration limits enforced",
        "5th-order polynomial profiles implemented",
        "Proper synchronization with outfeed belt"
  ],
  "lifecycle_stage": "Design",
  "created_at": "2024-11-04T14:16:27.293973",
  "updated_at": null,
  "implemented_at": null
  },
  {
  "req_id": 4,
  "reqdep_id": 1,
  "short_name": "Product Generation_System",
  "description": "Implement system for generating products at random
  intervals on the infeed belt with appropriate spacing and initial conditions.",
  "req_type": "Functional",
  "inputs": [
        "infeed_belt_speed",
        "outfeed_finger_positions",
        "time_step"
  ],
  "outputs": [
        "product_instances",
        "generation_timestamps"
  ],
  "constraints": [
        "Products must be generated at random intervals",
        "Products must have appropriate spacing to avoid collisions",
        "Products must align with available outfeed positions",
        "Initial product speed must match infeed belt speed"
  ],
  "dependencies": null,
  "acceptance_criteria": [
        "Products generated at appropriate intervals",
        "No collisions between products",
        "Products correctly aligned with outfeed positions",
        "Proper initial conditions for each product"
  ],
  "lifecycle_stage": "Design",
  "created_at": "2024-11-04T14:16:27.293973",
  "updated_at": null,
  "implemented_at": null
  },
  {
  "req_id": 5,
  "reqdep_id": 1,
  "short_name": "Visualization_System",
  "description": "Implement PyGame-based visualization system for ren-
  dering the simulation state, including color-coded belts, products, and motion
  indicators.",
  "req_type": "Functional",
  "inputs": [
        "environment_state",
        "product_positions",
        "belt_speeds"
  ],
  "outputs": [
        "rendered_frame"
  ],
  "constraints": [
        "Must use PyGame",
        "Must implement color coding for belts",
        "Must show products with random colors",
        "Must include frame delay after rendering",
        "Must visualize fingers/baffles on outfeed belt"
  ],
  "dependencies": [
        "pygame"
  ],
  "acceptance_criteria": [
        "Correct visualization of all components",
        "Smooth animation of movement",
        "Proper color coding implemented",
        "Frame delay functioning correctly"
  ],
  "lifecycle_stage": "Design",
  "created_at": "2024-11-04T14:16:27.293973",
  "updated_at": null,
  "implemented_at": null
  }
  ]
  }
```

Here are the dependencies:
gymnasium==1.0.0a2
numpy==2.1.3
pygame==2.6.1
ray[rllib]==2.9.3
torch==2.5.1
wandb==0.9.7
tensorboard==2.9.1

Here is the an UML class diagram:

```
 {
 "title": "Smart Infeed System Environment Architecture",
 "description": "Class diagram for a Gymnasium-compatible smart infeed system
 simulation environment",
 "classes": [
 {
  "name": "SmartInfeedEnv",
  "stereotype": null,
  "description": "Main environment class implementing the Gymnasium in-
  terface" ,
  "attributes": [
        {
             "name": "num_belts",
             "type": "int",
             "is_optional": false,
             "default": 5,
             "visibility": "public"
        },
        {
             "name": "belt_dimensions",
             "type": "Dict[str, float]",
             "is_optional": false,
             "default": null,
             "visibility": "public"
        },
        {
             "name": "belt_speeds",
             "type": "Dict[str, float]",
             "is_optional": false,
             "default": null,
             "visibility": "public"
        },
        {
             "name": "observation_space",
             "type": "spaces.Dict",
             "is_optional": false,
             "default": null,
             "visibility": "public"
        },
        {
             "name": "action_space",
             "type": "spaces.Box",
             "is_optional": false,
             "default": null,
             "visibility": "public"
        }
  ],
  "methods": [
        {
             "name": "_init_",
             "return_type": "None",
             "parameters": [
                  {
                       "name": "num_belts",
                       "type": "int",
                       "is_optional": true,
                       "default": "5",
                       "visibility": "public"
                  },
                  {
                       "name": "render_mode",
                       "type": "Optional[str]",
                       "is_optional": true,
                       "default": "None",
                       "visibility": "public"
                  }
             ],
             "visibility": "public"
        },
        {
             "name": "step",
             "return_type": "Tuple[ObsType, float, bool, bool, dict]",
             "parameters": [
                  {
                       "name": "action",
                       "type": "np.ndarray",
                       "is_optional": false,
                       "default": null,
                       "visibility": "public"
                  }
             ],
             "visibility": "public"
        },
        {
             "name": "reset",
             "return_type": "Tuple[ObsType, dict]",
             "parameters": [
                  {
                       "name": "seed",
                       "type": "Optional[int]",
                       "is_optional": true,
                       "default": null,
                       "visibility": "public"
                  },
                  {
                       "name": "options",
                       "type": "Optional[dict]",
                       "is_optional": true,
                       "default": null,
                       "visibility": "public"
                  }
             ],
             "visibility": "public"
        },
        {
             "name": "render",
             "return_type": "Optional[np.ndarray]",
             "parameters": [],
             "visibility": "public"
        },
        {
             "name": "close",
             "return_type": "None",
             "parameters": [],
             "visibility": "public"
        }
  ],
  "is_abstract": false,
  "superclass": null
  },
  {
  "name": "ConveyorBelt",
  "stereotype": null,
  "description": "Represents a single conveyor belt in the system",
  "attributes": [
        {
             "name": "length",
             "type": "float",
             "is_optional": false,
             "default": null,
             "visibility": "public"
        },
        {
             "name": "width",
             "type": "float",
             "is_optional": false,
             "default": null,
             "visibility": "public"
        },
        {
             "name": "speed",
             "type": "float",
             "is_optional": false,
             "default": null,
             "visibility": "public"
        },
        {
             "name": "belt_type",
             "type": "str",
             "is_optional": false,
             "default": null,
             "visibility": "public"
        },
        {
             "name": "position",
             "type": "np.ndarray",
             "is_optional": false,
             "default": null,
             "visibility": "public"
        }
  ],
  "methods": [
        {
             "name": "update_speed",
             "return_type": "None",
             "parameters": [
                  {
                       "name": "new_speed",
                       "type": "float",
                       "is_optional": false,
                       "default": null,
                       "visibility": "public"
                  }
             ],
             "visibility": "public"
        },
        {
             "name": "get_state",
             "return_type": "Dict[str, Any]",
             "parameters": [],
             "visibility": "public"
        }
  ],
  "is_abstract": false,
  "superclass": null
  },
  {
  "name": "Product",
  "stereotype": null,
  "description": "Represents a product moving through the system",
  "attributes": [
        {
             "name": "position",
             "type": "np.ndarray",
             "is_optional": false,
             "default": null,
             "visibility": "public"
        },
        {
             "name": "velocity",
             "type": "float",
             "is_optional": false,
             "default": null,
             "visibility": "public"
        },
        {
             "name": "color",
             "type": "Tuple[int, int, int]",
             "is_optional": false,
             "default": null,
             "visibility": "public"
        },
        {
             "name": "id",
             "type": "int",
             "is_optional": false,
             "default": null,
             "visibility": "public"
        }
  ],
  "methods": [
        {
             "name": "update_position",
             "return_type": "None",
             "parameters": [
                  {
                       "name": "dt",
                       "type": "float",
                       "is_optional": false,
                       "default": null,
                       "visibility": "public"
                  }
             ],
             "visibility": "public"
        }
  ],
  "is_abstract": false,
  "superclass": null
  },
  {
  "name": "ProductGenerator",
  "stereotype": null,
  "description": "Handles product generation and timing",
  "attributes": [
        {
             "name": "min_interval",
             "type": "float",
             "is_optional": false,
             "default": null,
             "visibility": "public"
        },
        {
             "name": "max_interval",
             "type": "float",
             "is_optional": false,
             "default": null,
             "visibility": "public"
        },
        {
             "name": "time_since_last",
             "type": "float",
             "is_optional": false,
             "default": null,
             "visibility": "public"
        }
  ],
  "methods": [
        {
             "name": "should_generate",
             "return_type": "bool",
             "parameters": [
                  {
                       "name": "dt",
                       "type": "float",
                       "is_optional": false,
                       "default": null,
                       "visibility": "public"
                  }
             ],
             "visibility": "public"
        },
        {
             "name": "generate_product",
             "return_type": "Product",
             "parameters": [],
             "visibility": "public"
        }
  ],
  "is_abstract": false,
  "superclass": null
  },
  {
  "name": "Renderer",
  "stereotype": null,
  "description": "Handles visualization using PyGame",
  "attributes": [
        {
             "name": "screen",
             "type": "pygame.Surface",
             "is_optional": false,
             "default": null,
             "visibility": "public"
        },
        {
             "name": "width",
             "type": "int",
             "is_optional": false,
             "default": null,
             "visibility": "public"
        },
        {
             "name": "height",
             "type": "int",
             "is_optional": false,
             "default": null,
             "visibility": "public"
        },
        {
             "name": "scale",
             "type": "float",
             "is_optional": false,
             "default": null,
             "visibility": "public"
        }
  ],
  "methods": [
        {
             "name": "render_frame",
             "return_type": "np.ndarray",
             "parameters": [
                  {
                       "name": "state",
                       "type": "Dict[str, Any]",
                       "is_optional": false,
                       "default": null,
                       "visibility": "public"
                  }
             ],
             "visibility": "public"
        }
  ],
  "is_abstract": false,
  "superclass": null
  },
  {
  "name": "MotionProfileGenerator",
  "stereotype": null,
  "description": "Generates 5th order polynomial motion profiles",
  "attributes": [
        {
             "name": "velocity_limits",
             "type": "Tuple[float, float]",
             "is_optional": false,
             "default": null,
             "visibility": "public"
        },
        {
             "name": "acceleration_limits",
             "type": "Tuple[float, float]",
             "is_optional": false,
             "default": null,
             "visibility": "public"
        }
  ],
  "methods": [
        {
             "name": "generate_profile",
             "return_type": "np.ndarray",
             "parameters": [
                  {
                       "name": "start_speed",
                       "type": "float",
                       "is_optional": false,
                       "default": null,
                       "visibility": "public"
                  },
                  {
                       "name": "end_speed",
                       "type": "float",
                       "is_optional": false,
                       "default": null,
                       "visibility": "public"
                  },
                  {
                       "name": "duration",
                       "type": "float",
                       "is_optional": false,
                       "default": null,
                       "visibility": "public"
                  }
             ],
             "visibility": "public"
        }
  ],
  "is_abstract": false,
  "superclass": null
  }
  ],
  "relationships": [
  {
  "source": "SmartInfeedEnv",
  "target": "ConveyorBelt",
  "source_role": null,
  "target_role": null,
  "relationship_type": "composition",
  "multiplicity_source": "1",
  "multiplicity_target": "3..*",
  "description": null,
  "is_bidirectional": false
  },
  {
  "source": "SmartInfeedEnv",
  "target": "Product",
  "source_role": null,
  "target_role": null,
  "relationship_type": "aggregation",
  "multiplicity_source": "1",
  "multiplicity_target": "0..*",
  "description": null,
  "is_bidirectional": false
  },
  {
  "source": "SmartInfeedEnv",
  "target": "ProductGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "Renderer",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "MotionProfileGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "ProductGenerator",
  "target": "Product",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "ConveyorBelt",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "Product",
  "source_role": null,
  "target_role": null,
  "relationship_type": "dependency",
  "multiplicity_source": null,
  "multiplicity_target": null,
  "description": null,
  "is_bidirectional": false
  }
  ]
  }
  
```

Here is an UML state diagram:

```
{
 "title": "Smart Infeed Environment State Diagram",
 "description": "State diagram showing the lifecycle and transitions of the
 Smart Infeed Environment simulation",
 "states": [
 {
  "name": "Initialized",
  "state_type": "initial",
  "entry_action": "Initialize environment parameters",
  "exit_action": "Validate configuration"
  },
  {
  "name": "Ready",
  "state_type": "normal",
  "entry_action": "Reset state variables",
  "exit_action": "Prepare action space"
  },
  {
  "name": "Running",
  "state_type": "normal",
  "entry_action": "Start simulation clock",
  "exit_action": "Update observation space"
  },
  {
  "name": "ProductGenerating",
  "state_type": "normal",
  "entry_action": "Calculate generation timing",
  "exit_action": "Update product count"
  },
  {
  "name": "BeltSpeedAdjusting",
  "state_type": "normal",
  "entry_action": "Generate motion profile",
  "exit_action": "Validate motion constraints"
  },
  {
  "name": "Rendering",
  "state_type": "normal",
  "entry_action": "Update display",
  "exit_action": "Process frame delay"
  },
  {
  "name": "Paused",
  "state_type": "normal",
  "entry_action": "Suspend simulation",
  "exit_action": "Resume clock"
  },
  {
  "name": "Terminated",
  "state_type": "final",
  "entry_action": "Clean up resources",
  "exit_action": null
  }
  ],
  "transitions": [
  {
  "source": "Initialized",
  "target": "Ready",
  "event": "reset()",
  "action": "Reset environment state",
  "guard": "Configuration valid"
  },
  {
  "source": "Ready",
  "target": "Running",
  "event": "step()",
  "action": "Process first action",
  "guard": "Action space valid"
  },
  {
  "source": "Running",
  "target": "ProductGenerating",
  "event": "time_check",
  "action": "Check product generation conditions",
  "guard": "Generation interval elapsed"
  },
  {
  "source": "Running",
  "target": "BeltSpeedAdjusting",
  "event": "step()",
  "action": "Process speed adjustment action",
  "guard": "Valid action received"
  },
  {
  "source": "ProductGenerating",
  "target": "Running",
  "event": "product_generated",
  "action": "Add product to system",
  "guard": "Spacing requirements met"
  },
  {
  "source": "BeltSpeedAdjusting",
  "target": "Running",
  "event": "speed_adjusted",
  "action": "Update belt speeds",
  "guard": "Motion constraints satisfied"
  },
  {
  "source": "Running",
  "target": "Rendering",
  "event": "render()",
  "action": "Update visualization",
  "guard": "Render mode enabled"
  },
  {
  "source": "Rendering",
  "target": "Running",
  "event": "frame_complete",
  "action": "Return render frame",
  "guard": null
  },
  {
  "source": "Running",
  "target": "Paused",
  "event": "pause_simulation",
  "action": "Pause clock",
  "guard": null
  },
  {
  "source": "Paused",
  "target": "Running",
  "event": "resume_simulation",
  "action": "Resume clock",
  "guard": null
  },
  {
  "source": "Running",
  "target": "Terminated",
  "event": "closed",
  "action": "Terminate simulation",
  "guard": null
  },
  {
  "source": "Running",
  "target": "Ready",
  "event": "reset()",
  "action": "Reset environment state",
  "guard": null
  },
  {
  "source": "Paused",
  "target": "Terminated",
  "event": "close()",
  "action": "Terminate simulation",
  "guard": null
  }
  ]
  }
  
```

Here is an UML sequence diagram:

```
{
 "title": "Smart Infeed Environment Sequence Diagram",
 "description": "Key interactions between components during environment ini-
 tialization, stepping, and reset operations",
 "participants": [
 {
  "name": "SmartInfeedEnv",
  "type": "class"
  },
  {
  "name": "ConveyorBelt",
  "type": "class"
  },
  {
  "name": "ProductGenerator",
  "type": "class"
  },
  {
  "name": "MotionProfileGenerator",
  "type": "class"
  },
  {
  "name": "Product",
  "type": "class"
  },
  {
  "name": "Renderer",
  "type": "class"
  }
  ],
  "messages": [
  {
  "sender": "SmartInfeedEnv",
  "receiver": "SmartInfeedEnv",
  "message": "_init_(num_belts=5, render_mode=None)",
  "message_type": "synchronous",
  "guard": null
  },
  {
  "sender": "SmartInfeedEnv",
  "receiver": "ConveyorBelt",
  "message": "_init_(length, width, speed, belt_type='infeed')",
  "message_type": "synchronous",
  "guard": null
  },
  {
  "sender": "SmartInfeedEnv",
  "receiver": "ConveyorBelt",
  "message": "_init_(length, width, speed, belt_type='correction')",
  "message_type": "synchronous",
  "guard": "for each correction belt"
  },
  {
  "sender": "SmartInfeedEnv",
  "receiver": "ConveyorBelt",
  "message": "_init_(length, width, speed, belt_type='outfeed')",
  "message_type": "synchronous",
  "guard": null
  },
  {
  "sender": "SmartInfeedEnv",
  "receiver": "ProductGenerator",
  "message": "_init_(min_interval, max_interval)",
  "message_type": "synchronous",
  "guard": null
  },
  {
  "sender": "SmartInfeedEnv",
  "receiver": "MotionProfileGenerator",
  "message": "_init_(velocity_limits, acceleration_limits)",
  "message_type": "synchronous",
  "guard": null
  },
  {
  "sender": "SmartInfeedEnv",
  "receiver": "Renderer",
  "message": "_init_(width, height, scale)",
  "message_type": "synchronous",
  "guard": "if render_mode is not None"
  },
  {
  "sender": "SmartInfeedEnv",
  "receiver": "SmartInfeedEnv",
  "message": "step(action: np.ndarray)",
  "message_type": "synchronous",
  "guard": null
  },
  {
  "sender": "SmartInfeedEnv",
  "receiver": "MotionProfileGenerator",
  "message": "generate_profile(start_speed, end_speed, duration)",
  "message_type": "synchronous",
  "guard": null
  },
  {
  "sender": "SmartInfeedEnv",
  "receiver": "ConveyorBelt",
  "message": "update_speed(new_speed)",
  "message_type": "synchronous",
  "guard": "for each correction belt"
  },
  {
  "sender": "SmartInfeedEnv",
  "receiver": "ProductGenerator",
  "message": "should_generate(dt)",
  "message_type": "synchronous",
  "guard": null
  },
  {
  "sender": "ProductGenerator",
  "receiver": "Product",
  "message": "_init_(position, velocity, color, id)",
  "message_type": "synchronous",
  "guard": "if should_generate"
  },
  {
  "sender": "SmartInfeedEnv",
  "receiver": "Product",
  "message": "update_position(dt)",
  "message_type": "synchronous",
  "guard": "for each active product"
  },
  {
  "sender": "SmartInfeedEnv",
  "receiver": "Renderer",
  "message": "render_frame(state)",
  "message_type": "synchronous",
  "guard": "if render_mode is not None"
  },
  {
  "sender": "SmartInfeedEnv",
  "receiver": "SmartInfeedEnv",
  "message": "reset(seed=None, options=None)",
  "message_type": "synchronous",
  "guard": null
  },
  {
  "sender": "SmartInfeedEnv",
  "receiver": "ConveyorBelt",
  "message": "update_speed(default_speed)",
  "message_type": "synchronous",
  "guard": "for each belt"
  },
  {
  "sender": "SmartInfeedEnv",
  "receiver": "ProductGenerator",
  "message": "_init_(min_interval, max_interval)",
  "message_type": "synchronous",
  "guard": null
  },
  {
  "sender": "SmartInfeedEnv",
  "receiver": "MotionProfileGenerator",
  "message": "_init_(velocity_limits, acceleration_limits)",
  "message_type": "synchronous",
  "guard": null
  }
  ]
  }
```

Here is some relevant knowledge: Here is a rough sketch how environments in Gymnasium are implemented:

```
import gymnasium
 from gymnasium import spaces
 import numpy as np
 class ExampleEnv(gymnasium.Env):
 ʺʺʺ Example environment class that follows the Gymnasium API for reinforcement
 learning.
 This environment defines how to interact with the environment through 'step',
 'reset', 'render', and 'close' methods.
 ʺʺʺ
 def _init_(self) :
 ʺʺʺ
 Initialize the environment.
 This method should set up the action and observation spaces, and initial-
 ize any environment state.
 ʺʺʺ
 super () . _init_ ()
 # TODO: Implement
 def step(self, action):
 ʺʺʺ
 Step through the environment with the given action.
 Args:
  action (ActType): The action taken by the agent.
  Returns:
  observation (ObsType): The next observation of the environment.
  reward (float): The reward for the action.
  terminated (bool): Whether the episode has ended due to reaching a
  terminal state.
  truncated (bool): Whether the episode was truncated due to time limit
  or other reasons.
  info (diet): Additional diagnostic information.
  # TODO: Implement
  return observation, reward, terminated, truncated, info
  def reset(self, seed=None, options=None):
  ʺʺʺ
  Reset the environment to its initial state.
  Args:
  seed (int, optional): The random seed for reproducibility.
  options (diet, optional): Additional options for resetting the envi-
  ronment.
  Returns:
  observation (ObsType): The initial observation of the environment.
  info (diet): Additional diagnostic information.
  ʺʺʺ super().reset(seed=seed) # Initialize RNG
  # TODO: Implement
  return observation, info
  def render (self):
  ʺʺʺ
  Render the environment. Different render modes can be supported based on
  the 'render_mode' argument passed
  during environment initialization.
  Returns:
  None, or the rendered output (depending on render mode).
  ʺʺʺ # TODO: Implement
  def close(self):
  ʺʺʺ
  Close the environment, cleaning up any resources used.
  This is important for environments using external resources like render-
  ing windows.
  ʺʺʺ
  # TODO: Implement
  - In order to ensure that pygame renders - if using pygame - make sure to call
  'pygame.event.get()' at the beginning of the loop. This will ensure that the win-
  dow is rendered correctly.
  - Add assert statements whereever appropriate. This will help bugs finding a lot.
  - If you want to use scikit-learn, keep in mind that the dependency is 'scikit-
  learn' but the import is 'sklearn'.
  - Make sure that observation spaces and action spaces are always in their speci-
  fied bounds.
  - When you implement an environment always write a test method at the end of the
  source code file that would run the environment with random actions for 10000
  steps and renders it.
  Here are the names of the classes that we will generate tasks for: '['Conveyor-
  Belt', 'Product', 'ProductGenerator', 'MotionProfileGenerator', 'Renderer',
  'SmartInfeedEnv']'
  Here is the task list, we have so far:
  implementation_tasks=[]
  
```

Based on these uses cases and specifications, generate a task list for developing Python source code for the gymnasium environment.

Make sure that there is at least one task for each use case.

If needed, there can be more then one task for a single use case.

Write only tasks for the class ConveyorBelt. We will write tasks for the remaining classes later. Do not repeat tasks we already have.

The output should be formatted as a JSON instance that conforms to the JSON schema below.

As an example, for the schema {"properties": {"foo": {"title": "Foo", "description": "a list of strings", "type": "array", "items": {"type": "string"}}}, "required": ["foo"]} the object {"foo": ["bar", "baz"]} is a well-formatted instance of the schema. The object {"properties": {"foo": ["bar", "baz"]}} is not well-formatted.

Here is the output schema:
{"$defs": {"ImplementClassTask": {"properties": {"task_id": {"description": "The id of the task", "title": "Task Id", "type": "integer"}, "usecase_id": {"description": "The usecase id to which the task belongs", "title": "Usecase Id", "type": "integer"}, "task_type": {"description": "The type of task", "title": "Task Type", "type": "string"}, "task_data": {"description": "The data for the task", "title": "Task Data", "type": "object"}, "task_information": {"description": "The information for the task. Human readable.", "title": "Task Information", "type": "string"}, "class_name": {"description": "The name of the class.", "title": "Class Name", "type": "string"}, "variables": {"description": "The variables for the class. Names and types.", "items": {"type": "string"}, "title": "Variables", "type": "array"}}, "required": ["task_id", "usecase_id", "task_type", "task_data", "task_information", "class_name", "variables"], "title": "ImplementClassTask", "type": "object"}, "ImplementImportsTask": {"properties": {"task_id": {"description": "The id of the task", "title": "Task Id", "type": "integer"}, "usecase_id": {"description": "The usecase id to which the task belongs", "title": "Usecase Id", "type": "integer"}, "task_type": {"description": "The type of task", "title": "Task Type", "type": "string"}, "task_data": {"description": "The data for the task", "title": "Task Data", "type": "object"}, "task_information": {"description": "The information for the task. Human readable.", "title": "Task Information", "type": "string"}, "import_names": {"description": "The names of the imports", "items": {"type": "string"}, "title": "Import Names", "type": "array"}}, "required": ["task_id", "usecase_id", "task_type", "task_data", "task_information", "import_names"], "title": "ImplementImportsTask", "type": "object"}, "ImplementInstanceMethodTask": {"properties": {"task_id": {"description": "The id of the task", "title": "Task Id", "type": "integer"}, "usecase_id": {"description": "The usecase id to which the task belongs", "title": "Usecase Id", "type": "integer"}, "task_type": {"description": "The type of task", "title": "Task Type", "type": "string"}, "task_data": {"description": "The data for the task", "title": "Task Data", "type": "object"}, "task_information": {"description": "The information for the task. Human readable.", "title": "Task Information", "type": "string"}, "class_name": {"description": "The name of the class", "title": "Class Name", "type": "string"}, "method_name": {"description": "The name of the method that is in the class", "title": "Method Name", "type": "string"}, "method_parameters": {"description": "The parameters for the method. Names and types.", "items": {"type": "string"}, "title": "Method Parameters", "type": "array"}, "method_description": {"description": "The description of the method. Human readable. Technically sound. Very detained. No ambiguity. No code.", "title": "Method Description", "type": "string"}}, "required": ["task_id", "usecase_id", "task_type", "task_data", "task_information", "class_name", "method_name", "method_parameters", "method_description"], "title": "ImplementInstanceMethodTask", "type": "object"}, "ImplementOutsideFunctionTask": {"properties": {"task_id": {"description": "The id of the task", "title": "Task Id", "type": "integer"}, "usecase_id": {"description": "The usecase id to which the task belongs", "title": "Usecase Id", "type": "integer"}, "task_type": {"description": "The type of task", "title": "Task Type", "type": "string"}, "task_data": {"description": "The data for the task", "title": "Task Data", "type": "object"}, "task_information": {"description": "The information for the task. Human readable.", "title": "Task Information", "type": "string"}, "method_name": {"description": "The name of the method that is outside of all classes", "title": "Method Name", "type": "string"}, "method_parameters": {"description": "The parameters for the method. Names and types.", "items": {"type": "string"}, "title": "Method Parameters", "type": "array"}, "method_description": {"description": "The description of the method. Human readable. Technically sound. Very detained. No ambiguity. No code.", "title": "Method Description", "type": "string"}}, "required": ["task_id", "usecase_id", "task_type", "task_data", "task_information", "method_name", "method_parameters", "method_description"], "title": "ImplementOutsideFunctionTask", "type": "object"}}, "properties": {"implementation_tasks": {"description": "The list of implementation tasks", "items": {"anyOf": [{"$ref": "#/$defs/ImplementImportsTask"}, {"$ref": "#/$defs/ImplementClassTask"}, {"$ref": "#/$defs/ImplementInstanceMethodTask"}, {"$ref": "#/$defs/ImplementOutsideFunctionTask"}]}, "title": "Implementation Tasks", "type": "array"}}, "required": ["implementation_tasks"]}

The response of the Planning Agent can be the following task list:
I'll help create implementation tasks for the ConveyorBelt class based on the use cases and specifications. This class is fundamental to the environment and appears in several use cases, particularly UC1-3 which deal with belt configuration and parameters.

Here's the task list formatted according to the schema:

```
 ' ' 'json
 {
 "implementation_tasks": [
 {
  "task_id": 1,
  "usecase_id": 1,
  "task_type": "imports",
  "task_data": {},
  "task_information": "Import required packages for ConveyorBelt class
  implementation",
  "import_names": [
        "numpy",
        "typing",
        "dataclasses",
        "enum"
  ]
  },
  {
  "task_id": 2,
  "usecase_id": 1,
  "task_type": "class",
  "task_data": {},
  "task_information": "Implement the ConveyorBelt class with basic at-
  tributes for belt configuration",
  "class_name": "ConveyorBelt",
  "variables": [
        "length: float",
        "width: float",
        "speed: float",
        "belt_type: str",
        "position: np.ndarray",
        "max_speed: float",
        "min_speed: float"
  ]
  },
  {
  "task_id": 3,
  "usecase_id": 1,
  "task_type": "instance_method",
  "task_data": {},
  "task_information": "Implement initialization method for ConveyorBelt
  class",
  "class_name": "ConveyorBelt",
  "method_name": "_init_",
  "method_parameters": [
        "self",
        "length: float",
        "width: float",
        "speed: float",
        "belt_type: str",
        "position: np.ndarray",
        "max_speed: float = 1.0",
        "min_speed: float = 0.0"
  ],
  "method_description": "Initialize a conveyor belt with specified di-
  mensions, speed, and type. Validates input parameters against constraints. Posi-
  tion should be a 2D numpy array representing the belt's position in the environ-
  ment. Belt type must be one of: 'infeed', 'correction', or 'outfeed'. Speed must
  be within min_speed and max_speed bounds."
  },
  {
  "task_id": 4,
  "usecase_id": 3,
  "task_type": "instance_method",
  "task_data": {},
  "task_information": "Implement method to update belt speed with con-
  straints",
  "class_name": "ConveyorBelt",
  "method_name": "update_speed",
  "method_parameters": [
        "self",
        "new_speed: float"
  ],
  "method_description": "Updates the belt speed while ensuring it stays
  within defined bounds (min_speed to max_speed). Raises ValueError if new_speed is
  outside allowed range. Returns True if speed was updated successfully, False oth-
  erwise."
  },
  {
  "task_id": 5,
  "usecase_id": 4,
  "task_type": "instance_method",
  "task_data": {},
  "task_information": "Implement method to get belt state for observa-
  tion space",
  "class_name": "ConveyorBelt",
  "method_name": "get_state",
  "method_parameters": [
        "self"
  ],
  "method_description": "Returns a dictionary containing the current
  state of the belt including: current speed, position, dimensions, type, and nor-
  malized speed (speed/max_speed). This information is used to construct the envi-
  ronment's observation space."
  },
  {
  "task_id": 6,
  "usecase_id": 2,
  "task_type": "instance_method",
  "task_data": {},
  "task_information": "Implement validation method for belt parame-
  ters",
  "class_name": "ConveyorBelt",
  "method_name": "validate_parameters",
  "method_parameters": [
        "self"
  ],
  "method_description": "Validates all belt parameters ensuring: length
  and width are positive, speed is within bounds, position is a valid 2D numpy ar-
  ray, and belt_type is valid. Raises ValueError with appropriate message if any
  parameter is invalid. Called during initialization and parameter updates."
  }
  ]
  }' ' '
  
```

These tasks cover the core functionality needed for the ConveyorBelt class based on the use cases. The tasks include:
1. Setting up required imports
2. Defining the class structure with necessary attributes
3. Implementing initialization with parameter validation
4. Adding speed update functionality with constraints
5. Creating state reporting for observation space
6. Implementing parameter validation

Each task maps to specific use cases and ensures the ConveyorBelt class can fulfill its role in the environment. Would you like me to explain any particular task in more detail?

The task list can iteratively be refined by the Planning Agent multiple times, wherein the previous task list is inserted into the prompt as a variable.

Then, the Coding Agent can be tasked to generate functional Python source code, wherein it can be seen that in the prompt for the Coding Agent, e.g. the UML Diagram, the dependencies and other information can be present. First, the Coding Agent is only tasked to write the beginning of a class definition:
You are an expert Source Code Generator Agent. Your role is to convert design specifications into fully functional Python source code. You are perfectly capable of writing plans for coding and actual coding. You generate Gym-like environments adhering to OpenAI Gym's API standards, ensuring best coding practices, proper use of dependencies, and thorough documentation through comments and docstrings.

Here is the an UML class diagram:

```
 {
 "title": "Smart Infeed System Environment Architecture",
 "description": "Class diagram for a Gymnasium-compatible smart infeed system
 simulation environment",
 "classes": [
 {
  "name": "SmartInfeedEnv",
  "stereotype": null,
  "description": "Main environment class implementing the Gymnasium in-
  terface",
  "attributes": [
        {
             "name": "num_belts",
             "type": "int",
             "is_optional": false,
             "default": 5,
             "visibility": "public"
        },
        {
             "name": "belt_dimensions",
             "type": "Dict[str, float]",
             "is_optional": false,
             "default": null,
             "visibility": "public"
        },
        {
             "name": "belt_speeds",
             "type": "Dict[str, float]",
             "is_optional": false,
             "default": null,
             "visibility": "public"
        },
        {
             "name": "observation_space",
             "type": "spaces.Dict",
             "is_optional": false,
             "default": null,
             "visibility": "public"
        },
        {
             "name": "action_space",
             "type": "spaces.Box",
             "is_optional": false,
             "default": null,
             "visibility": "public"
        }
  ],
  "methods": [
        {
             "name": "_init_",
             "return_type": "None",
             "parameters": [
                  {
                       "name": "num_belts",
                       "type": "int",
                       "is_optional": true,
                       "default": "5",
                       "visibility": "public"
                  },
                  {
                       "name": "render_mode",
                       "type": "Optional[str]",
                       "is_optional": true,
                       "default": "None",
                       "visibility": "public"
                  }
             ],
             "visibility": "public"
        },
        {
             "name": "step",
             "return_type": "Tuple[ObsType, float, bool, bool, dict]",
             "parameters": [
                  {
                       "name": "action",
                       "type": "np.ndarray",
                       "is_optional": false,
                       "default": null,
                       "visibility": "public"
                  }
             ],
             "visibility": "public"
        },
        {
             "name": "reset",
             "return_type": "Tuple[ObsType, dict]",
             "parameters": [
                  {
                       "name": "seed",
                       "type": "Optional[int]",
                       "is_optional": true,
                       "default": null,
                       "visibility": "public"
                  },
                  {
                       "name": "options",
                       "type": "Optional[dict]",
                       "is_optional": true,
                       "default": null,
                       "visibility": "public"
                  }
             ],
             "visibility": "public"
        },
        {
             "name": "render",
             "return_type": "Optional[np.ndarray]",
             "parameters": [],
             "visibility": "public"
        },
        {
             "name": "close",
             "return_type": "None",
             "parameters": [],
             "visibility": "public"
        }
  ],
  "is_abstract": false,
  "superclass": null
  },
  {
  "name": "ConveyorBelt",
  "stereotype": null,
  "description": "Represents a single conveyor belt in the system",
  "attributes": [
        {
             "name": "length",
             "type": "float",
             "is_optional": false,
             "default": null,
             "visibility": "public"
        },
        {
             "name": "width",
             "type": "float",
             "is_optional": false,
             "default": null,
             "visibility": "public"
        },
        {
             "name": "speed",
             "type": "float",
             "is_optional": false,
             "default": null,
             "visibility": "public"
        },
        {
             "name": "belt_type",
             "type": "str",
             "is_optional": false,
             "default": null,
             "visibility": "public"
        },
        {
             "name": "position",
             "type": "np.ndarray",
             "is_optional": false,
             "default": null,
             "visibility": "public"
        }
  ],
  "methods": [
        {
             "name": "update_speed",
             "return_type": "None",
             "parameters": [
                  {
                       "name": "new_speed",
                       "type": "float",
                       "is_optional": false,
                       "default": null,
                       "visibility": "public"
                  }
             ],
             "visibility": "public"
        },
        {
             "name": "get_state",
             "return_type": "Dict[str, Any]",
             "parameters": [],
             "visibility": "public"
        }
  ],
  "is_abstract": false,
  "superclass": null
  },
  {
  "name": "Product",
  "stereotype": null,
  "description": "Represents a product moving through the system",
  "attributes": [
        {
             "name": "position",
             "type": "np.ndarray",
             "is_optional": false,
             "default": null,
             "visibility": "public"
        },
        {
             "name": "velocity",
             "type": "float",
             "is_optional": false,
             "default": null,
             "visibility": "public"
        },
        {
             "name": "color",
             "type": "Tuple[int, int, int]",
             "is_optional": false,
             "default": null,
             "visibility": "public"
        },
        {
             "name": "id",
             "type": "int",
             "is_optional": false,
             "default": null,
             "visibility": "public"
        }
  ],
  "methods": [
        {
             "name": "update_position",
             "return_type": "None",
             "parameters": [
                  {
                       "name": "dt",
                       "type": "float",
                       "is_optional": false,
                       "default": null,
                       "visibility": "public"
                  }
             ],
             "visibility": "public"
        }
  ],
  "is_abstract": false,
  "superclass": null
  },
  {
  "name": "ProductGenerator",
  "stereotype": null,
  "description": "Handles product generation and timing",
  "attributes": [
        {
             "name": "min_interval",
             "type": "float",
             "is_optional": false,
             "default": null,
             "visibility": "public"
        },
        {
             "name": "max_interval",
             "type": "float",
             "is_optional": false,
             "default": null,
             "visibility": "public"
        },
        {
             "name": "time_since_last",
             "type": "float",
             "is_optional": false,
             "default": null,
             "visibility": "public"
        }
  ],
  "methods": [
        {
             "name": "should_generate",
             "return_type": "bool",
             "parameters": [
                  {
                       "name": "dt",
                       "type": "float",
                       "is_optional": false,
                       "default": null,
                       "visibility": "public"
                  }
             ],
             "visibility": "public"
        },
        {
             "name": "generate_product",
             "return_type": "Product",
             "parameters": [],
             "visibility": "public"
        }
  ],
  "is_abstract": false,
  "superclass": null
  },
  {
  "name": "Renderer",
  "stereotype": null,
  "description": "Handles visualization using PyGame",
  "attributes": [
        {
             "name": "screen",
             "type": "pygame.Surface",
             "is_optional": false,
             "default": null,
             "visibility": "public"
        },
        {
             "name": "width",
             "type": "int",
             "is_optional": false,
             "default": null,
             "visibility": "public"
        },
        {
             "name": "height",
             "type": "int",
             "is_optional": false,
             "default": null,
             "visibility": "public"
        },
        {
             "name": "scale",
             "type": "float",
             "is_optional": false,
             "default": null,
             "visibility": "public"
        }
  ],
  "methods": [
        {
             "name": "render_frame",
             "return_type": "np.ndarray",
             "parameters": [
                  {
                       "name": "state",
                       "type": "Dict[str, Any]",
                       "is_optional": false,
                       "default": null,
                       "visibility": "public"
                  }
             ],
             "visibility": "public"
        }
  ],
  "is_abstract": false,
  "superclass": null
  },
  {
  "name": "MotionProfileGenerator",
  "stereotype": null,
  "description": "Generates 5th order polynomial motion profiles",
  "attributes": [
        {
             "name": "velocity_limits",
             "type": "Tuple[float, float]",
             "is_optional": false,
             "default": null,
             "visibility": "public"
        },
        {
             "name": "acceleration_limits",
             "type": "Tuple[float, float]",
             "is_optional": false,
             "default": null,
             "visibility": "public"
        }
  ],
  "methods": [
        {
             "name": "generate_profile",
             "return_type": "np.ndarray",
             "parameters": [
                  {
                       "name": "start_speed",
                       "type": "float",
                       "is_optional": false,
                       "default": null,
                       "visibility": "public"
                  },
                  {
                       "name": "end_speed",
                       "type": "float",
                       "is_optional": false,
                       "default": null,
                       "visibility": "public"
                  },
                  {
                       "name": "duration",
                       "type": "float",
                       "is_optional": false,
                       "default": null,
                       "visibility": "public"
                  }
             ],
             "visibility": "public"
        }
  ],
  "is_abstract": false,
  "superclass": null
  }
  ],
  "relationships": [
  {
  "source": "SmartInfeedEnv",
  "target": "ConveyorBelt",
  "source_role": null,
  "target_role": null,
  "relationship_type": "composition",
  "multiplicity_source": "1",
  "multiplicity_target": "3..*",
  "description": null,
  "is_bidirectional": false
  },
  {
  "source": "SmartInfeedEnv",
  "target": "Product",
  "source_role": null,
  "target_role": null,
  "relationship_type": "aggregation",
  "multiplicity_source": "1",
  "multiplicity_target": "0..*",
  "description": null,
  "is_bidirectional": false
  },
  {
  "source": "SmartInfeedEnv",
  "target": "ProductGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "Renderer",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "MotionProfileGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "ProductGenerator",
  "target": "Product",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "ConveyorBelt",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "Product",
  "source_role": null,
  "target_role": null,
  "relationship_type": "dependency",
  "multiplicity_source": null,
  "multiplicity_target": null,
  "description": null,
  "is_bidirectional": false
  }
  ]
  }
  
```

Here is an UML state diagram:

```
{
 "title": "Smart Infeed Environment State Diagram",
 "description": "State diagram showing the lifecycle and transitions of the
 Smart Infeed Environment simulation",
 "states": [
 {
  "name": "Initialized",
  "state_type": "initial",
  "entry_action": "Initialize environment parameters",
  "exit_action": "Validate configuration"
  },
  {
  "name": "Ready",
  "state_type": "normal",
  "entry_action": "Reset state variables",
  "exit_action": "Prepare action space"
  },
  {
  "name": "Running",
  "state_type": "normal",
  "entry_action": "Start simulation clock",
  "exit_action": "Update observation space"
  },
  {
  "name": "ProductGenerating",
  "state_type": "normal",
  "entry_action": "Calculate generation timing",
  "exit_action": "Update product count"
  },
  {
  "name": "BeltSpeedAdjusting",
  "state_type": "normal",
  "entry_action": "Generate motion profile",
  "exit_action": "Validate motion constraints"
  },
  {
  "name": "Rendering",
  "state_type": "normal",
  "entry_action": "Update display",
  "exit_action": "Process frame delay"
  },
  {
  "name": "Paused",
  "state_type": "normal",
  "entry_action": "Suspend simulation",
  "exit_action": "Resume clock"
  },
  {
  "name": "Terminated",
  "state_type": "final",
  "entry_action": "Clean up resources",
  "exit_action": null
  }
  ],
  "transitions": [
  {
  "source": "Initialized",
  "target": "Ready",
  "event": "reset()",
  "action": "Reset environment state",
  "guard": "Configuration valid"
  },
  {
  "source": "Ready",
  "target": "Running",
  "event": "step()",
  "action": "Process first action",
  "guard": "Action space valid"
  },
  {
  "source": "Running",
  "target": "ProductGenerating",
  "event": "time_check",
  "action": "Check product generation conditions",
  "guard": "Generation interval elapsed"
  },
  [...]
  {
  "source": "Paused",
  "target": "Terminated",
  "event": "closed",
  "action": "Terminate simulation",
  "guard": null
  }
  ]
  }
  
```

Here is an UML sequence diagram:

```
 {
 "title": "Smart Infeed Environment Sequence Diagram",
 "description": "Key interactions between components during environment ini-
 tialization, stepping, and reset operations",
 "participants": [
 {
  "name": "SmartInfeedEnv",
  "type": "class"
  },
  {
  "name": "ConveyorBelt",
  "type": "class"
  },
  {
  "name": "ProductGenerator",
  "type": "class"
  },
  {
  "name": "MotionProfileGenerator",
  "type": "class"
  },
  {
  "name": "Product",
  "type": "class"
  },
  {
  "name": "Renderer",
  "type": "class"
  }
  ],
  "messages": [
  {
  "sender": "SmartInfeedEnv",
  "receiver": "SmartInfeedEnv",
  "message": "_init_(num_belts=5, render_mode=None)",
  "message_type": "synchronous",
  "guard": null
  },
  {
  "sender": "SmartInfeedEnv",
  "receiver": "ConveyorBelt",
  "message": "_init_(length, width, speed, belt_type='infeed')",
  "message_type": "synchronous",
  "guard": null
  },
  {
  "sender": "SmartInfeedEnv",
  "receiver": "ConveyorBelt",
  "message": "_init_(length, width, speed, belt_type='correction')",
  "message_type": "synchronous",
  "guard": "for each correction belt"
  },
  {
  "sender": "SmartInfeedEnv",
  "receiver": "ConveyorBelt",
  "message": "_init_(length, width, speed, belt_type='outfeed')",
  "message_type": "synchronous",
  "guard": null
  },
  {
  "sender": "SmartInfeedEnv",
  "receiver": "ProductGenerator",
  "message": "_init_(min_interval, max_interval)",
  "message_type": "synchronous",
  "guard": null
  },
  {
  "sender": "SmartInfeedEnv",
  "receiver": "MotionProfileGenerator",
  "message": "_init_(velocity_limits, acceleration_limits)",
  "message_type": "synchronous",
  "guard": null
  },
  {
  "sender": "SmartInfeedEnv",
  "receiver": "Renderer",
  "message": "_init_(width, height, scale)",
  "message_type": "synchronous",
  "guard": "if render_mode is not None"
  },
  {
  "sender": "SmartInfeedEnv",
  "receiver": "SmartInfeedEnv",
  "message": "step(action: np.ndarray)",
  "message_type": "synchronous",
  "guard": null
  },
  {
  "sender": "SmartInfeedEnv",
  "receiver": "MotionProfileGenerator",
  "message": "generate_profile(start_speed, end_speed, duration)",
  "message_type": "synchronous",
  "guard": null
  },
  {
  "sender": "SmartInfeedEnv",
  "receiver": "ConveyorBelt",
  "message": "update_speed(new_speed)",
  "message_type": "synchronous",
  "guard": "for each correction belt"
  },
  {
  "sender": "SmartInfeedEnv",
  "receiver": "ProductGenerator",
  "message": "should_generate(dt)",
  "message_type": "synchronous",
  "guard": null
  },
  {
  "sender": "ProductGenerator",
  "receiver": "Product",
  "message": "_init_(position, velocity, color, id)",
  "message_type": "synchronous",
  "guard": "if should_generate"
  },
  {
  "sender": "SmartInfeedEnv",
  "receiver": "Product",
  "message": "update_position(dt)",
  "message_type": "synchronous",
  "guard": "for each active product"
  },
  {
  "sender": "SmartInfeedEnv",
  "receiver": "Renderer",
  "message": "render_frame(state)",
  "message_type": "synchronous",
  "guard": "if render_mode is not None"
  },
  {
  "sender": "SmartInfeedEnv",
  "receiver": "SmartInfeedEnv",
  "message": "reset(seed=None, options=None)",
  "message_type": "synchronous",
  "guard": null
  },
  \{
  "sender": "SmartInfeedEnv",
  "receiver": "ConveyorBelt",
  "message": "update_speed(default_speed)",
  "message_type": "synchronous",
  "guard": "for each belt"
  },
  {
  "sender": "SmartInfeedEnv",
  "receiver": "ProductGenerator",
  "message": "_init_(min_interval, max_interval)",
  "message_type": "synchronous",
  "guard": null
  },
  {
  "sender": "SmartInfeedEnv",
  "receiver": "MotionProfileGenerator",
  "message": "_init_(velocity_limits, acceleration_limits)",
  "message_type": "synchronous",
  "guard": null
  }
  ]
  }
```

Here are the dependencies:
gymnasium==1.0.0a2
numpy==2.1.3
pygame==2.6.1
ray[rllib]==2.9.3
torch==2.5.1
wandb==0.9.7
tensorboard==2.9.1

Here is some relevant knowledge:
Here is a rough sketch how environments in Gymnasium are implemented:

```
 import gymnasium
 from gymnasium import spaces
 import numpy as np
 class ExampleEnv(gymnasium.Env):
 Example environment class that follows the Gymnasium API for reinforcement
 learning.
 This environment defines how to interact with the environment through 'step',
 'reset', 'render', and 'close' methods.
 ʺʺʺ
 def _init_(self) :
 ʺʺʺ
 Initialize the environment.
 This method should set up the action and observation spaces, and initial-
 ize any environment state.
 ʺʺʺ
 super () ._init_()
 # TODO: Implement
 def step(self, action):
 ʺʺʺ
 Step through the environment with the given action.
 Args:
  action (ActType): The action taken by the agent.
  Returns:
  observation (ObsType): The next observation of the environment.
  reward (float): The reward for the action.
  terminated (bool): Whether the episode has ended due to reaching a
  terminal state.
  truncated (bool): Whether the episode was truncated due to time limit
  or other reasons.
  ʺʺʺ info (diet): Additional diagnostic information.
  # TODO: Implement
  return observation, reward, terminated, truncated, info
  def reset(self, seed=None, options=None):
  ʺʺʺ
  Reset the environment to its initial state.
  Args:
  seed (int, optional): The random seed for reproducibility.
  options (diet, optional): Additional options for resetting the envi-
  ronment.
  Returns:
  observation (ObsType): The initial observation of the environment.
  info (diet): Additional diagnostic information. """
  super().reset(seed=seed) # Initialize RNG
  # TODO: Implement
  return observation, info
  def render (self):
  ʺʺʺ
  Render the environment. Different render modes can be supported based on
  the 'render_mode' argument passed
  during environment initialization.
  Returns:
  None, or the rendered output (depending on render mode).
  ʺʺʺ
  # TODO: Implement
  def close(self):
  ʺʺʺ
  Close the environment, cleaning up any resources used.
  This is important for environments using external resources like render-
  ing windows.
  ʺʺʺ
  # TODO: Implement
  
```

- In order to ensure that pygame renders - if using pygame - make sure to call 'pygame.event.get()' at the beginning of the loop. This will ensure that the window is rendered correctly.
- Add assert statements whereever appropriate. This will help bugs finding a lot.
- If you want to use scikit-learn, keep in mind that the dependency is 'scikit-learn' but the import is 'sklearn'.
- Make sure that observation spaces and action spaces are always in their specified bounds.
- When you implement an environment always write a test method at the end of the source code file that would run the environment with random actions for 10000 steps and renders it.

Here is the code we have so far:
import enum
import dataclasses
import typing
import numpy

Based on these specifications, please write the beginning of a class definition. Write only the definition and the variables. Do not write the methods. Do not write the init method. We will do this later.

The class name is 'ConveyorBelt'.

The variables are '['length: float', 'width: float', 'speed: float', 'belt_type: str', 'position: np.ndarray', 'max_speed: float', 'min_speed: float']'.

Provide your answer in a preformatted text block surrounded by <pre> and </pre>. Do not use markdown code blocks. Do not include any extra information beyond the code. Only return a single block.

The Coding Agent can then output the following class definition:

```
 <pre>class ConveyorBelt:
 """Represents a single conveyor belt in the system with physical properties
 and constraints."""
 length: float
 width: float
 speed: float
 belt_type: str
 position: numpy.ndarray
 max_speed: float
 min_speed: float</pre>
```

Thereafter, the class definition is injected into a new prompt tasking the Coding Agent to write an instance method:
You are an expert Source Code Generator Agent. Your role is to convert design specifications into fully functional Python source code. You are perfectly capable of writing plans for coding and actual coding. You generate Gym-like environments adhering to OpenAI Gym's API standards, ensuring best coding practices, proper use of dependencies, and thorough documentation through comments and doc-strings.

Here is the UML class diagram:

```
 {
 "title": "Smart Infeed System Environment Architecture",
 "description": "Class diagram for a Gymnasium-compatible smart infeed system
 simulation environment",
 "classes": [
 {
  "name": "SmartInfeedEnv",
  "stereotype": null,
  "description": "Main environment class implementing the Gymnasium in-
  terface" ,
  "attributes": [
        {
             "name": "num_belts",
             "type": "int",
             "is_optional": false,
             "default": 5,
             "visibility": "public"
        }, [...]
        },
        {
  "sender": "SmartInfeedEnv",
  "receiver": "MotionProfileGenerator",
  "message": "_init_(velocity_limits, acceleration_limits)",
  "message_type": "synchronous",
  "guard": null
  }
  ]
  }
```

Here are the dependencies:
gymnasium==1.0.0a2
numpy==2.1.3
pygame==2.6.1
ray[rllib]==2.9.3
torch==2.5.1
wandb==0.9.7
tensorboard==2.9.1

Here is some relevant knowledge:

```
 Here is a rough sketch how environments in Gymnasium are implemented:
 import gymnasium
 from gymnasium import spaces
 import numpy as np
 class ExampleEnv(gymnasium.Env):
 """ Example environment class that follows the Gymnasium API for reinforcement
 learning.
 This environment defines how to interact with the environment through 'step',
 'reset', 'render', and 'close' methods.
 """
 def _init_(self) :
 """
 Initialize the environment.
 This method should set up the action and observation spaces, and initial-
 ize any environment state.
 """
 super () ._init_()
 # TODO: Implement
 def step(self, action):
 """
 Step through the environment with the given action.
 Args:
  action (ActType): The action taken by the agent.
  Returns:
  observation (ObsType): The next observation of the environment.
  reward (float): The reward for the action.
  terminated (bool): Whether the episode has ended due to reaching a
  terminal state.
  truncated (bool): Whether the episode was truncated due to time limit
  or other reasons.
  info (diet): Additional diagnostic information.
  """ # TODO: Implement
  return observation, reward, terminated, truncated, info
  def reset(self, seed=None, options=None):
  """
  Reset the environment to its initial state.
  Args:
  seed (int, optional): The random seed for reproducibility.
  options (dict, optional): Additional options for resetting the envi-
  ronment.
  Returns:
  observation (ObsType): The initial observation of the environment.
  info (diet): Additional diagnostic information.
  """ super().reset(seed=seed) # Initialize RNG
  # TODO: Implement
  return observation, info
  def render (self) :
  """
  Render the environment. Different render modes can be supported based on
  the 'render_mode' argument passed
  during environment initialization.
  Returns:
  None, or the rendered output (depending on render mode).
  """ # TODO: Implement
  def close(self):
  """
  Close the environment, cleaning up any resources used.
  This is important for environments using external resources like render-
  ing windows.
  """
  # TODO: Implement
  
```

- In order to ensure that pygame renders - if using pygame - make sure to call 'pygame.event.get()' at the beginning of the loop. This will ensure that the window is rendered correctly.
- Add assert statements whereever appropriate. This will help bugs finding a lot.
- If you want to use scikit-learn, keep in mind that the dependency is 'scikit-learn' but the import is 'sklearn'.
- Make sure that observation spaces and action spaces are always in their specified bounds.
- When you implement an environment always write a test method at the end of the source code file that would run the environment with random actions for 10000 steps and renders it.

Here is the code we have so far:
import enum
import dataclasses
import typing
import numpy
class ConveyorBelt:
   min_speed = None
   max_speed = None
   position = None
   belt_type = None
   speed = None
   width = None
   length = None
   pass

Based on these specifications, please write an instance method. Only write the one method. Do not write other methods. Do not write the class definition. Do not repeat code that is already in the current code. Use the lowest level of indendation, as indendation will be handled automatically later. Make sure that the method definition (the line beginning with 'def') is on indation level 0. Make sure that the method body starts at indendation level 1. Make sure to include the method declaration including the def keyword, the method name and the parameters in parentheses. Use code comments in the method block to explain pieces of code. Use assertions to test the code.

The class name is 'ConveyorBelt'.

The method name is '_init_'.

The method parameters are '['self', 'length: float', 'width: float', 'speed: float', 'belt_type: str', 'position: np.ndarray', 'max_speed: float = 1.0', 'min_speed: float = 0.0']'.

Provide your answer in a preformatted text block surrounded by <pre> and </pre>. Do not use markdown code blocks. Do not include any extra information beyond the code. Only return a single block.

The Coding Agent can then return as a task result the following instance method:

```
 <pre>
 def _init_(self, length: float, width: float, speed: float, belt_type: str, po-
 sition: np.ndarray, max_speed: float = 1.0, min_speed: float = 0.0):
 # Validate input parameters
 assert length > 0, "Belt length must be positive"
 assert width > 0, "Belt width must be positive"
 assert min_speed >= 0, "Minimum speed cannot be negative"
 assert max_speed > min_speed, "Maximum speed must be greater than minimum
 speed"
 assert speed >= min_speed and speed <= max_speed, "Initial speed must be
 within speed limits"
 assert belt_type in ['infeed', 'correction', 'outfeed'], "Invalid belt type"
 assert isinstance(position, np.ndarray) and position.shape == (2,), "Position
 must be 2D numpy array"
 # Initialize belt properties
 self.length = length
 self.width = width
 self.speed = speed
 self.belt_type = belt_type
 self.position = position
 self.max_speed = max_speed
 self.min_speed = min_speed
 </pre>
 
```

The Coding Agent can then be prompted numerous times, wherein each time the source code is further supplemented. After some iterations, the following prompt can be used to further supplement the source code with a further instance method:
You are an expert Source Code Generator Agent. Your role is to convert design specifications into fully functional Python source code. You are perfectly capable of writing plans for coding and actual coding. You generate Gym-like environments adhering to OpenAI Gym's API standards, ensuring best coding practices, proper use of dependencies, and thorough documentation through comments and doc-strings.

Here is the UML class diagram:

```
 ‴ {
 "title": "Smart Infeed System Environment Architecture",
 "description": "Class diagram for a Gymnasium-compatible smart infeed system
 simulation environment",
 "classes": [
 {
  "name": "SmartInfeedEnv",
  "stereotype": null,
  "description": "Main environment class implementing the Gymnasium in-
  terface",
  "attributes": [
        {
             "name": "num_belts",
             "type": "int",
             "is_optional": false,
             "default": 5,
             "visibility": "public"
        },
        {
             "name": "belt_dimensions",
             "type": "Dict[str, float]",
             "is_optional": false,
             "default": null,
             "visibility": "public"
        },
        {
             "name": "belt_speeds",
             "type": "Dict[str, float]",
             "is_optional": false,
             "default": null,
             "visibility": "public"
        },
        {
             "name": "observation_space",
             "type": "spaces.Dict",
             "is_optional": false,
             "default": null,
             "visibility": "public"
        },
        {
             "name": "action_space",
             "type": "spaces.Box",
             "is_optional": false,
             "default": null,
             "visibility": "public"
        }
  ],
  "methods": [
        {
             "name": "_init_",
             "return_type": "None",
             "parameters": [
                  {
                       "name": "num_belts",
                       "type": "int",
                       "is_optional": true,
                       "default": "5",
                       "visibility": "public"
                  },
                  {
                       "name": "render_mode",
                       "type": "Optional[str]",
                       "is_optional": true,
                       "default": "None",
                       "visibility": "public"
                  }
             ],
             "visibility": "public"
        },
        {
             "name": "step",
             "return_type": "Tuple[ObsType, float, bool, bool, dict]",
             "parameters": [
                  {
                       "name": "action",
                       "type": "np.ndarray",
                       "is_optional": false,
                       "default": null,
                       "visibility": "public"
                  }
             ],
             "visibility": "public"
        },
        {
             "name": "reset",
             "return_type": "Tuple[ObsType, dict]",
             "parameters": [
                  {
                       "name": "seed",
                       "type": "Optional[int]",
                       "is_optional": true,
                       "default": null,
                       "visibility": "public"
                  },
                  {
                       "name": "options",
                       "type": "Optional[dict]",
                       "is_optional": true,
                       "default": null,
                       "visibility": "public"
                  }
             ],
             "visibility": "public"
        },
        {
             "name": "render",
             "return_type": "Optional[np.ndarray]",
             "parameters": [],
             "visibility": "public"
        },
        {
             "name": "close",
             "return_type": "None",
             "parameters": [],
             "visibility": "public"
        }
  ],
  "is_abstract": false,
  "superclass": null
  },
  {
  "name": "ConveyorBelt",
  "stereotype": null,
  "description": "Represents a single conveyor belt in the system",
  "attributes": [
        {
             "name": "length",
             "type": "float",
             "is_optional": false,
             "default": null,
             "visibility": "public"
        },
        {
             "name": "width",
             "type": "float",
             "is_optional": false,
             "default": null,
             "visibility": "public"
        },
        {
             "name": "speed",
             "type": "float",
             "is_optional": false,
             "default": null,
             "visibility": "public"
        },
        {
             "name": "belt_type",
             "type": "str",
             "is_optional": false,
             "default": null,
             "visibility": "public"
        },
        {
             "name": "position",
             "type": "np.ndarray",
             "is_optional": false,
             "default": null,
             "visibility": "public"
        }
  ],
  "methods": [
        {
             "name": "update_speed",
             "return_type": "None",
             "parameters": [
                  {
                       "name": "new_speed",
                       "type": "float",
                       "is_optional": false,
                       "default": null,
                       "visibility": "public"
                  }
             ],
             "visibility": "public"
        },
        {
             "name": "get_state",
             "return_type": "Dict[str, Any]",
             "parameters": [],
             "visibility": "public"
        }
  ],
  "is_abstract": false,
  "superclass": null
  },
  {
  "name": "Product",
  "stereotype": null,
  "description": "Represents a product moving through the system",
  "attributes": [
        {
             "name": "position",
             "type": "np.ndarray",
             "is_optional": false,
             "default": null,
             "visibility": "public"
        },
        {
             "name": "velocity",
             "type": "float",
             "is_optional": false,
             "default": null,
             "visibility": "public"
        },
        {
             "name": "color",
             "type": "Tuple[int, int, int]",
             "is_optional": false,
             "default": null,
             "visibility": "public"
        },
        {
             "name": "id",
             "type": "int",
             "is_optional": false,
             "default": null,
             "visibility": "public"
        }
  ],
  "methods": [
        {
             "name": "update_position",
             "return_type": "None",
             "parameters": [
                  {
                       "name": "dt",
                       "type": "float",
                       "is_optional": false,
                       "default": null,
                       "visibility": "public"
                  }
             ],
             "visibility": "public"
        }
  ],
  "is_abstract": false,
  "superclass": null
  },
  {
  "name": "ProductGenerator",
  "stereotype": null,
  "description": "Handles product generation and timing",
  "attributes": [
        {
             "name": "min_interval",
             "type": "float",
             "is_optional": false,
             "default": null,
             "visibility": "public"
        },
        {
             "name": "max_interval",
             "type": "float",
             "is_optional": false,
             "default": null,
             "visibility": "public"
        },
        {
             "name": "time_since_last",
             "type": "float",
             "is_optional": false,
             "default": null,
             "visibility": "public"
        }
  ],
  "methods": [
        {
             "name": "should_generate",
             "return_type": "bool",
             "parameters": [
                  {
                       "name": "dt",
                       "type": "float",
                       "is_optional": false,
                       "default": null,
                       "visibility": "public"
                  }
             ],
             "visibility": "public"
        },
        {
             "name": "generate_product",
             "return_type": "Product",
             "parameters": [],
             "visibility": "public"
        }
  ],
  "is_abstract": false,
  "superclass": null
  },
  {
  "name": "Renderer",
  "stereotype": null,
  "description": "Handles visualization using PyGame",
  "attributes": [
        {
             "name": "screen",
             "type": "pygame.Surface",
             "is_optional": false,
             "default": null,
             "visibility": "public"
        },
        {
             "name": "width",
             "type": "int",
             "is_optional": false,
             "default": null,
             "visibility": "public"
        },
        {
             "name": "height",
             "type": "int",
             "is_optional": false,
             "default": null,
             "visibility": "public"
        },
        {
             "name": "scale",
             "type": "float",
             "is_optional": false,
             "default": null,
             "visibility": "public"
        }
  ],
  "methods": [
        {
             "name": "render_frame",
             "return_type": "np.ndarray",
             "parameters": [
                  {
                       "name": "state",
                       "type": "Dict[str, Any]",
                       "is_optional": false,
                       "default": null,
                       "visibility": "public"
                  }
             ],
             "visibility": "public"
        }
  ],
  "is_abstract": false,
  "superclass": null
  },
  {
  "name": "MotionProfileGenerator",
  "stereotype": null,
  "description": "Generates 5th order polynomial motion profiles",
  "attributes": [
        {
             "name": "velocity_limits",
             "type": "Tuple[float, float]",
             "is_optional": false,
             "default": null,
             "visibility": "public"
        },
        {
             "name": "acceleration_limits",
             "type": "Tuple[float, float]",
             "is_optional": false,
             "default": null,
             "visibility": "public"
        }
  ],
  "methods": [
        {
             "name": "generate_profile",
             "return_type": "np.ndarray",
             "parameters": [
                  {
                       "name": "start_speed",
                       "type": "float",
                       "is_optional": false,
                       "default": null,
                       "visibility": "public"
                  },
                  {
                       "name": "end_speed",
                       "type": "float",
                       "is_optional": false,
                       "default": null,
                       "visibility": "public"
                  },
                  {
                       "name": "duration",
                       "type": "float",
                       "is_optional": false,
                       "default": null,
                       "visibility": "public"
                  }
             ],
             "visibility": "public"
        }
  ],
  "is_abstract": false,
  "superclass": null
  }
  ],
  "relationships": [
  {
  "source": "SmartInfeedEnv",
  "target": "ConveyorBelt",
  "source_role": null,
  "target_role": null,
  "relationship_type": "composition",
  "multiplicity_source": "1",
  "multiplicity_target": "3..*",
  "description": null,
  "is_bidirectional": false
  },
  {
  "source": "SmartInfeedEnv",
  "target": "Product",
  "source_role": null,
  "target_role": null,
  "relationship_type": "aggregation",
  "multiplicity_source": "1",
  "multiplicity_target": "0..*",
  "description": null,
  "is_bidirectional": false
  },
  {
  "source": "SmartInfeedEnv",
  "target": "ProductGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "Renderer",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "SmartInfeedEnv",
  "target": "MotionProfileGenerator",
  "source_role": null,
  "target_role": null,
  "relationship_type": "composition",
  "multiplicity_source": "1",
  "multiplicity_target": "1",
  "description": null,
  "is_bidirectional": false
  },
  {
  "source": "ProductGenerator",
  "target": "Product",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "ConveyorBelt",
  "source_role": null,
  "target_role": null,
  "relationship_type": "dependency",
  "multiplicity_source": null,
  "multiplicity_target": null,
  "description": null,
  "is_bidirectional": false
  },
  {
  "source": "Renderer",
  "target": "Product",
  "source_role": null,
  "target_role": null,
  "relationship_type": "dependency",
  "multiplicity_source": null,
  "multiplicity_target": null,
  "description": null,
  "is_bidirectional": false
  }
  ]
  } ‴
```

Here is an UML state diagram:

```
 ‴ {
 "title": "Smart Infeed Environment State Diagram",
 "description": "State diagram showing the lifecycle and transitions of the
 Smart Infeed Environment simulation",
 "states": [
 {
  "name": "Initialized",
  "state_type": "initial",
  "entry_action": "Initialize environment parameters",
  "exit_action": "Validate configuration"
  },
  {
  "name": "Ready",
  "state_type": "normal",
  "entry_action": "Reset state variables",
  "exit_action": "Prepare action space"
  },
  {
  "name": "Running",
  "state_type": "normal",
  "entry_action": "Start simulation clock",
  "exit_action": "Update observation space"
  },
  {
  "name": "ProductGenerating",
  "state_type": "normal",
  "entry_action": "Calculate generation timing",
  "exit_action": "Update product count"
  },
  {
  "name": "BeltSpeedAdjusting",
  "state_type": "normal",
  "entry_action": "Generate motion profile",
  "exit_action": "Validate motion constraints"
  },
  {
  "name": "Rendering",
  "state_type": "normal",
  "entry_action": "Update display",
  "exit_action": "Process frame delay"
  },
  {
  "name": "Paused",
  "state_type": "normal",
  "entry_action": "Suspend simulation",
  "exit_action": "Resume clock"
  },
  {
  "name": "Terminated",
  "state_type": "final",
  "entry_action": "Clean up resources",
  "exit_action": null
  }
  ],
  "transitions": [
  {
  "source": "Initialized",
  "target": "Ready",
  "event": "reset()",
  "action": "Reset environment state",
  "guard": "Configuration valid"
  },
  {
  "source": "Ready",
  "target": "Running",
  "event": "step()",
  "action": "Process first action",
  "guard": "Action space valid"
  },
  {
  "source": "Running",
  "target": "ProductGenerating",
  "event": "time_check",
  "action": "Check product generation conditions",
  "guard": "Generation interval elapsed"
  },
  {
  "source": "Running",
  "target": "BeltSpeedAdjusting",
  "event": "step()",
  "action": "Process speed adjustment action",
  "guard": "Valid action received"
  },
  {
  "source": "ProductGenerating",
  "target": "Running",
  "event": "product_generated",
  "action": "Add product to system",
  "guard": "Spacing requirements met"
  },
  {
  "source": "BeltSpeedAdjusting",
  "target": "Running",
  "event": "speed_adjusted",
  "action": "Update belt speeds",
  "guard": "Motion constraints satisfied"
  },
  {
  "source": "Running",
  "target": "Rendering",
  "event": "render()",
  "action": "Update visualization",
  "guard": "Render mode enabled"
  },
  {
  "source": "Rendering",
  "target": "Running",
  "event": "frame_complete",
  "action": "Return render frame",
  "guard": null
  },
  {
  "source": "Running",
  "target": "Paused",
  "event": "pause_simulation",
  "action": "Pause clock",
  "guard": null
  },
  {
  "source": "Paused",
  "target": "Running",
  "event": "resume_simulation",
  "action": "Resume clock",
  "guard": null
  },
  {
  "source": "Running",
  "target": "Terminated",
  "event": "closed",
  "action": "Terminate simulation",
  "guard": null
  },
  {
  "source": "Running",
  "target": "Ready",
  "event": "reset()",
  "action": "Reset environment state",
  "guard": null
  },
  {
  "source": "Paused",
  "target": "Terminated",
  "event": "closed",
  "action": "Terminate simulation",
  "guard": null
  }
  ]
  } ‴
  
```

Here is an UML sequence diagram:

```
 {
 "title": "Smart Infeed Environment Sequence Diagram",
 "description": "Key interactions between components during environment ini-
 tialization, stepping, and reset operations",
 "participants": [
 {
  "name": "SmartInfeedEnv",
  "type": "class"
  },
  {
  "name": "ConveyorBelt",
  "type": "class"
  },
  {
  "name": "ProductGenerator",
  "type": "class"
  },
  {
  "name": "MotionProfileGenerator",
  "type": "class"
  },
  {
  "name": "Product",
  "type": "class"
  },
  {
  "name": "Renderer",
  "type": "class"
  }
  ],
  "messages": [
  {
  "sender": "SmartInfeedEnv",
  "receiver": "SmartInfeedEnv",
  "message": "_init_(num_belts=5, render_mode=None)",
  "message_type": "synchronous",
  "guard": null
  },
  [...]
  {
  "sender": "SmartInfeedEnv",
  "receiver": "SmartInfeedEnv",
  "message": "reset(seed=None, options=None)",
  "message_type": "synchronous",
  "guard": null
  },
  {
  "sender": "SmartInfeedEnv",
  "receiver": "ConveyorBelt",
  "message": "update_speed(default_speed)",
  "message_type": "synchronous",
  "guard": "for each belt"
  },
  {
  "sender": "SmartInfeedEnv",
  "receiver": "ProductGenerator",
  "message": "_init_(min_interval, max_interval)",
  "message_type": "synchronous",
  "guard": null
  },
  {
  "sender": "SmartInfeedEnv",
  "receiver": "MotionProfileGenerator",
  "message": "_init_(velocity_limits, acceleration_limits)",
  "message_type": "synchronous",
  "guard": null
  }
  ]
  }
```

Here are the dependencies:
gymnasium==1.0.0a2
numpy==2.1.3
pygame==2.6.1
ray[rllib]==2.9.3
torch==2.5.1
wandb==0.9.7
tensorboard==2.9.1

Here is some relevant knowledge:

```
 Here is a rough sketch how environments in Gymnasium are implemented:
 import gymnasium
 from gymnasium import spaces
 import numpy as np
 class ExampleEnv(gymnasium.Env):
 """ Example environment class that follows the Gymnasium API for reinforcement
 learning.
 This environment defines how to interact with the environment through 'step',
 'reset', 'render', and 'close' methods.
 """
 def _init_(self) :
 """
 Initialize the environment.
 This method should set up the action and observation spaces, and initial-
 ize any environment state.
 """
 super () ._init_()
 # TODO: Implement
 def step(self, action):
 """
 Step through the environment with the given action.
 Args:
  action (ActType): The action taken by the agent.
  Returns:
  observation (ObsType): The next observation of the environment.
  reward (float): The reward for the action.
  terminated (bool): Whether the episode has ended due to reaching a
  terminal state.
  truncated (bool): Whether the episode was truncated due to time limit
  or other reasons.
  info (diet): Additional diagnostic information.
  """ # TODO: Implement
  return observation, reward, terminated, truncated, info
  def reset(self, seed=None, options=None):
  """
  Reset the environment to its initial state.
  Args:
  seed (int, optional): The random seed for reproducibility.
  options (dict, optional): Additional options for resetting the envi-
  ronment.
  Returns:
  observation (ObsType): The initial observation of the environment.
  info (diet): Additional diagnostic information.
  """ super().reset(seed=seed) # Initialize RNG
  # TODO: Implement
  return observation, info
  def render (self):
  """
  Render the environment. Different render modes can be supported based on
  the 'render_mode' argument passed
  during environment initialization.
  Returns:
  None, or the rendered output (depending on render mode).
  """ # TODO: Implement
  def close(self):
  """
  Close the environment, cleaning up any resources used.
  This is important for environments using external resources like render-
  ing windows.
  """
  # TODO: Implement ‴
  
```

- In order to ensure that pygame renders - if using pygame - make sure to call 'pygame.event.get()' at the beginning of the loop. This will ensure that the window is rendered correctly.
- Add assert statements whereever appropriate. This will help bugs finding a lot.
- If you want to use scikit-learn, keep in mind that the dependency is 'scikit-learn' but the import is 'sklearn'.
- Make sure that observation spaces and action spaces are always in their specified bounds.
- When you implement an environment always write a test method at the end of the source code file that would run the environment with random actions for 10000 steps and renders it.

Here is the code we have so far:

```
 import collections
 import dataclasses
 import typing
 import pygame
 import numpy
 import gymnasium
 import colorsys
 import dataclasses
 import typing
 import numpy
 import pygame
 import scipy.optimize
 import dataclasses
 import typing
 import numpy
 import dataclasses
 import collections
 import time
 import random
 import typing
 import numpy
 import random
 import dataclasses
 import typing
 import numpy
 import enum
 import dataclasses
 import typing
 import numpy
 class ConveyorBelt:
 min_speed = None
 max_speed = None
 position = None
 belt_type = None
 speed = None
 width = None
 length = None
 pass
 def _init_(self, length, width, speed, belt_type, position, max_speed,
 min_speed) :
 assert length > 0, 'Belt length must be positive'
 assert width > 0, 'Belt width must be positive'
 assert min_speed >= 0, 'Minimum speed cannot be negative'
 assert max_speed > min_speed, 'Maximum speed must be greater than minimum
 speed'
 assert speed >= min_speed and speed <= max_speed, 'Initial speed must be
 within speed limits'
 assert belt_type in ['infeed', 'correction', 'outfeed'], 'Invalid belt
 type'
 assert isinstance(position, np.ndarray) and position.shape == (2,), 'Po-
 sition must be 2D numpy array'
 self.length = length
 self.width = width
 self.speed = speed
 self.belt_type = belt-type
 self.position = position
 self.max_speed = max_speed
 self.min_speed = min_speed
 def update_speed(self, new_speed):
 assert isinstance(new_speed, (int, float)), 'New speed must be a number'
 assert self.min_speed <= new_speed <= self.max_speed, f'Speed {new_speed}
 outside allowed range [{self.min_speed}, {self.max_speed}]'
 self.speed = float(new_speed)
 def get_state(self):
 return {'length': self.length, 'width': self.width, 'speed': self.speed,
 'belt_type': self.belt_type, 'position': self.position, 'max_speed':
 self.max_speed, 'min_speed': self.min_speed}
 def validate_parameters(self):
 assert hasattr(self, 'length'), 'Length not set'
 assert hasattr(self, 'width'), 'Width not set'
 assert hasattr(self, 'speed'), 'Speed not set'
 assert hasattr(self, 'belt_type'), 'Belt type not set'
 assert hasattr(self, 'position'), 'Position not set'
 assert hasattr(self, 'max_speed'), 'Maximum speed not set'
 assert hasattr(self, 'min_speed'), 'Minimum speed not set'
 assert isinstance(self.length, (int, float)) and self.length > 0, 'Inva-
 lid length'
 assert isinstance(self.width, (int, float)) and self.width > 0, 'Invalid
 width'
 assert isinstance(self.speed, (int, float)), 'Invalid speed'
 assert isinstance(self.max_speed, (int, float)), 'Invalid maximum speed'
 assert isinstance(self.min_speed, (int, float)), 'Invalid minimum speed'
 assert self.min_speed >= 0, 'Minimum speed cannot be negative'
 assert self.max_speed > self.min_speed, 'Maximum speed must be greater
 than minimum speed'
 assert self.min_speed <= self.speed <= self.max_speed, 'Speed must be
 within limits'
 assert self.belt_type in ['infeed', 'correction', 'outfeed'], 'Invalid
 belt type'
 assert isinstance(self.position, np.ndarray), 'Position must be numpy ar-
 ray'
 assert self.position.shape == (2,), 'Position must be 2D'
 assert self.position.dtype in [np.float32, np.float64], 'Position must
 contain floats'
 return True
 class Product:
 creation_time = None
 current_belt = None
 dimensions = None
 id = None
 color = None
 velocity = None
 position = None
 pass
 def _init_(self, position, velocity, dimensions, current_belt, crea-
 tion_time, id):
 assert isinstance(position, np.ndarray), 'Position must be numpy array'
 assert position.shape == (2,), 'Position must be 2D'
 assert position.dtype in [np.float32, np.float64], 'Position must be
 float type'
 self.position = position
 assert isinstance(velocity, (int, float)), 'Velocity must be numeric'
 assert velocity >= 0, 'Velocity cannot be negative'
 self.velocity = float(velocity)
 assert isinstance(dimensions, tuple) and len(dimensions) == 2, 'Dimen-
 sions must be tuple of length 2'
 assert all((isinstance(d, (int, float)) and d > 0 for d in dimensions)),
 'Dimensions must be positive numbers'
 self.dimensions = dimensions
 assert isinstance(current_belt, int) and current_belt >= 0, 'Current belt
 must be non-negative integer'
 self.current_belt = current_belt
 assert isinstance(creation_time, (int, float)) and creation_time >= 0,
 'Creation time must be non-negative'
 self.creation_time = float(creation_time)
 assert isinstance(id, int) and id >= 0, 'ID must be non-negative integer'
 self.id = id
 self.color = (random.randint(50, 255), random.randint(50, 255), ran-
 dom.randint(50, 255))
 def update_position(self, dt, new_velocity):
 assert isinstance(dt, (int, float)), 'Time step must be numeric'
 assert dt > 0, 'Time step must be positive'
 if new_velocity is not None:
  assert isinstance(new_velocity, (int, float)), 'New velocity must be
  numeric'
  assert new_velocity >= 0, 'New velocity cannot be negative'
  self.velocity = float(new_velocity)
  displacement = self.velocity * dt
  self.position[0] += displacement
  assert isinstance(self.position, np.ndarray), 'Position must remain a
  numpy array'
  assert self.position.shape == (2,), 'Position must remain 2D'
  assert np.isfinite(self.position).all(), 'Position values must be finite'
  def check_collision(self, other_product):
  assert isinstance(other_product, Product), 'Collision check requires a
  Product instance'
  assert id(self) != id(other_product), 'Cannot check collision with self'
  self_half_width, self_half_length = (self.dimensions[0] / 2, self.dimen-
  sions[1] / 2)
  other_half_width, other_half_length = (other_product.dimensions[0] / 2,
  other_product.dimensions[1] / 2)
  dx = abs(self.position[0] - other_product.position[0])
  dy = abs(self.position[1] - other_product.position[1])
  overlap_x = dx < self_half_length + other half length
  overlap_y = dy < self_half_width + other half width
  return overlap_x and overlap_y
  def get_state(self):
  state = {'position': self.position.copy(), 'velocity': self.velocity,
  'dimensions': self.dimensions, 'current_belt': self.current_belt, 'crea-
  tion_time': self.creation_time, 'id': self.id, 'color': self.color}
  assert isinstance(state['position'], np.ndarray), 'Position must be numpy
  array'
  assert state['position'] .shape == (2,), 'Position must be 2D'
  assert isinstance(state['velocity'], (int, float)), 'Velocity must be nu-
  meric'
  assert isinstance(state['dimensions'], tuple) and len(state['dimen-
  sions']) == 2, 'Invalid dimensions'
  assert isinstance(state['current_belt'], int), 'Current belt must be in-
  teger'
  assert isinstance(state['creation_time'], (int, float)), 'Creation time
  must be numeric'
  assert isinstance(state['id'], int), 'ID must be integer'
  assert isinstance(state['color'], tuple) and len(state['color']) == 3,
  'Invalid color format'
  return state
  class ProductGenerator:
  outfeed_positions = None
  min_spacing = None
  generation_history = None
  total_products = None
  rng = None
  time_since_last = None
  max_interval = None
  min_interval = None
  pass
  def _init_(self, min_interval, max_interval, min_spacing, outfeed_posi-
  tions, seed):
  assert isinstance(min_interval, (int, float)) and min_interval > 0,
  'min_interval must be positive'
  assert isinstance(max_interval, (int, float)) and max_interval > min_in-
  terval, 'max_interval must be greater than min_interval'
  assert isinstance(min_spacing, (int, float)) and min_spacing > 0,
  'min_spacing must be positive'
  assert isinstance(outfeed_positions, np.ndarray), 'outfeed_positions must
  be numpy array'
  assert outfeed_positions.shape[1] == 2, 'outfeed_positions must be Nx2
  array'
  assert outfeed_positions.dtype in [np.float32, np.float64], 'outfeed_po-
  sitions must contain floats'
  self.min_interval = float(min_interval)
  self.max_interval = float(max_interval)
  self.time_since_last = 0.0
  self.rng = np.random.default_rng(seed)
  self.total_products = 0
  self.generation_history = collections.deque(maxlen=100)
  self.min_spacing = float(min_spacing)
  self.outfeed_positions = outfeed_positions.copy()
  assert hasattr(self, 'min_interval'), 'min_interval not set'
  assert hasattr(self, 'max_interval'), 'max_interval not set'
  assert hasattr(self, 'time_since_last'), 'time_since_last not set'
  assert hasattr(self, 'rng'), 'random number generator not set'
  assert hasattr(self, 'total_products'), 'total_products not set'
  assert hasattr(self, 'generation_history'), 'generation_history not set'
  assert hasattr(self, 'min_spacing'), 'min_spacing not set'
  assert hasattr(self, 'outfeed_positions'), 'outfeed_positions not set'
  def check_spacing(self, current_positions, belt_speed):
  assert isinstance(current_positions, list), 'current_positions must be a
  list'
  assert all((isinstance(x, float) for x in current_positions)), 'all posi-
  tions must be floats'
  assert isinstance(belt_speed, float), 'belt_speed must be float'
  assert belt_speed >= 0, 'belt_speed cannot be negative'
  if not current_positions:
  return True
  sorted_positions = sorted(current_positions)
  for i in range(len(sorted_positions) - 1):
  spacing = sorted_positions[i + 1] - sorted_positions[i]
  required_spacing = self.min_spacing * (1 + 0.2 * belt_speed)
  if spacing < required_spacing:
       return False
       if sorted_positions[0] < self.min_spacing:
  return False
  return True
  def calculate_generation_time(self, current_time, belt_speed):
  assert isinstance(current_time, (int, float)) and current_time >= 0,
  'current_time must be non-negative'
  assert isinstance(belt_speed, (int, float)) and belt_speed >= 0,
  'belt_speed must be non-negative'
  self.time_since_last += current_time
  base_interval = self.rng.uniform(self.min_interval, self.max_interval)
  speed_factor = 1.0 + belt_speed / 10.0
  adjusted_interval = base_interval * speed_factor
  if len(self.generation_history) >= 3:
  recent_intervals = np.diff([t for t in self.generation_history])
  if np.std(recent_intervals) < 0.1:
       adjusted_interval *= self.rng.uniform(0.8, 1.2)
       max_allowed_interval = self.max_interval * 2.0
       adjusted_interval = min(max_allowed_interval, max(self.min_interval, ad-
       justed_interval))
       return float(adjusted_interval)
       def log_generation(self, timestamp, product_id):
       assert isinstance(timestamp, float) and timestamp >= 0, 'Timestamp must
       be non-negative float'
       assert isinstance(product_id, int) and product_id >= 0, 'Product ID must
       be non-negative integer'
       self.generation_history.append (timestamp)
       self.time_since_last = 0.0
       self.total_products += 1
       assert len(self.generation_history) <= 100, 'Generation history exceeds
       maximum length'
       assert self.time_since_last == 0.0, 'Time since last not properly reset'
       assert self.total_products > 0, 'Total products counter not properly in-
       cremented'
       assert timestamp == self.generation_history[-1], 'Latest timestamp not
       properly recorded'
       def should_generate(self, dt, current_positions, belt_speed, current_time):
       assert isinstance(dt, float) and dt > 0, 'dt must be positive float'
       assert isinstance(current_positions, list), 'current_positions must be a
       list'
       assert all((isinstance(pos, float) for pos in current_positions)), 'all
       positions must be floats'
       assert isinstance(belt_speed, float) and belt_speed >= 0, 'belt_speed
       must be non-negative float'
       assert isinstance(current_time, float) and current_time >= 0, 'cur-
       rent_time must be non-negative float'
       self.time_since_last += dt
       required_interval = self.calculate_generation_time(current_time,
       belt_speed)
       time_condition = self.time_since_last >= required_interval
       spacing_condition = self.check_spacing(current_positions, belt_speed)
       return time_condition and spacing_condition
       class MotionProfileGenerator:
       profile_duration = None
       coefficients = None
       time_points = None
       jerk_limits = None
       acceleration_limits = None
       velocity_limits = None
       pass
       def _init_(self, velocity_limits, acceleration_limits, jerk_limits, pro-
       file_duration) :
       assert isinstance(velocity_limits, tuple) and len(velocity_limits) == 2,
       'velocity_limits must be tuple of length 2'
       assert isinstance(acceleration_limits, tuple) and len(acceleration_lim-
       its) == 2, 'acceleration_limits must be tuple of length 2'
       assert isinstance(jerk_limits, tuple) and len(jerk_limits) == 2,
       'jerk_limits must be tuple of length 2'
       assert isinstance(profile_duration, float) and profile_duration > 0,
       'profile_duration must be positive float'
       assert all((isinstance(v, (int, float)) for v in velocity_limits)), 've-
       locity limits must be numeric'
       assert all((isinstance(a, (int, float)) for a in acceleration_limits)),
       'acceleration limits must be numeric'
       assert all((isinstance(j, (int, float)) for j in jerk_limits)), 'jerk
       limits must be numeric'
       assert velocity_limits[0] < velocity_limits[1], 'min velocity must be
       less than max velocity'
       assert acceleration_limits[0] < acceleration_limits[1], 'min acceleration
       must be less than max acceleration'
       assert jerk_limits[0] < jerk_limits[1], 'min jerk must be less than max
       jerk'
       self.velocity_limits = tuple((float(v) for v in velocity_limits))
       self.acceleration_limits = tuple((float(a) for a in acceleration_limits))
       self.jerk_limits = tuple((float(j) for j in jerk_limits))
       self.profile_duration = float(profile_duration)
       self.time_points = np.linspace(0, self.profile_duration,
       num=int(self.profile_duration * 100))
       self.coefficients = None
       def calculate_coefficients(self, start_speed, end_speed, start_accel, end_ac-
       cel) :
       assert isinstance(start_speed, float), 'start_speed must be float'
       assert isinstance(end_speed, float), 'end_speed must be float'
       assert isinstance(start_accel, float), 'start_accel must be float'
       assert isinstance(end_accel, float), 'end_accel must be float'
       assert self.velocity_limits[0] <= start_speed <= self.velocity_limits[1],
       'start_speed outside limits'
       assert self.velocity_limits[0] <= end_speed <= self.velocity_limits[1],
       'end_speed outside limits'
       assert self.acceleration_limits[0] <= start_accel <= self.accelera-
       tion_limits[1], 'start_accel outside limits'
       assert self.acceleration_limits[0] <= end_accel <= self.acceleration_lim-
       its[1], 'end_accel outside limits'
       t = self.profile_duration
       boundary_conditions = [[0, start_speed, start_accel], [t, end_speed,
       end_accel]]
       A = np.array([[1, 0, 0, 0, 0, 0], [0, 1, 0, 0, 0, 0], [0, 0, 2, 0, 0, 0],
       [1, t, t ** 2, t ** 3, t ** 4, t ** 5], [0, 1, 2 * t, 3 * t ** 2, 4 * t ** 3, 5 *
       t ** 4], [0, 0, 2, 6 * t, 12 * t ** 2, 20 * t ** 3]])
       b = np.array([boundary_conditions[0][0], boundary_conditions[0][1],
       boundary_conditions[0][2], boundary_conditions[1][0], boundary_conditions[1][1],
       boundary_conditions[1][2]])
       try:
  coefficients = np.linalg.solve(A, b)
  assert len(coefficients) == 6, 'Invalid number of coefficients'
  assert np.all(np.isfinite(coefficients)), 'Non-finite coefficients
  found'
  self.coefficients = coefficients
  return coefficients
  except np.linalg.LinAlgError:
  raise ValueError('Failed to calculate motion profile coefficients')
  def validate_constraints(self, coefficients):
  assert isinstance(coefficients, np.ndarray), 'Coefficients must be numpy
  array'
  assert coefficients.shape == (6,), 'Coefficients must be array of length
  6'
  t = self.time_points
  velocity = coefficients[1] + 2 * coefficients[2] * t + 3 * coeffi-
  cients[3] * t ** 2 + 4 * coefficients[4] * t ** 3 + 5 * coefficients[5] * t ** 4
  acceleration = 2 * coefficients[2] + 6 * coefficients[3] * t + 12 * coef-
  ficients[4] * t ** 2 + 20 * coefficients[5] * t ** 3
  jerk = 6 * coefficients[3] + 24 * coefficients[4] * t + 60 * coeffi-
  cients[5] * t ** 2
  velocity_within_limits = np.all((velocity >= self.velocity_limits[0]) &
  (velocity <= self.velocity_limits[1]))
  assert velocity_within_limits, 'Velocity profile exceeds limits'
  acceleration_within_limits = np.all((acceleration >= self.accelera-
  tion_limits[0]) & (acceleration <= self.acceleration_limits[1]))
  assert acceleration_within_limits, 'Acceleration profile exceeds limits'
  jerk_within_limits = np.all((jerk >= self.jerk_limits[0]) & (jerk <=
  self.jerk_limits[1]))
  assert jerk_within_limits, 'Jerk profile exceeds limits'
  return True
  def generate_profile(self, num_points, start_speed, end_speed):
  assert isinstance(num_points, int) and num_points > 0, 'num_points must
  be positive integer'
  assert isinstance(start_speed, float), 'start_speed must be float'
  assert isinstance(end_speed, float), 'end_speed must be float'
  assert self.velocity_limits[0] <= start_speed <= self.velocity_limits[1],
  'start_speed outside limits'
  assert self.velocity_limits[0] <= end_speed <= self.velocity_limits[1],
  'end_speed outside limits'
  start_accel = 0.0
  end_accel = 0.0
  coefficients = self.calculate_coefficients(start_speed, end_speed,
  start_accel, end_accel)
  self.validate_constraints(coefficients)
  t = np.linspace(0, self.profile_duration, num_points)
  position = coefficients[0] + coefficients[1] * t + coefficients[2] * t **
  2 + coefficients[3] * t ** 3 + coefficients[4] * t ** 4 + coefficients[5] * t **
  5
  velocity = coefficients[1] + 2 * coefficients[2] * t + 3 * coeffi-
  cients[3] * t ** 2 + 4 * coefficients[4] * t ** 3 + 5 * coefficients[5] * t ** 4
  acceleration = 2 * coefficients[2] + 6 * coefficients[3] * t + 12 * coef-
  ficients[4] * t ** 2 + 20 * coefficients[5] * t ** 3
  profile = np.vstack((t, position, velocity, acceleration))
  assert profile.shape == (4, num_points), 'Invalid profile shape'
  assert np.all(np.isfinite(profile)), 'Profile contains non-finite values'
  return profile
  class Renderer:
  clock = None
  fps = None
  belt_colors = None
  background_color = None
  scale = None
  height = None
  width = None
  screen = None
  pass
  def _init_(self, width, height, scale, fps):
  assert isinstance(width, int) and width > 0, 'Width must be positive in-
  teger'
  assert isinstance(height, int) and height > 0, 'Height must be positive
  integer'
  assert isinstance(scale, float) and scale > 0, 'Scale must be positive
  float'
  assert isinstance(fps, int) and fps > 0, 'FPS must be positive integer'
  if not pygame.get_init():
  pygame.init()
  self.width = width
  self.height = height
  self.scale = scale
  scaled_width = int(width * scale)
  scaled_height = int(height * scale)
  self.screen = pygame.display.set_mode((scaled_width, scaled_height))
  pygame.display.set_caption('Smart Infeed System Simulation')
  self.background_color = (240, 240, 240)
  self.belt_colors = {'infeed': (100, 100, 100), 'correction': (80, 120,
  160), 'outfeed': (100, 100, 100)}
  self.fps = fps
  self.clock = pygame.time.Clock()
  assert self.screen is not None, 'Failed to create display'
  assert self.screen.get_width() == scaled_width, 'Invalid screen width'
  assert self.screen.get_height() == scaled_height, 'Invalid screen height'
  assert pygame.display.get_init(), 'Pygame display not initialized'
  def render_products(self, products):
  assert isinstance(products, list), 'products must be a list'
  assert all((isinstance(p, dict) for p in products)), 'all products must
  be dictionaries'
  required_keys = {'position', 'dimensions', 'color'}
  assert all((required_keys.issubset(p.keys()) for p in products)), 'prod-
  ucts missing required keys'
  for product in products:
  pos_x = int(product['position'][0] * self.scale)
  pos_y = int(product['position'][1] * self.scale)
  width = int(product['dimensions'][0] * self.scale)
  height = int(product['dimensions'][1] * self.scale)
  color = product['color']
  rect = pygame.Rect(pos_x, pos_y - height // 2, width, height)
  pygame.draw.rect(self.screen, color, rect)
  pygame.draw.rect(self.screen, (0, 0, 0), rect, 1)
  assert self.screen.get_at((pos_x, pos_y)) != self.background_color,
  'Product not drawn correctly'
  assert rect.width == width and rect.height == height, 'Product dimen-
  sions incorrect'
  assert 0 <= pos_x <= self.width * self.scale, 'Product x position out
  of bounds'
  assert 0 <= pos_y <= self.height * self.scale, 'Product y position
  out of bounds'
  def render_belt_indicators(self, belt_states):
  assert isinstance(belt_states, list), 'belt_states must be a list'
  assert all((isinstance(state, dict) for state in belt_states)), 'all
  states must be dictionaries'
  required_keys = {'speed', 'belt_type', 'position', 'length', 'width'}
  assert all((required_keys.issubset(state.keys()) for state in
  belt_states)), 'belt states missing required keys'
  indicator_height = 5 * self.scale
  spacing = 2 * self.scale
  text_color = (0, 0, 0)
  for state in belt_states:
  pos_x = int(state['position'][0] * self.scale)
  pos_y = int((state['position'][1] + state['width'] / 2 + spacing) *
  self.scale)
  font = pygame.font.Font(None, int(12 * self.scale))
  speed_text = f"{state['speed']:.1f} m/s"
  text_surface = font.render(speed_text, True, text_color)
  max_speed = 2.0
  speed_ratio = min(state['speed'] / max_speed, 1.0)
  color = (int(255 * speed_ratio), int(255 * (1 - speed_ratio)), 0)
  bar_width = int(state['length'] * self.scale)
  bar_rect = pygame.Rect(pos_x, pos_y, bar_width, indicator_height)
  pygame.draw.rect(self.screen, color, bar_rect)
  pygame.draw.rect(self.screen, (0, 0, 0), bar_rect, 1)
  text_x = pos_x + (bar_width - text_surface.get_width()) // 2
  text_y = pos_y + indicator_height + spacing
  self.screen.blit(text_surface, (text_x, text_y))
  assert self.screen.get_at((pos_x, pos_y)) != self.background_color,
  'Speed indicator not drawn'
  assert 0 <= pos_x <= self.width * self.scale, 'Indicator x position
  out of bounds'
  assert 0 <= pos_y <= self.height * self.scale, 'Indicator y position
  out of bounds'
  def render_outfeed(self, finger_positions, outfeed_state):
  assert isinstance(finger_positions, np.ndarray), 'finger_positions must
  be numpy array'
  assert finger_positions.ndim == 2 and finger_positions.shape[1] == 2,
  'finger_positions must be Nx2 array'
  assert isinstance(outfeed_state, diet), 'outfeed_state must be diction-
  ary'
  assert all((key in outfeed_state for key in ['position', 'width',
  'length'])), 'outfeed_state missing required keys'
  base_x = int(outfeed_state['position'][0] * self.scale)
  base_y = int(outfeed_state['position'][1] * self.scale)
  width = int(outfeed_state['width'] * self.scale)
  length = int(outfeed_state['length'] * self.scale)
  belt_rect = pygame.Rect(base_x, base_y - width // 2, length, width)
  pygame.draw.rect(self.screen, self.belt_colors['outfeed'], belt_rect)
  pygame.draw.rect(self.screen, (0, 0, 0), belt_rect, 1)
  finger_radius = int(5 * self.scale)
  finger_color = (50, 200, 50)
  for finger_pos in finger_positions:
  x = int(finger_pos[0] * self.scale)
  y = int(finger_pos[1] * self.scale)
  pygame.draw.circle(self.screen, finger_color, (x, y), finger_radius)
  pygame.draw.circle(self.screen, (0, 0, 0), (x, y), finger_radius, 1)
  assert self.screen.get_at((base_x, base_y)) != self.background_color,
  'Outfeed belt not rendered'
  assert 0 <= base_x <= self.width * self.scale, 'Outfeed x position out of
  bounds'
  assert 0 <= base_y <= self.height * self.scale, 'Outfeed y position out
  of bounds'
  def render_frame(self, env_state, return_rgb_array):
  assert isinstance(env_state, dict), 'env_state must be a dictionary'
  required_keys = {'belts', 'products', 'outfeed_fingers'}
  assert all((key in env_state for key in required_keys)), f'Missing re-
  quired keys: {required_keys}'
  pygame.event.get()
  self.screen.fill(self.background_color)
  for belt in env_state['belts']:
  pos_x = int(belt['position'][0] * self.scale)
  pos_y = int(belt['position'][1] * self.scale)
  width = int(belt['width'] * self.scale)
  length = int(belt['length'] * self.scale)
  rect = pygame.Rect(pos_x, pos_y - width // 2, length, width)
  pygame.draw.rect(self.screen, self.belt_colors[belt['belt_type']],
  rect)
  pygame.draw.rect(self.screen, (0, 0, 0), rect, 1)
  self.render_belt_indicators(env_state['belts'])
  self.render_products(env_state['products'])
  outfeed_belt = next((belt for belt in env_state['belts'] if
  belt['belt_type'] == 'outfeed'))
  self.render_outfeed(env_state['outfeed_fingers'], outfeed_belt)
  pygame.display.flip()
  self.clock.tick(self.fps)
  if return_rgb_array:
  screen_array = pygame.surfarray.array3d(self.screen)
  assert isinstance(screen_array, np.ndarray), 'Failed to create RGB
  array'
  assert screen_array.shape == (self.width * int(self.scale),
  self.height * int(self.scale), 3), 'Invalid RGB array shape'
  return screen_array
  return None
  class SmartInfeedEnv(gymnasium.Env):
  rng = None
  renderer = None
  motion_generator = None
  product_generator = None
  products = None
  belts = None
  action_space = None
  observation_space = None
  belt_speeds = None
  belt_dimensions = None
  num_belts = None
  pass
  def _init_(self, num_belts, render_mode):
  assert isinstance(num_belts, int) and num_belts >= 3, 'Number of belts
  must be at least 3'
  assert render_mode in [None, 'human', 'rgb_array'], 'Invalid render mode'
  self.num_belts = num_belts
  self.belt_dimensions = {'infeed': {'length': 2.0, 'width': 0.5}, 'correc-
  tion': {'length': 1.0, 'width': 0.5}, 'outfeed': {'length': 2.0, 'width': 0.5}}
  self.belt_speeds = {'infeed': 1.0, 'correction': 1.0, 'outfeed': 1.0}
  self.observation_space = spaces.Dict({'belt_speeds': spaces.Box(low=0.0,
  high=2.0, shape=(num_belts,)), 'product_positions': spaces.Box(low=0.0,
  high=sum((b['length'] for b in self.belt_dimensions.values())), shape=(10, 2)),
  'product_velocities': spaces.Box(low=0.0, high=2.0, shape=(10,))})
  self.action_space = spaces.Box(low=0.5, high=2.0, shape=(num_belts - 2,))
  self.belts = []
  current_x = 0.0
  self.belts.append(ConveyorBelt(length=self.belt_dimensions['in-
  feed']['length'], width=self.belt_dimensions['infeed']['width'],
  speed=self.belt_speeds['infeed'], belt_type='infeed', position=np.array([cur-
  rent_x, 0.0]), max_speed=2.0, min_speed=0.5))
  current_x += self.belt_dimensions['infeed']['length']
  for _ in range(num_belts - 2):
  self.belts.append(ConveyorBelt(length=self.belt_dimensions['correc-
  tion']['length'], width=self.belt_dimensions['correction']['width'],
  speed=self.belt_speeds['correction'], belt_type='correction', position=np.ar-
  ray([current_x, 0.0]), max_speed=2.0, min_speed=0.5))
  current_x += self.belt_dimensions['correction']['length']
  self.belts.append(ConveyorBelt(length=self.belt_dimensions['out-
  feed']['length'], width=self.belt_dimensions['outfeed']['width'],
  speed=self.belt_speeds['outfeed'], belt_type='outfeed', position=np.array([cur-
  rent_x, 0.0]), max_speed=2.0, min_speed=0.5))
  self.products = []
  self.product_generator = ProductGenerator(min_interval=1.0, max_inter-
  val=3.0, min_spacing=0.5, outfeed_positions=np.array([[current x + 1.0, 0.0]]),
  seed=None)
  self.motion_generator = MotionProfileGenerator(velocity_limits=(0.5,
  2.0), acceleration_limits=(-2.0, 2.0), jerk_limits=(-5.0, 5.0), profile_dura-
  tion=0.5)
  self.renderer = None
  if render_mode is not None:
  self.renderer = Renderer(width=int(current_x + 3.0), height=3,
  scale=100.0, fps=30)
  assert len(self.belts) == num_belts, 'Incorrect number of belts initial-
  ized'
  assert all((isinstance(belt, ConveyorBelt) for belt in self.belts)), 'In-
  valid belt objects'
  assert self.product_generator is not None, 'Product generator not ini-
  tialized'
  assert self.motion_generator is not None, 'Motion profile generator not
  initialized'
  if render_mode is not None:
  assert self.renderer is not None, 'Renderer not initialized when ren-
  der_mode is specified'
  def _setup_observation_space(self):
  total_length = sum((belt.length for belt in self.belts))
  assert total_length > 0, 'Total system length must be positive'
  belt_speeds_space = spaces.Box(low=0.5, high=2.0,
  shape=(self.num_belts,), dtype=np.float32)
  product_positions_space = spaces.Box(low=np.array([[0.0, -0.25]] * 10),
  high=np.array([[total_length, 0.25]] * 10), dtype=np.float32)
  product_velocities_space = spaces.Box(low=0.0, high=2.0, shape=(10,),
  dtype=np.float32)
  observation_space = spaces.Dict({'belt_speeds': belt_speeds_space, 'prod-
  uct_positions': product_positions_space, 'product_velocities': product_veloci-
  ties_space})
  assert isinstance(observation_space, spaces.Dict), 'Observation space
  must be a Dict space'
  assert all((isinstance(v, spaces.Box) for v in observa-
  tion_space.spaces.values())), 'All subspaces must be Box spaces'
  self.observation_space = observation_space
  return observation_space
  def _setup_action_space(self):
  num_correction_belts = self.num_belts - 2
  assert num_correction_belts > 0, 'Must have at least one correction belt'
  min_speed = 0.5
  max_speed = 2.0
  assert min_speed > 0, 'Minimum speed must be positive'
  assert max_speed > min_speed, 'Maximum speed must be greater than minimum
  speed'
  action_space = spaces.Box(low=min_speed, high=max_speed, shape=(num_cor-
  rection_belts,), dtype=np.float32)
  assert isinstance(action_space, spaces.Box), 'Action space must be a Box
  space'
  assert action_space.shape == (num_correction_belts,), 'Action space shape
  must match number of correction belts'
  assert np.all(action_space.low == min_speed), 'Lower bound must be mini-
  mum speed'
  assert np.all(action_space.high == max_speed), 'Upper bound must be maxi-
  mum speed'
  self.action_space = action_space
  return action_space
  def _get_observation(self):
  belt_speeds = np.zeros(self.num_belts, dtype=np.float32)
  product_positions = np.zeros((10, 2), dtype=np.float32)
  product_velocities = np.zeros(10, dtype=np.float32)
  for i, belt in enumerate(self.belts):
  belt_speeds[i] = belt.speed
  for i, product in enumerate(self.products[:10]):
  product_positions[i] = product.position
  product_velocities[i] = product.velocity
  observation = {'belt_speeds': belt_speeds, 'product_positions': prod-
  uct_positions, 'product_velocities': product_velocities}
  assert self.observation_space.contains(observation), 'Observation out of
  specified bounds'
  assert observation['belt_speeds'].shape == (self.num_belts,), 'Invalid
  belt speeds shape'
  assert observation['product_positions'].shape == (10, 2), 'Invalid prod-
  uct positions shape'
  assert observation['product_velocities'].shape == (10,), 'Invalid product
  velocities shape'
  assert np.all(observation['belt_speeds'] >= 0.5) and np.all(observa-
  tion['belt_speeds'] <= 2.0), 'Belt speeds out of range'
  assert np.all(np.isfinite(observation['product_positions'])), 'Invalid
  product positions'
  assert np.all(np.isfinite(observation['product_velocities'])), 'Invalid
  product velocities'
  return observation
  def step(self, action):
  assert isinstance(action, np.ndarray), 'Action must be a numpy array'
  assert action.shape == (self.num_belts - 2,), f'Action shape {ac-
  tion.shape} does not match expected shape {(self.num_belts - 2,)}'
  assert np.all(np.isfinite(action)), 'Action contains non-finite values'
  assert self.action_space.contains(action), 'Action out of bounds'
  for i, speed in enumerate(action):
  self.belts[i + 1].update_speed(float(speed))
  current_positions = [p.position[0] for p in self.products]
  if self.product_generator.should_generate(0.1, current_positions,
  self.belts[0].speed, time.time()):
  new_product = Product(position=np.array([0.0, 0.0]), veloc-
  ity=self.belts[0].speed, dimensions=(0.2, 0.2), current_belt=0, crea-
  tion_time=time.time(), id=len(self.products))
  self.products.append(new_product)
  self.product_generator.log_generation(time.time(), new_product.id)
  for product in self.products[:]:
  current_belt_idx = next((i for i, belt in enumerate(self.belts) if
  belt.position[0] <= product.position[0] < belt.position[0] + belt.length), 0)
  product.velocity = self.belts[current_belt_idx].speed
  product.update_position(0.1, product.velocity)
  if product.position[0] > sum((belt.length for belt in self.belts)):
       self.products.remove(product)
       reward = 0.0
       if len(self.products) >= 2:
  positions = sorted([p.position[0] for p in self.products])
  spacings = np.diff(positions)
  spacing_variance = np.var(spacings) if len(spacings) > 0 else 0
  reward -= spacing_variance
  speeds = [self.belts[i].speed for i in range(1, len(self.belts) - 1)]
  speed_variance = np.var(speeds) if len(speeds) > 0 else 0
  reward -= speed_variance
  reward = np.clip(reward, -1.0, 0.0)
  observation = self._get_observation()
  if self.renderer is not None:
  env_state = {'belts': [belt.get_state() for belt in self.belts],
  'products': [{'position': p.position, 'dimensions': p.dimensions, 'color':
  p.color} for p in self.products], 'outfeed_fingers': np.array([[self.belts[-
  1] .position[0] + self.belts[-1].length, 0.0]])}
  self.renderer.render_frame(env_state, False)
  terminated = False
  truncated = False
  info = {'num_products': len(self.products), 'belt_speeds': [belt.speed
  for belt in self.belts], 'product_positions': [p.position[0] for p in self.prod-
  ucts]}
  return (observation, float(reward), terminated, truncated, info)
  def reset(self, seed, options):
  super() .reset(seed=seed)
  self.rng = np.random.default_rng(seed)
  for belt in self.belts:
  belt_type = belt.belt_type
  belt.update_speed(self.belt_speeds[belt_type])
  self.products.clear()
  self.product_generator = ProductGenerator(min_interval=1.0, max_inter-
  val=3.0, min_spacing=0.5, outfeed_positions=np.array([[self.belts[-1].position[0]
  + 1.0, 0.0]]), seed=seed)
  observation = self._get_observation()
  assert len(self.products) == 0, 'Products list should be empty after re-
  set'
  assert all((belt.speed == self.belt_speeds[belt.belt_type] for belt in
  self.belts)), 'Belt speeds not properly reset'
  assert self.observation_space.contains(observation), 'Initial observation
  out of bounds'
  assert isinstance(observation, diet), 'Observation must be a dictionary'
  assert all((key in observation for key in ['belt_speeds', 'product_posi-
  tions', 'product_velocities'])), 'Missing observation keys'
  return (observation, {})
  def render(self):
  assert hasattr(self, 'renderer') and self.renderer is not None, 'Renderer
  not initialized'
  env_state = {'belts': [belt.get_state() for belt in self.belts], 'prod-
  ucts': [{'position': p.position, 'dimensions': p.dimensions, 'color': p.color}
  for p in self.products], 'outfeed_fingers': np.array([[self.belts[-1].position[0]
  + self.belts[-1].length, 0.0]])}
  assert isinstance(env_state, dict), 'Environment state must be a diction-
  ary'
  assert all((key in env_state for key in ['belts', 'products', 'out-
  feed_fingers'])), 'Missing required state keys'
  assert isinstance(env_state['belts'], list), 'Belts must be a list'
  assert isinstance(env_state['products'], list), 'Products must be a list'
  assert isinstance(env_state['outfeed_fingers'], np.ndarray), 'Outfeed
  fingers must be numpy array'
  return self.renderer.render_frame(env_state, return_rgb_array=True)
```

Based on these specifications, please write an instance method. Only write the one method. Do not write other methods. Do not write the class definition. Do not repeat code that is already in the current code. Use the lowest level of indendation, as indendation will be handled automatically later. Make sure that the method definition (the line beginning with 'def') is on indation level 0. Make sure that the method body starts at indendation level 1. Make sure to include the method declaration including the def keyword, the method name and the parameters in parentheses. Use code comments in the method block to explain pieces of code. Use assertions to test the code.

The class name is 'SmartInfeedEnv'.

The method name is 'close'.

The method parameters are '['self']'.

Provide your answer in a preformatted text block surrounded by <pre> and </pre>. Do not use markdown code blocks. Do not include any extra information beyond the code. Only return a single block.

As a result, the following task result can be outputted by the Coding Agent.

```
 <pre>def close(self):
 # Check if renderer exists and is initialized
 if hasattr(self, 'renderer') and self.renderer is not None:
 # Clean up pygame resources
 pygame.quit()
 # Clear product list
 if hasattr(self, 'products'):
 self.products.clear()
 # Reset belt speeds to default values
 if hasattr(self, 'belts'):
 for belt in self.belts:
  belt_type = belt.belt_type
  belt.update_speed(self.belt_speeds[belt_type])
  # Verify cleanup
  assert not pygame.get_init(), 'Pygame not properly terminated'
  assert not hasattr(self, 'renderer') or self.renderer is not None or not
  pygame.display.get_init(), 'Display not properly closed'
  assert not hasattr(self, 'products') or len(self.products) == 0, 'Products
  not properly cleared'</pre>
```

This process can be repeated until the source code is complete. In case errors occur during the execution of the source code, the Repair Agent can be tasked to repair a part of the source code which triggers the error.

Various features and advantages of the present invention will become more apparent from the following exemplary description and examples shown in the accompanying drawings, wherein:
- Fig. 1: shows a system comprising an industrial machine, a configuration unit and a simulation environment;
- Fig. 2: schematically shows the collaboration of agents to produce a configuration output;
- Fig. 3: shows a simulation of the industrial machine of Fig. 1, which was produced as a configuration output by the agents of Fig. 2.

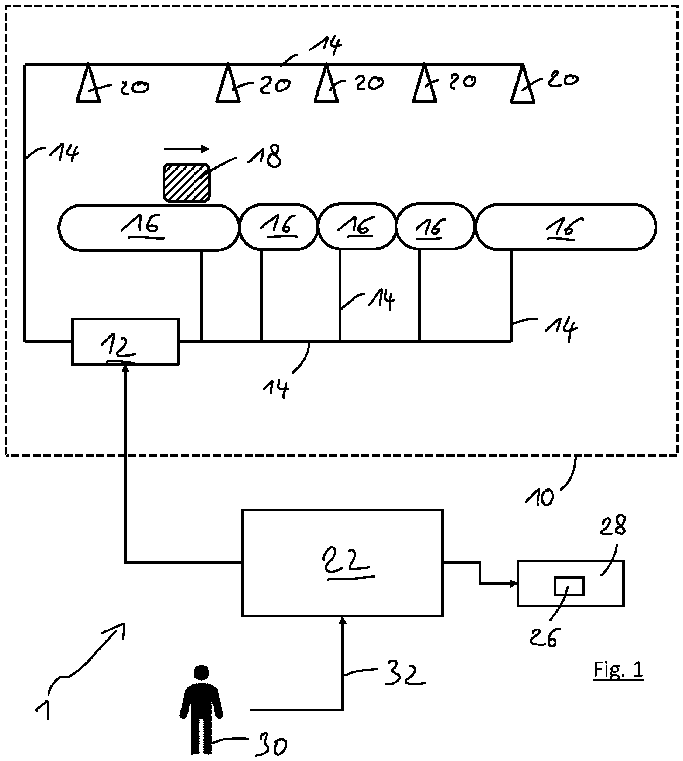

Fig. 1 shows a system 1 comprising an industrial machine 10. The industrial machine 10 comprises a control unit 12 which is coupled via data connections 14 with sensors and actors. The actors are five belts 16 which are arranged for transporting boxes 18. The positions of the boxes 18 on the belts 16 are detected by position sensors 20.

The belts 16 comprise an infeed belt 16 (left on Fig. 1), three intermediate belts and an outfeed belt (right on Fig. 1). The belts 16 can be driven with different speeds in order to adjust the position of the boxes 18 in response to the sensor data from the position sensors 20.

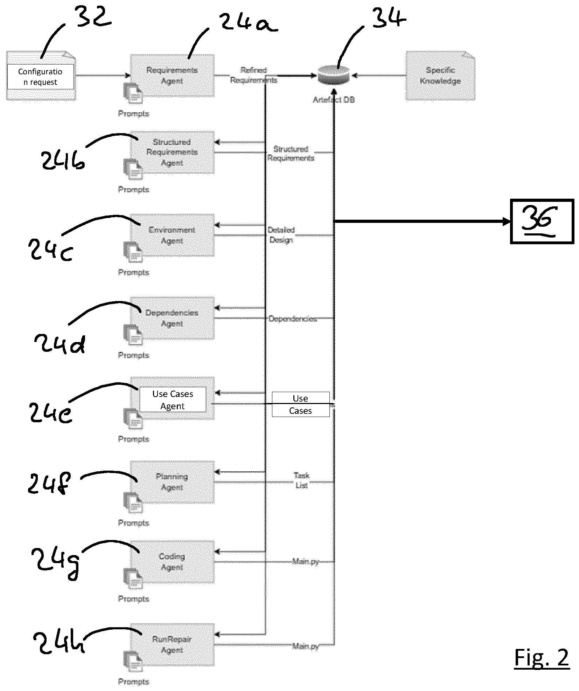

In order to receive configuration data for the industrial machine 10, the control unit 12 of the industrial machine 10 is connected to a configuration unit 22. The configuration unit 22 comprises a number of agents 24 (see Fig. 2) which together produce a configuration output comprising the configuration data for the industrial machine 10. The configuration output also comprises a simulation environment 26 which is executed on an electronic simulation device 28, wherein the simulation environment 26 allows the simulation of the industrial machine 10.

To receive a configuration output, a human operator 30 transmits a configuration request 32 to the configuration unit 22.

The generation of the configuration output comprising the configuration data for the industrial machine 10 is described in more detail with respect to Fig. 2.

In the configuration unit 22, the configuration request 32 is transmitted to a Requirements Agent 24a which receives the configuration request together with a predefined section indicating to extract information from the confirmation request 32. The extracted information is then passed on via a next prompt to a Structured Requirements Agent 32b, which is tasked to provide a more structured analysis of the request. All the agents 24 can access a context information library 34, also termed artifact DB in Fig. 2. The more structured requirements are then transmitted as a next prompt to an Environment Agent 24c, a Dependencies Agent 24d, a Use Cases Agent 24e and a Planning Agent 24f. Each of these agents 24 receives a different prompt, as has been explained in more detail above. The output of these agents is then provided to a Coding Agent 24g which iteratively generates source code for the industrial machine 10 and/or for the simulation environment 26. The source code can be executed (after e.g. being compiled). If errors in the source code occur, a Repair Agent 24h can be prompted to fix the source code. The source code, in Fig. 2 also termed "main.py" can then be outputted as configuration output 36, e.g. by the Requirement Agent 24a. The Requirements Agent can also be a Base Agent 38.

The configuration output 36 can then be transmitted from the configuration unit 22 to the control unit 12 in order to control the industrial machine 10. Alternatively or additionally, the configuration output 36 can be transmitted to the simulation device 28 in order to set up the simulation environment 26.

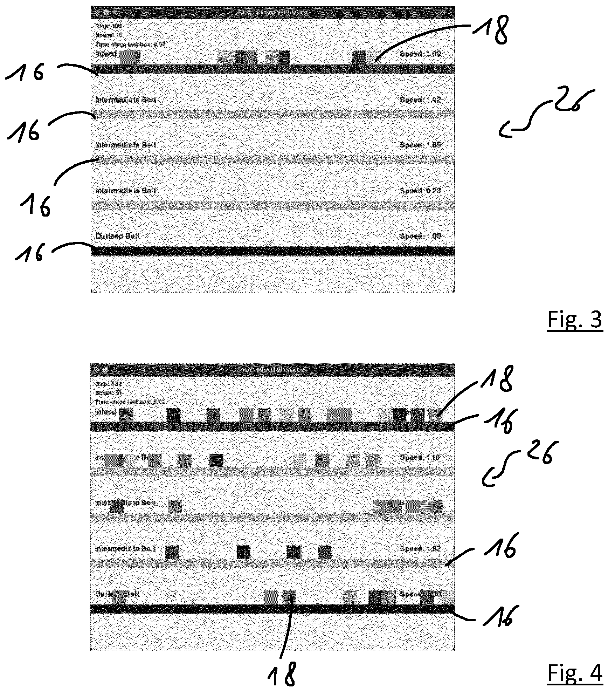

An example of a graphical output of the simulation environment 26 is given in Figs. 3 and 4. Fig. 3 shows an early stage of the simulation, wherein boxes 18 are only present on an infeed belt. Fig. 4 shows a later stage of the simulation, wherein boxes are also present on the intermediate belts and the outfeed belt. The simulation can be used to determine the quality of the control of the position of the boxes. Particularly, the simulation environment 26 can be used to perform a reinforcement learning to further optimize the control parameters of the industrial machine 10. The control parameters optimized during the reinforcement learning can then be transmitted onto the industrial machine 10 and used thereon during operation.

Due to the use of the agents 24 for setting up the configuration output, a quick and easy way to generate source code for the industrial machine and/or for a simulation environment is available. Thereby, the time and complexity for producing the configuration output can be reduced.

### List of reference signs

- 1: system
- 10: industrial machine
- 12: control unit
- 14: data connection
- 16: belt
- 18: box
- 20: position sensor
- 22: configuration unit
- 24: agent
- 26: simulation environment
- 28: simulation device
- 30: human operator
- 32: configuration request
- 34: context information library
- 36: configuration output
- 38: base agent

## Claims

1. A method for providing configuration data for an industrial machine (10),
wherein a configuration unit (22) is executed,
wherein the configuration unit (22) comprises a plurality of agents (24), each agent (24) comprises an artificial intelligence, particularly a Language Model, or a Large Language Model, LLM,
wherein the configuration unit (22) receives a configuration request (32),
wherein the configuration unit (22) processes the configuration request (32) by generating different tasks based on the configuration request (32),
wherein the different tasks are processed by the plurality of agents (24),
wherein at least one of the tasks for one of the agents (24) is generated by another one of the agents (24) and/or a task result of one of the agents (24) is further processed by at least another one of the agents (24),
wherein the agents (24) together produce a configuration output (36) comprising configuration data for the industrial machine (10).

2. The method of claim 1, wherein
the configuration unit (22) is connected to a context information library (34), which stores information on the industrial machine (10), particularly commands executable by the industrial machine (10), wherein the information of the context information library (34) is accessed by at least one of the agents (24) in order to process one of the tasks.

3. The method of anyone of claims 1 or 2, wherein
the tasks for at least one of the agents (24) which are generated by another one of the agents (24) are transmitted to the at least one of the agents (24) as prompts,
wherein the prompts and/or the task results are in human language and/or human-readable information.

4. The method of claim 3, wherein
the prompts comprise pre-defined sections, wherein the pre-defined sections preferably comprise variables that are replaced with information from the context information library and/or one of the task results.

5. The method of claim 4, wherein
prompts for the same agent (24) are repeated, wherein in a new repetition of the prompt the variable is updated.

6. The method of anyone of the preceding claims, wherein
each agent (24) is set up based on a different profile, the profile specifying the behavior of the respective agent (24).

7. The method of anyone of the preceding claims, wherein
at least one agent (24) is a Requirements Parser Agent adapted for requirements definition, at least one agent (24) is a Planning Agent adapted for planning purposes and at least one agent (24) is a Code Agent adapted for coding.

8. The method of claim 7, wherein
the configuration unit further comprises one or more of the following agents (24):
- a Structured Requirements Agent adapted for transforming natural language specifications into software development requirements,
- an Environment Agent adapted for software architecture definition,
- a Dependencies Agent adapted for determining required software libraries and packages,
- a Use Cases Agent adapted for transforming structured requirements into software development use cases, and
- a Repair Agent adapted for correcting errors in source code.

9. The method of anyone of the preceding claims, wherein
each prompt for one of the agents (24) comprises a desired output for the task result and at least one command indicating how the task result should be achieved

10. The method of anyone of the preceding claims, wherein
an order of the agents (24) is defined as an Agent Sequence, wherein each agent (24) communicates with the agents (24) further along the Agent Sequence.

11. The method of anyone of the preceding claims, wherein
the configuration unit comprises a base agent (24), adapted for receiving the configuration request (32) and outputting the configuration output (38).

12. The method of anyone of the preceding claims, wherein
the configuration output comprises source code and/or executable code for the industrial machine (10).

13. The method of anyone of the preceding claims, wherein
the configuration output comprises a simulation environment for simulating the industrial machine (10).

14. A computer program comprising instructions which, when the program is executed by a computer, cause the computer to carry out the method of one of claims 1 to 13.

15. A system (1) including a configuration unit (22) and a simulation environment (26) and/or an industrial machine (10), wherein the configuration unit comprises a plurality of agents (24), each agent (24) comprises an artificial intelligence, particularly a Language Model, or a Large Language Model, LLM,
wherein the configuration unit is adapted to receive a configuration request,
wherein the configuration unit processes the configuration request by generating different tasks based on the configuration request,
wherein the plurality of agents (24) is adapted to process the different tasks,
wherein at least one of the tasks for one of the agents (24) is generated by another one of the agents (24) and/or a task result of one of the agents (24) is further processed by at least another one of the agents (24),
wherein the agents (24) together are adapted to produce a configuration output comprising configuration data for the industrial machine.
